Europäisches Patentamt

European Patent Office

Office européen des brevets

(19)

(11) **EP 1 496 372 A1**

(12) **EUROPEAN PATENT APPLICATION**
published in accordance with Art. 158(3) EPC

(43) Date of publication:
**12.01.2005 Bulletin 2005/02**

(51) Int Cl.⁷: **G01S 13/88**, G01V 3/12

(21) Application number: **02797009.4**

(22) Date of filing: **26.11.2002**

(86) International application number:
**PCT/RU2002/000559**

(87) International publication number:
**WO 2003/046607 (05.06.2003 Gazette 2003/23)**

(84) Designated Contracting States:
**AT BE BG CH CY CZ DE DK EE ES FI FR GB GR IE IT LI LU MC NL PT SE SK TR**

(30) Priority: **26.11.2001 RU 2001131626**

(71) Applicants:
• **Volkov, Leonid Viktorovich**
 **Moskovskaya obl. 141196 (RU)**
• **Voronko, Alexandr Ivanovich**
 **Moskovskaya obl. 141131 (RU)**

(72) Inventors:
• **Volkov, Leonid Viktorovich**
 **Moskovskaya obl. 141196 (RU)**
• **Voronko, Alexandr Ivanovich**
 **Moskovskaya obl. 141131 (RU)**

(74) Representative: **Benatov, Emil Gabriel, Dr.**
 **Bl. 36B,**
 **Liuliakova gradina Str.**
 **1113 Sofia (BG)**

(54) **METHOD FOR FORMING THE IMAGE IN MILLIMETRE AND SUB-MILLIMETRE WAVE BAND (VARIANTS), SYSTEM FOR FORMING THE IMAGE IN MILLIMETRE AND SUB-MILLIMETER WAVE BAND (VARIANTS), DIFFUSER LIGHT (VARIANTS) AND TRANSCEIVER (VARIANTS)**

(57)    The invention relates to the field of computer diagnostics. The method consists in the steps of radiation forming in this wave range, consisting of separate partial radiations, which are different from each other by values of their physical features, directing of the formed radiations into a side of the observed object, receiving a radiation, dispersed from the observed object, through a focusing element, transforming of the received radiation in electrical signals and forming a visually accepted image of the observed object in accordance with the given electrical signals. Besides, each separate partial radiation is additionally encoded by means of its modulation, which differs from a modulation of other partial radiations, the partial radiations are directed to a diffuser for decreasing their spatial coherence and/or their dispersing by means of different portions of the diffuser in order to create an additional partial radiations with an additional modulation, corresponding to an angle of impingement onto the observed object. After reflecting of the radiation from the observed object the step of focusing of this radiation to a receiving device is realized, which accomplishes a transforming of set of radiations in a corresponding array set of electrical signals, there is realized the step of decoding of partial electrical signals, corresponding to said partial radiations, from each of said electrical signals of said array set there are formed partial images from array sets with various partial electrical signals and then an integration of the partial images and their fragments is realized in order to form visually accepted resultant image of the object.

FIG. 1

**Description**

FIELD OF THE INVENTION

The present invention relates to real time computer diagnostics, in particular, to systems and methods for remote detection of weapons, explosives and drugs, concealed on person body beneath its clothes or in luggage, which are based on the quasi-optical imaging of such items, in particular in the range of millimeter and submillimeter waves.

BACKGROUND OF THE INVENTION

In the field of detection of concealed objects based on the formation of their images, millimeter and submillimeter wave (hereinafter referred to as "MMW/SMMW") radiation has advantages due to high level of its permeability through the atmosphere under foul weather conditions and through various fabrics, plastic, ceramic, wooden materials and other media being opaque in the visible range. Owing to a relatively short wavelength of the MMW/SMMW radiation there are opportunities of designing of imaging systems exhibiting quite high spatial resolution in obtained images. Such imaging systems may be effectively used in various sensitive crowded areas and /or of increased significance ones (airports, courts, banks, places of occurrence of very important persons and so on) in order to provide with a well-timed and remote stealthy detection of concealed weapon, drugs, contraband and explosive including under conditions of promptly varying situation.

The known and traditional widely-used methods of disclosing (detecting) weapon and contraband carried by persons through entries and exits of secured areas are based on usage of simple metal detector devices sensitive to induction changes in an observed area. Possibilities of the majority of the methods are limited only by binary (yes/no) detection of the presence of metallic items, without revealing any details, features or even information about item location. Such devices cannot be used for stealthy, efficient and real time contraband detection with a low level of false alarm. Such conventional detection systems are not effective because they are not sensitive to plastic and ceramic weapons. In order to reliably visualize and identify this said new class of weapons, explosive, drugs, mines as well as an ordinary weapons, but with enhanced level of safety and with low level of false alarms, novel, methods and correspondent technical systems are required.

The usage of MMW/SMMW imaging systems for any objects, being able to reflect or emit MMW/SMMW radiation allows to solve said problems. It becomes possible owing to the fact that the MMW/SMMW radiation are capable to permeate clothes with negligible attenuation and without harmless for human health as opposed to X-ray radiation or microwave radiation. Reflection and absorption characteristics of human skin for MMVV/SMMW radiation are substantially different from the same characteristics of ceramic and plastic weapons and narcotics as well as from ones of the majority of materials, used for a manufacture of weapon and explosive.

It is known that passive radiometric MMW/SMMW imaging systems are inherently ineffective indoor, wherein the majority of inspection procedures are performed. This ineffectiveness is conditioned by the low level of radiometric brightness temperature contrast in illumination of the objects being located indoor in comparison with the items located outdoor, wherein the items are illuminated by means of "cold" sky, brightness temperature of which is about T = 70 K, and by means of "warm" surface of the Earth with the brightness temperature near T=300K.

In outdoor said illumination contrast within the object may be more than 200 K, while indoor (in the enclosed rooms) such a contrast is not more than of from 5 to 7 K in the best case. Since state-of-the-art real time radiometric imaging systems have a temperature sensitivity of about 1 K, radiometric images generated by such systems exhibit low visible quality with high level of noises caused by said low contrast.

A realization of potential capabilities of active MMW/SMMW imaging systems is possible only under certain conditions, which are mainly imposed on physical features of the radiation, illuminating the observed object. Firstly it relates to illumination of observable area with radiation exhibiting a low level of its coherency.. This is necessary condition but not enough one. In any case non-observance of this condition results in the fact that the images being formed by MMW/SMMW imaging systems exhibit high level of coherent noises and correspondingly low visible quality and informational content.

There is known a system for MMW/SMMW imaging, comprising at least one illumination composite source of MMW/SMMW radiation consisting of a set of independent component sources of MMW/SMMW radiation, wherein physical features of radiation of each said component source are distinct with respect to physical features of radiation of any other said component source of the set; focusing means intended for focusing the illumination radiation, after reflection of one by an observable object and its surroundings onto receiving means, designed with a function of independent reception of radiation portions, incident from complementary portions of the imaging system field of view in which observable object is located, and for conversion of said radiation portions into an array of correspondent electric signals, wherein output of said receiving means is coupled to a processing means intended for forming an image of the observable object and its surroundings as well as for mapping this image on displaying means, besides, each pixel of the image is formed from correspondent electrical signal of said array of said electrical signals, every of which correspondent a particular radiation portion reflected by a spatially determined portion of the observed object and the surroundings (see US Patent № 5227800, Int. Cl.: G 01 S 13/89, Date of Publication: July 13, 1993).

The mentioned source of information was taken as a prototype for the declared devices.

From this source of information there is also known a method for MMW/SMMW consisting in the steps of: forming MMW/SMMW radiation, consisting of partials, being distinct from one another by radiation physical features, directing formed radiation toward the object under observation, receiving via a focusing element the radiation, incident from the area of location of the observable object, converting the received radiation into electrical signals and forming a visible image of the observable object from said electrical signals.

The mentioned source of information was taken as a prototype for the declared methods.

Aforesaid prior art method of active imaging and the corresponding MMW/SMMW imaging system are based on an original method of forming spatially non-coherent quasi-monochromatic radiation in the area of inspection. The peculiarity of the method and system of imaging for detection of the object consists in usage of array of spatially-distributed point-like sources of MMW/SMMW radiation as illumination device. The point sources of the array are sources of quasi-monochromatic radiation with a somewhat various carrier frequencies (the carrier frequencies are differ no more than manufacture tolerances for the sources). The arrays are intended for the object illumination with radiation exhibiting decreased spatial coherency. The image of the object is focused onto multi-element receiving array (MRA) by means of focusing lens. A set of electrical signals is generated by means of MRA and is further processed (frequency down-converted, amplified, rectified, filtered and so on) by means of electronic processing means in such a manner that the image of the object is formed and visualized on the screen of correspondent display.

An essential drawback of such systems is in the fact that it is necessary to use arrays with a very large quantity of the point sources. It makes the arrays expensive and they are not suitable for wide applications. The drawback is associated with the fact that a degree of spatial coherency in the plane of the object under observation essentially depends on the relationship between a size of array of spatially distributed non-coherent sources and a distance between said array and the object. Owing to this relationship the sizes of the array should be sufficiently large, when distances between the imaged objects and input pupil of imaging system are standard (which are more than 1 to 2 m). Therefore, the best results for imaging may be obtained only for the arrays, which have large sizes (upon an invariable spatial density of the point sources), but hence in case of very expensive arrays.

An essential drawback of the system consists in that in the millimeter range it is impossible to obtain a quality image by means of only simple destruction of spatial coherence of quasi-monochromatic radiation in the area of the object location by analogy with optical systems. It takes place owing almost specular reflection of millimeter wave range from objects being interest for remote inspection in contrast to a diffuse reflection of radiation in optical range for practically all objects (except for limited quantity of mirror-like objects).

Another drawback of these methods and system consists in that it is practically impossible to use multi - frequency (wide-band) radiation for illumination of the object. Design of multi-element array of point sources, in which each such a source will be capable to emit a radiation with sufficiently wide spectral composition, is not realizable and for this reason the usage of such system is impossible.

SUMMARY OF THE INVENTION

The present invention is intended for a solution of the mentioned problems in accordance with which a final (resultant) image in the imaging system is obtained as a result of analysis and further synthesis of sufficient quantity of partial images of the observed object, being obtained independently with respect to each other, and each of which is characterized by independent (and different from each other) set of radiation physical features. A carrier frequency of illumination radiation, its polarization state, an angle of incident and so on are related to such radiation physical features. The analysis and synthesis of such images (as a "synthesis" it may be understood, for example, as a weighed summation of the partial images) being carried out by means of analogous and digital electronic (optical and electronic) means or their combinations.

Such an extended set of partial images each of which exhibits various sets of values of physical features allow to perform enhance identification of objects and noise and other disturbances in the resultant image. Having an access to different fragments of the partial images, distinctly containing the object and the disturbance, it is possible to weighted combined of the fragments with according to chosen criteria, for example, to minimize a level of the disturbance of quality of the resultant combined image and to decrease of its informational contents. As a result, unique possibilities are opened with respect to reliable detection of distinctive peculiarities of observed objects and to increasing of their true identification.

The result, obtained in this case, consists in the detection of masked objects on a human body or in a luggage of people independently on a material, whom which this object is made on the base of its imaging with an improved visual quality and informational contents.

The mentioned technical result for the system is obtained that the system for millimeter and sub-millimeter wave imaging, comprising at least one source of millimeter or sub-millimeter wave radiation carried out in the form of set of separate independent elements of radiation, values of physical features of radiation of each from which are different with respect to values of physical features of radiation of other elements of radiation, an element for focusing a radiation, reflected from an object of observation, in the direction of receiving device, designed with a function of independent receiving of radiation, impinging from corresponding complementary (mutually adding to whole) portions of the area of location of the observed objects and its transforming into an array set of corresponding electrical signals, outputs of which are linked with a processor in order to forming the observed object image and surrounding area of location and for its mapping on display, besides, each element of the image is formed by means of corresponding electrical signal from this array set, to which a spatially determined portion of the observed and of surrounding area of its location corresponds, is provided with a diffuser, positioned at a distance from a source of radiation for the radiation receiving and its dissipating in a side of observation area, each separate independent radiation element of the radiation source is designed with a capability of the radiation encoding by means of modulation of the last, which is different with respect to a modulation of other separate independent radiation elements, the diffuser is designed with a capability of realization of function of decreasing the spatial coherence of impinged radiation and/or with a capability of realization of function of the impinging radiation dissipating by means of spatially different various portions of the diffuser with an additional encoding of the radiation by means of modulation of dissipating properties of said portions of the diffuser, a receiving means is designed with a capability of independent receiving of each encoded radiation component, impinging from the observed object location area, and of transforming each electrical signal from the array set into a set of electrical signals, besides, each electrical signal of their set corresponds with a separate encoded component of radiation, a processor unit is designed with functions of independent receiving of separate electrical signals, transforming of each array set of the electrical signals, obtained from electrical signals with the same encoding, into corresponding to it a corresponding partial image and transforming a resultant image of the observes object and area of its location by means of combining of separate partial images or their fragments.

The mentioned result of the first method is obtained by that in a method for millimeter and sub-millimeter wave imaging, consisting in the steps of forming a radiation in the millimeter and sub-millimeter range of waves, consisting of separate partial radiations, differing from one another by values of physical features, in directing of the formed radiations into a side of the observed object, in a receiving a radiation, dissipated from the observed object, through a focusing element in transforming of the received radiation in electrical signals and in forming a visually accepted image of the observed object in accordance with the given electrical signals, each separate partial radiation is additionally encoded by means of its modulation, which differs from a modulation of other partial radiations, the partial radiations are directed to a diffuser for decreasing their spatial coherence and/or their dispersing by means of different portions of the diffuser in order to create an additional modulation, corresponding to an angle of impingement onto the observed object, after reflecting of the radiation from the observed object a focusing of this radiation and its transferring to a receiving means are realized, the receiving means fulfils the step of receiving of this radiation independently on each portion of observed space in the area of the observed object location and a transferring of set of radiations in a corresponding array set of electrical signals, the partial electrical signals, corresponding to said partial radiations, are decoded, partial images from each of said electrical signals of said array set from array sets with various partial electrical signals are formed and then a combining of the partial images and their fragments is realized in order to form visually accepted resultant image of the object.

The mentioned result of the second method is obtained by that in a method for millimeter and sub-millimeter wave imaging, consisting in the steps of forming a radiation in the millimeter and sub-millimeter range of waves, consisting of separate partial radiations, differing from one another by values of physical features, in directing of the formed radiations into a side of the observed object, in a receiving a radiation, dispersed from the observed object area location, through a focusing element in transforming of the received radiation in electrical signals and in forming a visually accepted image of the observed object in accordance with the given electrical signals, each separate partial radiation is additionally encoded by means of its modulation, which differs from a modulation of other partial radiations, the partial radiations are directed to the observed object, after reflecting of the radiation from the observed object the step of focusing of this radiation is realized on a receiving means, wherein a receiving of this radiation is fulfilled independently on each portion of observed space and wherein the step of transferring of set of radiations, impinging from each complementary portion of observed space into the corresponding array set of electrical signals is realized, the partial electrical signals, corresponding to said partial radiations, are decoded, partial images from array sets of partial electrical signals are formed from each said electrical signal of said array set and then a combining of the partial images and their fragments (sizes of which may be small up to a separate elements of such images) is realized in accordance with a selected algorithm of processing of said signals in order to form visually accepted resultant image of the object.

The obtainment of the result is based on that in a system of illumination of MMW/SMMW imaging system there is used only one or the determined quantity of MMW/SMMW source (oscillators), each of generated partial components of radiation may be characterized by means of various values of carrier frequencies and polarization and which may be encoded by different way. Said composite radiation may be immediately directed to an observed object or it may be initially directed to a spatially distributed diffuser. This diffuser may be in the form of a spatially distributed diffusive disperser, which is not capable to destruct a spatial coherence of radiation, impinging on it, or in the form of spatially distributed diffuser with an electronic control, which is capable to destruct the spatial coherence of the radiation. In the last case the diffuser may be provided with a function of creation of additional partial components of radiations by means of distinctive dissipation of impinging radiation by means of various spatial portions of the diffuser and by means of additional encoding novel partial component by a distinctive modulation of dispersing properties of said various spatial portions of the diffuser. The distinctive encoding of the various partial components allows to receive them and to process them by means of receiving means of the imaging system independently on each other.

Various partial images, formed from corresponding partial components of radiation, may be optimally processed in imaging system analogous and/or digital init for processing images in order to obtain a necessary result, concerning to an obtainment of necessary information from them and improvement a visual quality.

By means of combining of various partial images upon the usage of the same data volume it is appears a possibility of conducting an electronic synthesis of images, which are characterized by means of various conditions of illumination, including an illumination with varied degree of both the temporary and spatial coherence, of varied polarization, of an angle of the object backlighting and so on upon the presence of capability of automatic elimination of radiation components, destructing a quality of such synthesized images.

The mentioned features are essential ones for each of the invention objects and they are interconnected between each other with a formation of stable combination of the features for each of the objects.

BRIEF DESCRIPTION OF THE DRAWINGS

The present invention is illustrated by means of concrete examples, which, however, are not uniquely possible ones, but they visually demonstrate a capability of obtainment of the necessary result by means of adduced combinations of the essential features.

Figure 1 is the first example of the embodiment of MMW/SMMW imaging system;

Figure 2 is a schematic representation of forming the first partial image of an object;

Figure 3 is a schematic representation of forming the second partial image of an object;

Figure 4 is a schematic representation of forming the third partial image of an object;

Figure 5 is a final (resultant) image of an object, composed from a summation of the partial images, shown in Fig. 2 - 4;

Figure 6 is a summing image, ob tained from two partial images, which correspondent values of physical features are practically close;

Figure 7 is a summing image, obtained from two partial images, which values of physical features differ from each other distinctly;

Figure 8 is the same image, which is represented in Fig. 7, but in a case of summing partial images one of which is resulted from specular reflection;

Figure 9 is a multiplicative image of an object, an energy of which in each pixel is proportional to a sum of the squares of module from a product of complex amplitudes of two various partial images;

Figure 10 is a block representation of multi-frequency system of forming images in the range of millimeter and sub-millimeter waves;

Figure 11 is a one-frequent image;

Figure 12 is a five-frequent synthesized (summarized) image;

Figure 13 shows a scale of gradations for a level of signal in the corresponding elements of images, shown in Fig. 11 and Fig. 12;

Figure 14 represents a waveguide realization of MMW/SMMW multi-frequency point-like source (all the frequencies are radiated from one phase center) with controlled spectral density of radiation;

Figure 15 shows a section of antenna, loaded by impedance for antenna-array diffuser upon the first example of embodiment;

Figure 16 is the same section, shown in Fig 15 upon a frontal position;

Figure 17 shows an indicatrix of radiation diffusion, shown in Figure 15, when an impedance of load is completely coordinated with the antenna input impedance;

Figure 18 is the same indicatrix, show n in Fig. 17, but in case when completely the impedance of load is not coordinated with the antenna input impedance;

Figure 19 is an example of diffuser embodiment in the form of spatially distributed set of independent quasi-optical switches of radiation;

Figure 20 is a wide-band independent quasi-optical switch of radiation, functioning as a switched polarization array;

Figure 21 is a frequency selected independent quasi-optical switch of radiation, which is capable to realize a frequency selection of impinging radiation;

Figure 22 shows interconnections in the independent quasi-optical switch of radiation;

Figure 23 is a layout of conducting elements and diodes, which are quasi-optically shifted;

Figure 24 is a layout of non-linear linking elements with expressed capacity character in order to realize a phase modulation of reflected or passed radiation;

Figure 25 shows an array of diffuser, consisting of spatially inserted in each other and adding sub-arrays, in each of which corresponding independent quasi-optical switches of radiation are oriented by the same manner in one direction for one sub-array and in another direction for another sub-array;

Figure 26 shows a principle of amplitude modulation of spatial coherence radiation by means of independent quasi-optical switches of radiation;

Figure 27 represents a principle of phase modulation of wave front by means of array of independent quasi-optical switches of radiation, each of which modulates independently a phase of reflected radiation;

Figure 28 is a phase antenna array of passing type;

Figure 29 is a phase antenna array of reflecting type;

Figure 30 shows a spatially distributed surface of diffuser, illuminated by various beams;

Figure 31 is the first example of diffuser embodiment;

Figure 32 is the second example of diffuser embodiment;

Figure 33 represents a possible construction of united diffuser, consisting of set of accidental diffusers of decreasing sizes, each of which rotates around itself axis;

Figure 34 represents a possible circuit diagram of system for forming images with the composite diffuser, consisting of set of accidental diffusers, which are capable only to destruct the spatial coherence of impinging radiation;

Figure 35 represents a generalized circuit diagram of system for forming images of danger objects (weapons), masked on a human body, upon an illumination of observation area by means of radiation, pre-diffused by means of independent elements, by a diffuser, encoding the diffused radiation;

Figure 36 represents phasor diagrams of radiation in a point near a surface of object immediately before its diffusion and in a point of receiving in case of diffusive and mirror reflection by a corresponding portion of the object;

Figure 37 represents a circuit diagram of system for forming images, illustrating a mechanism of formation of strong mirror components and weak "diffusive" components in an a signal, received by element of array;

Figure 38 is an illustration of process of radiation reflection in accordance with Fig. 36;

Figure 39 represents a diffuser array, realizing an independent amplitude modulation of impinging radiation by means of each of its separate elements;

Figure 40 represents a spectrum of one of side components of resultant (reflected from whole array) radiation in an area of observation;

Figure 41 shows a thin structure of signal spectrum, obtained by one of receiving elements of receiving array upon forming an object image;

Figure 42 shows a thin structure of signal spectrum, shown in Fig. 41, after decreasing of level of the spectrum mirror components;

Figure 43 is a graphical representation of peculiarities of distribution of spectral lines of decoded signals, corresponding to the thin structure of Fig. 41 spectrum in the form of two-dimensional array-diagram;

Figure 44 is a graphical representation of peculiarities of distribution of spectral lines of decoded signals, corresponding to the thin structure of Fig. 43 spectrum in the form of two-dimensional array-diagram;

Figure 45 is an illustration, demonstrating a complete set of multi-parameter image information, obtained by each corresponding elements of receiving array, in the form of set of independent arrays-diagrams, corresponding distinct values of the physical features of radiation, illuminating the diffuser;

Figure 46 is an illustration of peculiarities of forming of radiometric and a resultant combined image from the seven partial images;

Figure 47 is an illustration of object position on human body with an indication by means of arrows possible reflections, forming various partial images;

Figure 48 is an illustration of process of resultant image forming from a set of partial images, from which are excluded noise-like interference partial images;

Figure 49 adduces an illustration of possibility of standard mathematical post-processing of initial and resultant images;

Figure 50 represents variants of various digital combining into clusters of diffuser elements;

Figure 51 is a functional circuit diagram of oscillator for two mutually coherent signals, consisting of paired oscillators with a stabilized frequency of their different signal;

Figure 52 is the first example of embodiment of the oscillator of mutually coherent signals with a quantity of signals more than two;

Figure 53 is the second example of embodiment of the oscillator of mutually coherent signals with a quantity of signals more than two;

Figure 54 is a generalized circuit diagram of input unit of receiving means;

Figure 55 represents a standard input path of super-heterodyne receiver, the first circuit diagram of input unit of receiving means;

Figure 56 is the second circuit diagram of input unit of receiving means;

Figure 57 is third circuit diagram of input unit of receiving means;

Figure 58 is fourth circuit diagram of input unit of receiving means;

Figure 59 is fifth circuit diagram of input unit of receiving means;

Figure 60 is an example of a transceiver embodiment;

Figure 61 shows a spectrum of a difference signal spectrum;

Figure 62 represents a characteristic distribution of difference signal spectrum envelopes, formed at output of mixer, when frequencies of driven oscillators, forming corresponding beams of radiation, are different with respect to a frequency of driving oscillator;

Figure 63 shows a spectrum of difference signal at output of non-linear element (a quadratic detector) of channel for direct amplification and detection;

Figure 64 shows three pairs of diffuser elements, positioned in various points and forming corresponding images;

Figure 65 is a block-diagram of system for forming stereoscopic images, based on the usage of zoning Fresnel's lens and multi-frequency diffuser illumination system.

DETAILED DESCRIPTION OF THE EMBODIMENTS

In accordance with the present invention the first method for millimeter and sub-millimeter wave imaging, consists in the steps of forming a composite radiation in the millimeter and sub-millimeter range of waves, consisting of separate partial radiations, differing from one another by values of their physical features, directing the formed radiations forward to the observed object, receiving the radiation, being scattered with the observed object, from a radiation-focusing element, transforming the received radiation in electrical signals and in forming a visually accepted image of the observed object in accordance with the given electrical signals. In accordance with this method, each separate partial radiation is additionally encoded by means of its modulation, which differs from a modulation of other partial radiations, the partial radiations are directed to a diffuser for decreasing their spatial coherence and/or their dispersing by means of different portions of the diffuser in order to create an additional modulation, corresponding to an angle of impingement onto the observed object; after reflecting of the radiation from the observed object the steps of focusing of this radiation and its transferring to a receiving means are realized, the receiving means fulfils a receiving of this radiation independently on each portion of observed space in the area of the observed object location and a transferring of set of radiations in a corresponding array set of electrical signals, the partial electrical signals, corresponding to said partial radiations, are decoded, partial images from each of said electrical signals of said array set from array sets with various partial electrical signals are formed and then a combining of the partial images and their fragments is realized in order to form visually accepted resultant image of the object.

The method for millimeter and sub-millimeter wave imaging in accordance with the second its embodiment consists in the steps of forming a radiation in the millimeter and sub-millimeter range of waves, consisting of separate partial radiations, differing from one another by values of their physical features, directing of the formed radiations into a side of the observed object, receiving a radiation, dissipated from the observed object area location, through a focusing element in transforming of the received radiation in electrical signals and forming a visually accepted image of the observed object in accordance with the given electrical signals. In accordance with this method, each separate partial radiation is additionally encoded by means of its modulation, which differs from a modulation of other partial radiations, the partial radiations are directed to the observed object, after reflecting of the radiation from the observed object the step of focusing of this radiation is realized on a receiving means, wherein a receiving of this radiation is fulfilled independently on each portion of observed space and wherein a transferring of set of radiations, impinging from each complementary portion of observed space into the corresponding array set of electrical signals is realized, the partial electrical signals, corresponding to said partial radiations, are decoded, partial images from array sets of partial electrical signals are formed from each said electrical signal of said array set and then a combining of the partial images and their fragments (sizes of which may be small up to a separate elements of such images) is realized in accordance with a selected algorithm of processing of said signals in order to form visually accepted resultant image of the object.

The system for millimeter and sub-millimeter wave imaging comprises at least one source of millimeter or sub-millimeter wave radiation carried out in the form of set of separate independent elements of radiation, all or a part of values of their physical features of radiation of each from which are different with respect to values of correspondent physical features of radiation of other elements of radiation, an element for focusing a radiation, dissipated by the observed object, on a receiving device, which is designed with a function of independent receiving of radiation, dissipated by various spatial portions of the observed object and/or its location area, positioned in the field of view of said focusing element, and transforming it in a corresponding array set of corresponding electrical signals, outputs of which are linked with a processor in order to transforming said array set of electrical signals into a corresponding matrix image of the observed object and/or its location area and this image mapping on display, besides, each element of the image is formed by means of corresponding electrical signal, which was obtained in consequence of transforming by the receiving device that radiation, which is dispersed by means of corresponding spatially determined portion of the observed object and/or surrounding area of its location and is correspondingly focused on the receiving device by means of said focusing element. The system is provided with a diffuser, positioned at a distance from a source of radiation and intended for its illumination by means of radiation of said source of radiation and sequential dissipation of this radiation in the direction of the observed object location area, independent radiation elements are designed with fixed or varied in time and by value said distinctive physical features, the diffuser is designed with a capability of realization of function of decreasing the spatial coherence of impinged radiation and/or with a capability of realization of function of the impinging radiation diffuser dissipating by means of spatially different various portions of the diffuser with an additional encoding of the dissipated radiation by means of different modulation of dissipating properties of said portions of the diffuser and with a realization of function of decreasing of spatial coherence of radiation, dispersed by the diffuser, a receiving device is designed with a capability of independent receiving of each encoded radiation component in all the ranges of variations of values of radiation physical features, impinging from the observed object location area, and of transforming each electrical signal from said array set of electrical signals by means of decoding into an additional set of electrical signals, each of which corresponds with a distinctly encoded component of radiation, each of which is focused on the receiving device from a corresponding spatial portion of the object or its location area, and each of which is distinctly received and decoded in one or in different moments of time during the receiving by the receiving device the radiations, reflected all said spatial portions of the observed object and/or observation area and during a time of variations of values of said physical features of radiation in all said their sufficiently different values, a processor unit is designed with functions of independent receiving of separate electrical signals, transforming of each array set of the electrical signals, obtained from electrical signals with the same encoding, and for the same values of physical parameters of radiations of a source of radiation into corresponding to it a partial array image and forming a resultant image of the observes object and area of its location by means of combining of separate partial matrix images or their fragments.

In the present system the processor may be designed with a functions of control of encoding diffuser elements and with a variation of value distribution of the encoding diffuser with respect to said portions of the diffuser and with respect to the given algorithm.

In accordance with another example of embodiment the system for millimeter and sub-millimeter wave imaging comprises at least one source of millimeter or sub-millimeter wave radiation carried out in the form of set of separate independent elements of radiation, all or a part of values of physical features of radiation of each from which are different with respect to values of correspondent physical features of radiation of other elements of radiation device, which is designed with a function of independent receiving of radiation, dissipated by various spatial portions of the observed object and/or its location area, positioned in the field of view of said focusing element, and transforming it in a corresponding array set of corresponding electrical signals, outputs of which are connected to a processor in order to transform said array set of electrical signals into a corresponding matrix image of the observed object and/or its location area and this image mapping on display, besides, each element of the image is formed by means of corresponding electrical signal, which was obtained in consequence of transforming by the receiving device that radiation, which is dispersed by means of corresponding spatially determined portion of the observed object and/or surrounding area of its location and is correspondingly focused on the receiving device by means of said focusing element. In this example the system is provided with a diffuser, positioned at a distance from a source of radiation and intended for its illumination by means of radiation of said source of radiation and sequential dispersing of this radiation in the direction of the observed object location area, independent radiation elements are designed with fixed or varied in time and by value said distinctive physical features, each separate independent radiation element of radiation source is designed with a capability of encoding itself radiation, including and its modulation, differing from an encoding of radiation of other separate independent elements of radiation, the diffuser is designed with a capability of realization of function of the impinging radiation diffuser dispersing or with a capability of realization of function of the impinging radiation diffuser dispersing by means of spatially different various portions of the diffuser with an additional encoding of the dispersed radiation by means of different modulation of dispersing properties of said portions of the diffuser and/or with a realization of function of decreasing of spatial coherence of radiation, dispersed by it, a receiving device is designed with a capability of independent receiving of each encoded radiation component in all the ranges of variations of values of radiation physical features, impinging from the observed object location area, and of transforming each electrical signal from said array set of electrical signals by means of decoding into an additional set of electrical signals, besides, each electrical signal from the additional set of the electrical signals corresponds to distinctly encoded component of radiation, each of which is focused on the receiving device from corresponding spatial portion of the object or its location area, and each of which is distinctly received and decoded in one or in various moments of time during the receiving by the receiving device the radiations, reflected all said spatial portions of the observed object and/or observation area and during time of variations of values of said physical features of radiation in all said their sufficiently different values, a processor unit is designed with functions of independent receiving of separate electrical signals, transforming of each array set of the electrical signals, obtained from electrical signals with the same encoding, and for the same or near the same values of physical features of radiations of said independent elements of radiations into corresponding to it a partial array image, and forming a resultant image of the observed object and area of its location by means of combining of separate partial matrix images or their fragments.

In this system distinctive fixed and/or scanned in value physical features of radiations of said independent elements of radiations may be spatial directions of propagation of beams of these radiations such that the spatially distinctive portions of said diffuser, illuminated by these radiations, corresponds to various distinctive directions of corresponding radiations.

The diffuser for this system may be additionally provided with means for polarization, isolating from a radiation, reflected by the diffuser, a radiation, which is preferably linearly polarized in the first spatial direction, but a receiving device is provided with polarization means for isolating a radiation, which is received by it and which is linearly polarized in the second spatial direction. Besides, the first said direction may coincide with the second said direction or the first said direction may be orthogonal with respect to the second direction.

The system for millimeter and sub-millimeter wave imaging in accordance with the third example of embodiment comprises one source of millimeter or sub-millimeter wave radiation, an element for focusing a radiation, dissipated by the observed object, on a receiving device, which is designed with a function of independent receiving of radiation, dissipated by various spatial portions of the observed object and/or its location area, positioned in the field of view of said focusing element, and transforming it in a corresponding array set of corresponding electrical signals, outputs of which are connected to a processor in order to transform said array set of electrical signals into a corresponding matrix image of the observed object and/or its location area and this image mapping on display, besides, each element of the image is formed by means of corresponding electrical signal, which was obtained in consequence of transforming by the receiving device that radiation, which is dispersed by means of corresponding spatially determined portion of the observed object and/or surrounding area of its location/ and is correspondingly focused on the receiving device by means of said focusing element. The system, designed in accordance with this example, is provided with a diffuser, positioned at a distance from a source of radiation and intended for its illumination by means of radiation of said source of radiation and sequential dissipation of this radiation in the direction of the observed object location area, the radiation source is designed with fixed or varied in time and by value physical feature of its radiation, the diffuser is designed with a:capability of realization of function of the impinging radiation diffuser dissipating or with a capability of realization of function of the impinging radiation diffuser dispersing by means of spatially different various portions of the diffuser with an additional encoding of the dispersed radiation by means of different modulation of dispersing properties of said portions of the diffuser and with a realization of function of decreasing of spatial coherence of radiation, dispersed by it, a receiving device is designed with a capability of independent receiving of each encoded radiation component in all the ranges of variations of values of radiation physical features, impinging from the observed object location area, and of transforming each electrical signal from said array set of electrical signals by means of decoding into an additional set of electrical signals, each of which corresponds to distinctly encoded component of radiation, each of which is focused on the receiving device received from corresponding spatial portion of the object or its location area, and each of which is distinctly and decoded in one or in various instants of time during the receiving by the receiving device the radiations, reflected all said spatial portions of the observed object and/or observation area and during time of variations in value of said physical features of radiation in all said their sufficiently different values, a processor unit is designed with functions of independent receiving of separate electrical signals, transforming of each array set of the electrical signals, obtained from electrical signals with the same encoding, and for the same values of physical features of radiations of the radiation source into corresponding to it a partial array image, and forming a resultant image of the observed object and area of its location by means of combining of separate partial matrix images or their fragments.

In the this system the processor may be designed with a functions of control of encoding diffuser elements and with a variation of value distribution of the encoding diffuser with respect to said portions of the diffuser and with respect to an algorithm, given by the processor.

In accordance with the following example of embodiment the system for millimeter and sub-millimeter wave imaging comprises at least one source of millimeter or sub-millimeter wave radiation, an element for focusing a radiation, dispersed by the observed object, on a receiving device, which is designed with a function of independent receiving of radiation, dispersed by various spatial portions of the observed object and/or its location area, positioned in the field of view of said focusing element, and transforming it in a corresponding array set of corresponding electrical signals, outputs of which are linked with a processor in order to transform said array set of electrical signals into a corresponding matrix image of the observed object and/or its location area and this image mapping on display, besides, each element of the image is formed of corresponding electrical signal, which was obtained in consequence of transforming by the receiving device that radiation, which is dissipated by means of corresponding spatially determined portion of the observed object and/or surrounding area of its location and is correspondingly focused on the receiving device by means of said focusing element. The system is provided with a diffuser, positioned at a distance from a source of radiation and intended for its illumination by means of radiation of said source of radiation and sequential dispersing of this radiation in the direction of the observed object location area, the radiation source is designed with varied in time and by value at least one physical feature of its radiation, the diffuser is designed with a capability of realization of function of the decreasing of spatial coherence of the radiation, dispersed by it, a receiving device is designed with a capability of independent receiving of each encoded radiation component in all the ranges of variations in value of radiation physical features, impinging from the observed object location area, and of transforming each electrical signal from said array set of electrical signals by means of decoding into an additional set of electrical signals, each of which corresponds to the same or closely the same values of physical features of radiation of the radiation source, each of which is focused on the receiving device from a corresponding spatial portion of the object or its location area, and each of which is distinctly received and decoded in one or in various moments of time during the receiving by the receiving device the radiations, reflected all said spatial portions of the observed object and/or observation area and during time of value variations of said physical features of radiation in all said their sufficiently different values, a processor unit is designed with functions of independent receiving of separate electrical signals, transforming of each array set of the electrical signals, obtained from electrical signals with the same or with closely the same values of physical features of radiations of the radiation source into corresponding to it a partial array image, and forming a resultant image of the observed object and area of its location by means of combining of separate partial matrix images or their fragments.

For the system, described in this example, the varied physical feature of the radiation source is a directivity of radiations, a variation of which in time results in a sequential in time illumination of various spatial areas of said diffuser, or the varied physical feature of the radiation source is a the radiation frequency.

In accordance with a novel example of embodiment the system for millimeter and sub-millimeter wave imaging comprises at least one source of millimeter or sub-millimeter wave radiation, carried out in the form of set of separate independent elements of radiation, all or a part of values of physical features of radiation of each from which are different with respect to values of physical features of radiation of other elements of radiation device, an element for focusing a radiation, dispersed by the observed object, on a receiving device, which is designed with a function of independent receiving of radiation, dispersed by various spatial portions of the observed object and/or its location area, positioned in the field of view of said focusing element, and transforming it in a corresponding array set of corresponding electrical signals, outputs of which are connected to a processor in order to transform said array set of electrical signals into a corresponding matrix image of the observed object and/or its location area and this image mapping on display, besides, each element of the image is formed of corresponding electrical signal, which was obtained in consequence of transforming by the receiving device that radiation, which is dissipated by means of corresponding spatially determined portion of the observed object and/or surrounding area of its location, and is correspondingly focused on the receiving device by means of said focusing element. The system is provided with a diffuser, positioned at a distance from a source of radiation and intended for its illumination by means of radiation of said source of radiation and sequential dispersing of this radiation in the direction of the observed object location area, said element for radiation focusing is designed a frequency-dependent, for which a focal length of this lens depends on a frequency of focused radiation, said set consists of independent elements of the radiation, which are with a fixed sufficiently distinctive central frequencies of the radiation and/ or at least of one radiation source with a frequency, varied in the sufficiently wide range of frequencies, each separate element of radiation of the radiation source is designed with a capability to encode itself radiation, including also its modulation, and different from radiation encoding of other separate independent radiation elements, the diffuser is designed with a capability of realization of diffusive dispersing of impinging radiation by spatially various portions of the diffuser by means of additional different encoding of dispersed radiation by means of different modulation of dispersing properties of said diffuser portions and/or with a realization of function of decreasing a spatial coherence of the radiation, dispersed by it, a receiving device is designed with a function of independent receiving of each encoded component of radiation in all the ranges of variations of physical features of radiation, impinging from the observed object location, and transforming each signal from said array set of electrical signals by means of decoding into an additional set of electrical signals, besides, each of electrical signal of the additional set of the electrical signals corresponds to distinctively encoded component of the radiation, each of which is focused on the receiving device from a corresponding spatial portion of the object or its location area, and each of which is distinctly received and decoded in one or in various moments of time during the receiving by the receiving device the radiations, reflected all said spatial portions of the observed object and/or observation area and during time of variations of said physical features of radiation in all said their sufficiently different values, a processor unit is designed with functions of independent receiving of separate electrical signals, transforming of each array set of the electrical signals, obtained from electrical signals with the same encoding and with the same or with near the same values of physical features of radiations of said independent elements of radiations into corresponding to it a partial array image, and forming a set of resultant images of the observed object and area of its location by means of combining of separate partial matrix images with the same or with near the same values of frequency of said radiation source or their fragments and forming a three-dimensional image from said set of said resultant images.

In this system the frequency-dependent element of focusing is a zone Fresnel's lens, but the set of independent elements of radiation may include at least two radiation sources with a frequency varied in wide limits, and each of which is intended for an illumination of spatially different portions of said diffusers.

Concrete realizations of methods and systems are below considered.

In accordance with the present invention the system for millimeter and sub-millimeter wave imaging comprises at least one source of millimeter or sub-millimeter wave radiation, carried out in the form of set of separate independent elements of radiation, physical features of radiation of each from which are different with respect to physical features of radiation of other elements of radiation, besides the set may contain elements of radiation with their radiation physical features, which are controllably varied.

The system also has an element for focusing a radiation, dispersed by the observed object, in area of a receiving device, which is designed with a function of independent receiving of radiation, impinging from corresponding complementary portions of the observed object location area, and for its transformation into an array set of corresponding electrical signals, besides, a quantity of elements of said array set corresponds to a quantity of said complementary portions of observed area ; outputs of the receiving device are linked with a processor for forming an image of the observed object and zone of its location and for mapping of this image on a display.

Each array element of image is formed by means of corresponding electrical signal from said array set, and a certain portion of the object of observation and its location surrounding area corresponds to each such an element of the image. The system is provided with a diffuser, positioned at a distance from the radiation source for receiving of its radiation and for its dissipation to a side of the area of observation.

Each separate independent element-source of radiation of said radiation is carried out with a capability to encode the radiation by means of the last modulation, which is differs from a modulation of other separate independent element-sources of radiation. The diffuser is designed with a capability realization a function of diffusive dispersing of impinging radiation or with a capability to realize a function of the impinging radiation diffusive dissipating by means of spatially different various portions of the diffuser with an additional encoding of the dissipated radiation by means of different modulation of dissipating properties of said portions of the diffuser and/or with a realization of function of decreasing of spatial coherence of impinging radiation. A receiving device is designed with a capability of independent receiving of each encoded radiation component, impinging from the observed object location area, and of transforming each electrical signal from said array set of electrical signals into an additional set of electrical signals, besides, each electrical signal of the additional set of the electrical signals corresponds with a distinctly encoded component of the radiation. A processor unit is designed with functions of independent receiving of separate electrical signals, of transforming of each array set of the electrical signals, obtained from electrical signals with the same encoding into corresponding to it a partial array image and of forming a resultant image of the observed object and area of its location by means of combining of separate partial matrix images or their fragments.

In accordance with the present invention the first method for millimeter and sub-millimeter wave imaging, consists in the steps of forming a radiation in the millimeter and sub-millimeter range of waves, consisting of separate partial radiations, differing from one another by physical features, directing of the formed radiations into a side of the observed object, receiving a radiation, dissipated from the observed obj ect, through a focusing element, transforming of the received radiation into electrical signals and forming a visually accepted image of the observed object in accordance with the given electrical signals.

Besides, each separate partial radiation is additionally encoded by means of its modulation, which differs from a modulation of other partial radiations, the partial radiations are directed to a diffuser for decreasing their spatial coherence and/or their dispersing by means of different portions of the diffuser in order to create an additional partial radiations with an additional modulation, corresponding to an angle of impingement onto the observed object.

After reflecting of the radiation from the observed object a focusing of this radiation and its transferring to a receiving means are realized.

The receiving device fulfils the steps of receiving of this radiation independently on each portion of observed space in the area of the observed object location and transferring of set of radiations in a corresponding array set of electrical signals, it realizes a decoding of the partial electrical signals, corresponding to said partial radiations, partial images from each of said electrical signals of said array set from array sets with various partial electrical signals are formed by the receiving device and then a combining of the partial images and their fragments is realized in order to form visually accepted resultant image of the object.

The second variant of the method for millimeter and sub-millimeter wave imaging consists in the steps of forming a radiation in the millimeter and sub-millimeter range of waves, consisting of separate partial radiations, differing from one another by physical features, directing of the formed radiations into a side of the observed object, receiving a radiation, dissipated from the observed object area location, through a focusing element in transforming of the received radiation in electrical signals and i forming a visually accepted image of the observed object in accordance with the given electrical signals.

Besides, each separate partial radiation is additionally encoded by means of its modulation, which differs from a modulation of other partial radiations, the partial radiations are directed to the observed object, after reflecting of the radiation from the observed object a focusing of this radiation is realized on a receiving means, wherein a receiving of this radiation is fulfilled independently on each portion of observed space and wherein a transferring of set of radiations, impinging from each complementary portion of observed space into the corresponding array set of electrical signals is realized, the partial electrical signals, corresponding to said partial radiations, are decoded, partial images from array sets of partial electrical signals are formed from each said electrical signal of said array set and then a combining of the partial images or their fragments is realized in order to form visually accepted resultant image of the observed object.

Examples of concrete embodiment of the system for millimeter and sub-millimeter wave imaging are below adduced.

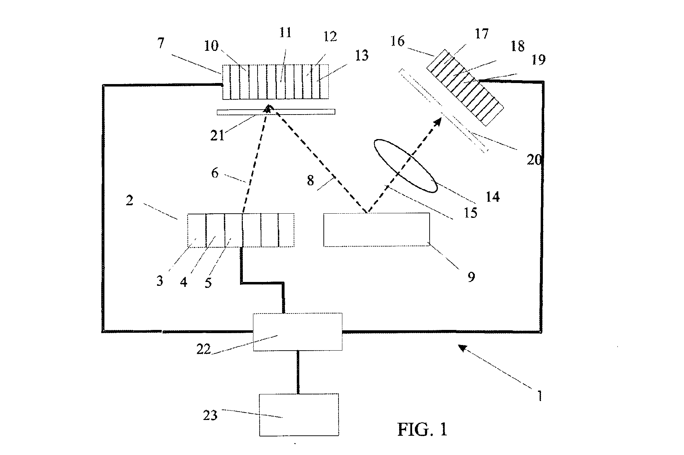

The imaging system 1 (see Fig. 1) includes a point-like source (as an independent radiation element) 2 of radiation in the range of millimeter and sub-millimeter waves. In general case spectral components of the radiation of the source 2 may be possessed by any region of the electromagnetic spectral range (including infra-red and visible radiation). In the framework of the present invention a term "MMW/SMMW radiation" will be used for a reference to any region in the range of millimeter and sub-millimeter waves, having, for example, spectral components, which are in the range between 30 and 300 gigahertz (or wavelengths ranging from 0.1 to 10 mm). It is possible a realization, in accordance with which the source 2 transmits (quasi-monochromatic) radiation exhibiting narrow bandwidth of its spectrum. Such a radiation may be generated by any conventional fully monolithic source or waveguide performance source, industrially produced for operating, for example, at some fixed frequency. The radiation of such a source may be spatially coherent.

A multi-frequency imaging approach, when for illumination of an object it is used a radiation, consisting of spectral components with essentially distinctive central (carrier) frequencies, is able to provide lots of advantages. For example, special object-covering films may be developed for goals of concealing of contraband objects. Such films may exhibit radiation scattering characteristics being similar to radiation scattering characteristics of human skin in some particular spectral band. However this is impossible to make the object to be invisible by usage of such films if a wide-band radiation is used. To be undetected by such an imaging system which operates in wide-band spectral range is impossible because said scattering properties of human skin depend on moisture and temperature of surroundings, state of nervous system of an individual carrying the concealed object (depending of level of exciting of the individual).

In a preferential embodiment the source 2 should be a radiation source transmitting a wide-band spectrum radiation. In this case the source (oscillator) 2 may consist of one or more (partial) sources (oscillators) 3, 4, 5, each of which generates a radiation (characterized by different physical properties ) belonging to different spectral ranges.

It is preferably that an average intensity of spectral components, generated by partial constituent sources and, may be, their spectral location and spectral composition would be individually controlled by correspondent controlling means. Outputs (output antennas) of such partial constituent MMW/SMMW sources may be physically combined into single output in such a manner that all said spectral components will be originated from practically the same spatial point being a phase centre of the output antenna (or at least from the same, for example, horn antenna in case of a waveguide realization of such a source) or from spatially closely-located points. In another embodiment of the invention the source 2 may consist of one or several partial constituent sources, a radiation of every of which exhibits own specific ipolarization states. Said polarization states may be both the same for all said radiation sources and distinctive for different ones.

Controlling systems of such partial constituent sources should be capable to control both the average energy, emitted by said source 2, and spectral localization (but sometimes the spectral composition as well) of its spectral radiation components. In another preferable embodiment these controlling systems also should distinctly encode the radiation generated by every said partial constituent sources (exhibiting own particular frequency composition and polarization state). This will allow to distinctly decode and extracted from compound radiation received by receiving apparatus of imaging system (by receiving array and correspondent receiving electronic means).

In accordance with another embodiment of the invention the spectral composition of wide-range radiation consists of only a set of narrow-band spectral components, the intensity and central frequency of every of which may be varied independently. In another embodiment of the invention only radiation central frequencies may be varied for part of constituent sources 3, 4, 5 of the radiation source 2 or for all of them for goal of a formation of frequency-distinctive partial constituent images.

A multi-frequency radiation may be directed toward an observed object. In this case there exists possibility to synthesize resultant image of enhanced quality due to a formation of a set of partial constituent images exhibiting spatial distributions of spatial coherent speckle noises which are different for different said images. Such synthesized image may be obtained by simple summation of said constituent images. The radiation may be primarily directed towards a simplified diffuser which is not capable to destroy a spatial coherence of the radiation but only diffusely scatter the radiation for decreasing its primary high directivity. Such a diffuser may be a simple brick wall exhibiting a random scattering surface. For optimal summation of frequency-distinct partial constituent images it is needed to take into account possible differences in scattering the radiation components with the diffuser and different spectral sensitivity of receiving apparatus. It may be realized both by optimal turning of intensity level of correspondent radiation components and by a posteriori digital processing (for example by increasing a contrast of correspondent partial constituent images). Said summation of whole partial constituent images or only some portions of them may be performed, as well, in analogous electronic units of receiving apparatus which may be provided with filtration unit or any other unit which performs summation of signals of the partial constituent images (or more precisely, summation of energies of the signals) individually for every pixel of the synthesized image and extraction of any inter-modulation products of the signals of such images.

In another aspect of the invention the source 2 transmits MMW/SMMW radiation 6 towards a diffuser 7, which, in turn, diffusively scatters the radiation towards 8 an observed object 9 and an area of observation. This diffuser 7, firstly, may be used for formation of optimal degree of spatial coherence of the radiation, being incident on the observed object situated in the field of view of an imaging system. Said optimal spatial coherence of the object illumination radiation can allow forming enhanced quality images even for a case when the object specularly reflects the incident radiation.

Such peculiarity of the illumination system increases possibilities of the system 1 for forming images of high quality due to decreasing of image noises which where caused with high spatial coherence of radiation. Such noises are manifested in the form of random spatial distributions of speckles (random aventurine spots exhibiting different brightness). Some modification of illumination system based on usage of the diffuser allows decreasing influence of strong specular reflections of the radiation from the object (so called glint effect). The usage of such a diffuser may be effective both for a quasi-monochromatic radiation and for a multi-frequency radiation. In the last case the system of illumination permits more essentially to decrease coherent noises in formed images, since in this case both the spatial coherence and temporal coherence of backlighting radiation may be decreased.

In accordance with the present invention a diffuser is a constituent part of diffuser illuminator of imaging systems operating in millimeter and sub-millimeter wave ranges. The diffuser illuminator is intended for an illumination of an inspection (or observable) area with encoded spatially-incoherent radiation, which is primarily generated by at least one compound source of radiation in the millimeter and sub-millimeter wave range, designed in the form of a limited amount of sets of independent constituent radiation sources, radiation every of which is characterized with all or a part of values of correspondent radiation physical features being distinct from all or only a part values of correspondent radiation physical features of every other constituent radiation source provided such constituent radiation sources belong to the same said set. Diffuser of the diffuser illuminator being situated apart from said compound radiation source to be illuminated with its radiation and, then, to scatter said radiation towards said inspection area. The diffuser is designed to be capable to decrease spatial coherence of the diffuser-scattered radiation. Said constituent radiation sources are designed (with function) with their ability to encode emitting radiation, particularly by means of any kind of radiation modulation, therewith radiation of any constituent radiation source is encoded distinctly from radiation of any other constituent radiation source whatever either said sources belong to the same said set or to different said sets. Moreover independent constituent radiation sources belonging to the same said set illuminate preferably the same spatial portion of said diffuser, but independent constituent radiation sources belonging to different said sets illuminate preferably different spatial portions of said diffuser.

The diffuser may be designed in the form of a set of spatially-distributed point-like cells, encoding incident radiation by distinctive manner from each other owing to a distinctive modulation of their scattering properties. The cells are disposed along an arbitrary shape of underlying surface, which should be designed of the required shape. Therewith constituent radiation sources being grouped in their sets are disposed relatively the diffuser by such a manner to provide maximal range of angle of incident of diffuser-scattered radiation in the inspection area. Besides, a scattering cell may be designed in the form of the mirror-reflecting element, mounted on a particular piecewise-plate substrate, therewith, the different mirror-reflecting elements are designed with an ability of a displacement with respect to a corresponding general substrate by distinctive from each other way and are at a displacement value, which is less than a half of the shortest wave of the illuminating radiation.

For a realization of said displacement of said cells they are fastened to movable magnetic cores of inductive current coils or to piezo-elements, powered by means of occasional currents of by means of currents, regularly varied in time and by distinctive way. The diffuser scattering cell may be designed in the form of liquid crystal cell, besides, optical properties of various said independent mesomorphic liquid crystal cells of such a diffuser are varied in time either occasionally or regularly and distinctively from each other.

The diffuser may be designed in the form of a rotating reflector with random reflecting surface or in the form of set of relatively small constituent reflectors with said random reflecting surface, each of which rotates with respect to the own axis of rotation and each of which is illuminated by own said set of the independent partial constituent sources of radiation. The constituent reflectors and correspondent said partial constituent source sets are disposed in space by such a way to provide maximal range of angles of radiation incidence into the inspection area.

The diffuser may be designed in the form of phase antenna array, a phase shifter of each element of which is designed with a function of distinctive in time variations of phase of passing or reflecting radiation.

Besides, said independent partial constituent radiation sources may be designed with an ability of generation of radiation, which is linearly polarized in the first space direction, but said scattering cell is designed in the form of the independent quasi-optical switcher of radiation, representing a set of spatially-distributed independent conducting elements, disposed on a plane substrate, besides, the adjacent conducting elements are preferably coupled by means of non-linear elements in the first space direction, besides, a modulation of impedance of the non-linear element results in a modulation of amplitude or phase of radiation wave front, impinging normally on such a switcher and said depending on a resistive or capacitive character of the impedance of said non-linear element.

The dissipating element may be designed in the form of antenna, loaded by impedance. Each antenna, loaded by impedance, represents by itself at least two conducting antenna portions, connected between one another by means of non-linear element for providing with an impedance load and each of which is equipped with the correspondent contacts for applying to said impedance load a bias voltage and/or a modulating signal for control the impedance value of this load.

In accordance with embodiment the diffuser illuminator for imaging systems in the millimeter and sub-millimeter wave ranges, intended for illuminating an inspection area by encoded spatially-non-coherent radiation, comprises at least one source of radiation in the millimeter an sub-millimeter wave ranges, and a diffuser, positioned in at a distance from the radiation source and intended to be illuminated with the radiation of said radiation source and, then, to scatter for this radiation toward the inspection area, the diffuser is designed in the form of a set of spatially-distributed radiation-scattering cells, being capable to perform an amplitude modulation of the radiation, scattered by them, by distinctive from one another way.

Besides, a scattering cell of the multi-cell diffuser may be designed in the form of an independent quasi-optical set of conducting elements, the adjacent conducting elements belonging to the same set are connected with each other preferably in the first direction by means of connecting means, having the first impedance in the first state when the connecting means are not conducting and having the second impedance in the second state when the connecting means are conducting, the conducting elements belonging the same said spatially-distributed set in combination with the connecting means being in said first state have such a negligible characteristic impedance in response to incident radiation being polarized in the first direction that the incident radiation is substantially reflected and in combination with the connecting means being in said second state have quite high characteristic impedance in response to incident radiation being polarized in the first direction that the incident radiation is substantially transmitted through such a quasi-optical switcher cell.

In case of realization of a diffuser which is capable only to destruct spatial coherence of incident radiation, various sufficiently small spatial portions of the diffuser scatter (pass through/reflect) correspondent constituent components of radiation which are mutually incoherent in phase. Therewith receiving apparatus of imaging system has to provide summation of radiation energy in every formed image pixel at least for characteristic time duration of mutual changes of relative phases of said constituent radiation components (being scattered with the different spatial portions of the diffuser), for time duration the relative phases have to be changed in range from 0 to 6.28 (2p) radians.

In one of the embodiments the diffuser 7 represents immovable as a whole array of electronically or optically controlled spatially-distributed scattering point-like (quasi-point) cells 10,11,12,13. The term "point-like" cells means, that their angular sizes, at which each of them may be observed from any spatial point of the inspection area or the object, is essentially less than angular sizes of own diffuser as a whole upon its observation from the same said spatial point of observation.

This diffuser consists of specially designed spatially-distributed multiple point-like scatterers, scattering properties of which may be controlled by means of electronic or optic (optic-electronic) way in order to scatter incident radiation components independently from one another and additionally to encode the formed partial components (constituent components) in a distinctive manner due to distinctive modulation of their scattering properties.

Besides, all the partial constituent radiation components or only some clusters of them may be distinctly encoded, therewith, the diffuser provides with a phase independence of said partial constituent radiation components, scattered by diffuser cells for all the components (each of such partial constituent radiation components is originated with separate scattering diffuser cell).

It should be noted that said capability of distinct encoding of the radiation components may be determined largely with receiving part of imaging system, namely, with resolution capability of its decoding units (their possibility for distinctly distinguishing the radiation components having closely-spaced parameters of their encoding). Practically such a diffuser decomposes spatial-coherent radiation incident upon the diffuser into multiple partial constituent radiation components exhibiting distinct angles of their propagation into inspection area (depending on spatial locations of correspondent diffuser cells 10, 11, "originating" correspondent partial constituent radiation components, relative to surface of the object 9).

In limiting case each of such components may be distinctly encoded to distinctly label by different modulation signals supplied to each of such a point scatterer cell (or in other words spatial portion) of this diffuser.

Thus, it is appeared an ability to differentiate the radiation components, illuminating the observed object at various incident angles. The distinct radiation components will create partial images, each of which may be distinctly received by receiving apparatus, transformed in the digital form and distinctly stored into a digital memory for their following processing to synthesize a resultant image, at that, before said synthesize procedure a useful information content in said partial images may be primarily enhanced and noise and interference content may be reduced (it may be also realized in analogous circuits less effectively and less full, but sufficiently rapidly and less expensively). Said aggregate of processing procedures which can be applied to the partial images for an obtaining the resultant image of the object, as any other aggregate of processing procedures, that is based on the usage of an obtained set of the partial images and that leads to an improvement of the resultant image, obtained as a result of such a processing, further is (referred as) terminologically determined as an "combination".

For example, particular partial images or some portions of such images, causing destructions of quality of the resultant synthesized image, may be easily identified and then their influence is electronically decreased in real time. The latter will lead to significant improvement of visual quality of such resultant images and to an enhancement of their informational contents, being achieved as a result of the processing. The informational resultant images of high quality can be created, for example, by means of weighted digital averaging of various partial images (this summation of the partial images may be realized also partially or in whole by means of analogous way, as it was described for case of analogous accumulation of energy of multi-frequency partial images). At that it can be averaged such partial images, which are formed by partial radiation components exhibiting values of distinctive radiation features which are the same (or being in some range of variation of values of these physical features). The latter represents an interest for indicative revealing of peculiarities of radiation reflected by the observed object, for example, such a radiation physical feature may be a linear polarization, or its carrier frequency, or angle of incidence (or some range of the angles) of radiation on a surface of the observed object. During the averaging procedure it can not be used those partial images or its fragments which cause destruction of the resultant image. Such partial images may be formed by partial radiation components which are reflected from the observed object by specular manner. Aforesaid procedures of the synthesis summation may be of interactive type, so the procedures may be stopped only when coherent speckle noises and other factors, destructing a quality of the resultant image, will be decreased to required level. Aforesaid processing procedures may be realized both in a time of imaging procedure when the partial images are formed and after the imaging procedure in time of post-imaging digital processing of the partial images.. Such a posteriori processing procedures are able to reveal all the most important details of concealed objects.

As it was above-mentioned, an electronic or optical control allows varying various physical properties of the dispersed radiation 8, for example, of statistical character and such as a degree of spatial coherence. The dispersing elements 10, 11 of the diffuser 7 may be dynamically (in real scale) arranged into groups ( by means of variation encoding-modulation parameters of the elements without any changes of decoding (e.g. demodulating units) units of the imaging system in such a manner, that the radiation, dispersed by each of such a cluster, will be characterized by own (dynamically varied) value of angle of impinging (incident) onto the observed object. Each such a cluster obtains its own code in such a manner, that the radiation, dispersed by such a cluster after its interaction with the object, may be individually decoded out of the composite radiation of the composite source on a side of receiving means of the imaging system (at time of receiving).

The diffuser 7 directs a radiation on the object 9. Besides, the object is positioned in field of view of focusing element (lens) 14, by means of which the radiation 15, dispersed by various portions of the object 9, is focused (forming the object image) in an area of position of receiving device (further it is designated as an "RD") on the corresponding receiving elements 17, 18, 19 (if they represent themselves a immovable multi-element receiving array), or in those spatial points 17, 18, 19, which are periodically scanned by one or some receiving elements of this receiving device.

Characteristics of radiation 15, reflected, dispersed or absorbed by the object, depends on differences in material, surface, texture and volume of the object 9. If the object is homogeneous one, then the radiation 8 may be dispersed by various portions of the object 9 by means of various way. For example, if the object includes plane metallic portions, the dispersed radiation 15 will include both the mirror and diffusion components, from which the mirror render a destructive action on a quality of formed images.

In general case a receiving portion of the receiving device (RD) represents by itself an array of MMW/SMMW antenna receivers, each of which is associated with an individual channel of transforming, amplifying and partial of whole decoding of received signals. The antenna receiver is understood in that sense, that this receiver transforms a signal of electromagnetic radiation into a signal of electric currents, induced on its conducting elements. Besides, this antenna receiver may be both in the form of a classic antenna receiver, when it transforms a signal of radiation into its current form without of variation a frequency contents of this signal (in other words, without of variation of the signal structure and carrier - frequency (frequencies),and in the form of antenna receiver, in terminals of which there is mounted a non-linear element (for example, a diode with a Schottky's barrier -DSB), realizing a non-linear transformation of said (current) signal and separating its envelope (in this case this non-linear element plays a role of amplitude detector of input signal). If onto such an antenna-linked non-linear element it is quasi- carrier optically applied on a par with the input signal additionally an oscillator signal in consequence of non-linear transformation of corresponding induced currents on the antenna by such an element, it is separated a signal of intermediate frequency, and such an antenna-linked-non-linear element plays a role oh input mixer. Thus, the amplitude detection or even heterodyning of input signals of MMW/SMMW is realized immediately on such an antenna elements without additional rectifying or mixing radio-technical units with the transformation of the input signal into the electrical signal of the intermediate frequency or signal of the envelope, which may be further processed in sequential electronic units for a decoding and separation of information about an object from corresponding encoded components of these signals.

Complete two-dimensional set (matrix) of said multi-component signals, forming a corresponding matrix of pixel signal of an obtained multi-parameter MMW/SMMW image in this case may be obtained also in consequence of spatial scanning one-element antenna receiving element (or of other limited quantity of ones) in a plane of focusing of the corresponding imaging system focusing means, In this case a set of independent (encoded) signals and their contributions in any pixel (picture element or element of image) of correspondent partial matrix image for such a scanned imaging system is determined by composition of radiation signal (consisting from correspondent encoded and generally feature-varied radiation components), received by the correspondent antenna element in the corresponding spatial point of scanning. Besides, such a radiation will enter in antenna element from that portion of observation zone, on which this antenna element "looks" (is quasi-optically aligned by means of focusing element) from said spatial point, a characteristic size of said portion of a space will be determined in the given case by means of sizes of aperture of the corresponding focusing element (lens, mirror and so on). A size of the input aperture of the focusing element is greater, its spatial resolution is higher and said side of the space, resolved by it, is less. It is clearly that said two-dimensional spatial set of multi-component (which may be named as a N multi-parameter image, wherein the number N is a quantity of distinctly encoded/ and further decoded components in each of said signals) may be hardware separated or software separate into analogous two-dimensional spatial sets, comprising only similarly encoded/decoded components. Such sets are in essence partial one-parameter (exhibiting a particular value or set of values of radiation component features) images, simultaneously registered by means of system, wherein each parameter responses on that physical feature and its value, by which a radiation is characterized of illumination, encoded by distinctive way in the above-described system.

The above-said multi-parameter formation of images relates naturally also to a case of the usage of non-scanned two-dimensional receiving arrays. In this case it is possible an obtainment of multi-parameter "instantaneous scene", and it is importantly for imaging of fast moving object. Besides, it is importantly to obtain instantaneously a large scope of information, allowing precisely and rapidly to estimate masked objects. The procedure encoding (including modulating of its parameters or features) of partial radiation components means in the embodiment that each of the component is associated with a particular label which allow to identify by decoding distinct decoding (e.g. distinct demodulating) the electrical signal, corresponding to said distinctly encoded component, amongst other such signals in every receiving channel of the receiving means and individually to measure of its averaged intensity or other parameters.

The channels of transforming, amplifying and decoding of signals of the receiving device (means) may have any realization for a provision with a necessary level of amplification of the signals and foe their decoding (including frequency-selective) including realized by scheme of super-heterodyne receiver or even a direct amplification with a sequent amplitude detecting of radiation, amplifying on the bearing frequency.

A polarization array 20 may be additionally positioned between the receiving device RD 16 and an element 14 (lens, mirror and so on), focusing MMW/SMMW radiation, inside a visual field of which it is located the object 9. The polarization array, positioned on the optical of the focusing element for separation of linear-polarized components of the radiation, may be provided with a rotation means, varying its position around the optical axis for an separating both the co- and cross-polarization components (it is also possible an electronic realization of the array, picking out both the component without a mechanical rotation). It will allow fixing any variations in polarization properties of the radiation, reflected from the object. Besides, the object may be illuminated by means of linear-polarized radiation with mutually orthogonal polarizations of independent partial components. It will give additionally an ability to obtain any components of coherent array (or polarization array) for revealing any peculiarities of the radiation depolarization by the object.

A second such a polarization array 2 may be positioned before the diffuser 7 only for a separation of the components with the linear polarization out of the radiation, dispersed by the diffuser.

Information about the partial images, obtained after decoding of RD 16 signals, is directed onto a processor 22, which processes the information in order to create a visible synthesized image or a set of visible synthesized images as a result of processing partial images and/or their combining (or combining of their fragments). A decoding of the signals may be also realized by own processor. A visible image (images) is (are) directed onto a display 23. The images are digitized and are loaded into a computer memory, and it determines digital numerical capabilities of processing of such images.

It is possible an embodiment, in accordance with which the processor 22 is also connected to the source 2 and/or the diffuser 7. Such a feedback may be used in order to control operations of the source 2 and/or the diffuser 7 in combination with principles of encoding of spectral and polarization information in the source 2 and/or angular and/or polarization information by the diffuser 7. It may be realized, in particular, in order to obtain a minimal necessary level in a zone of the observation independently for each partial radiation, and it provides with a minimal possible level of the observed object backlighting power. A control response may be also rendered on the diffuser in order to minimize mirror reflections of radiation from the object in a real time in a process of imaging.

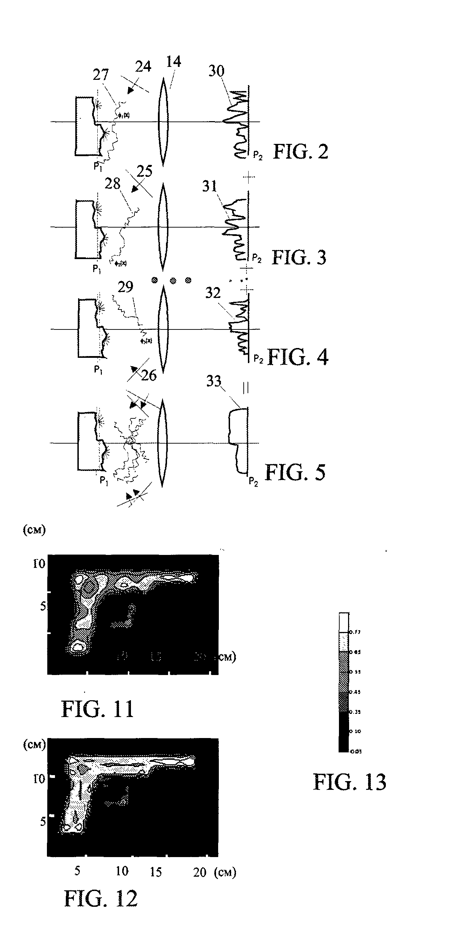

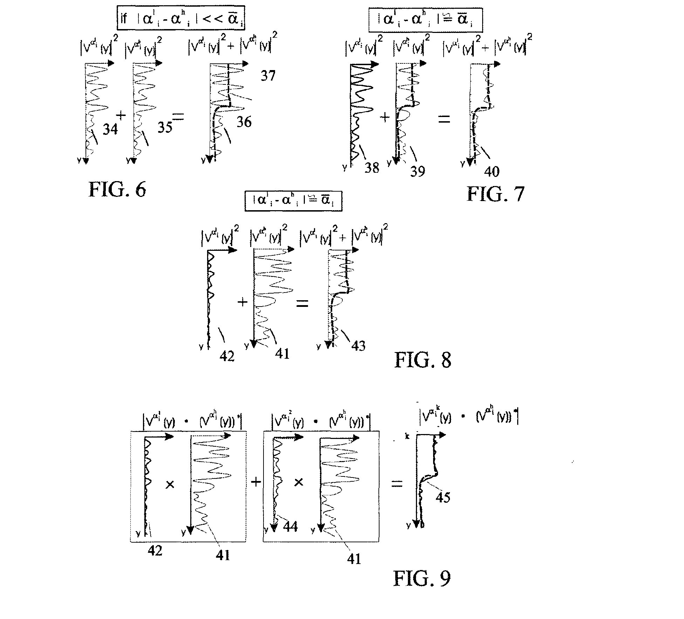

A deletion or at least minimization of distortion in images, obtained by means of radiation, possessing of a high coherence, by which all the artificial sources of MMW/SMMW radiation are practically characterized, may be realized by means of creation (generation) of numerous statistically independent partial images for various values of physical features of the partial images (components), them forming, with a sequential generation of resultant image in consequence of their set processing. One of effective methods of such a processing is an additive summation of energies of such images (possible with a various relative contribution of each of partial images or their fragments) for a formation of the resultant image of improved quality. As such a distinctive radiation feature it may be an angle of the partial radiation incidence on the object surface while saving unchangeable other physical features of these partial radiations or, in other words, of these radiation components. As another such a physical feature it may be a carrier frequency of radiation components (the angles of the radiation components in such a case may be the same as, by the way, also the other physical features of these radiation components may be unchangeable as well). These partial images are represented in Figures 2-5. Regular wave fronts of said partial components are represented as 24, 25, 26 before their interaction with the object surface. Their destructed fronts, obtained after the lasts interaction with the object rough surface, are represented as curves 27, 28, 29 (Figures 2-4). Curves 30, 31, 32 (Figures 2-4) relate to corresponding partial images, formed by the fronts 27, 28, 29 in a plane of the receiving device 16 by means of the focusing element 14. A summation of various partial images 30, 31, 32 by means of their energy accumulation in each of corresponding elements (pixels) of said images during a time of exposition allows to obtain improved sum images of the object 9, one of which is represented by a curve 33 in Figure 5 upon a realization of said procedures of summation it should be considered that the partial images may be practically spatially similar ones (practically the same ones), if corresponding radiations, forming them, have closely the same values of distinctive radiation features $a^h_i$ (wherein **i** - index, showing what physical feature is varied, for example, if i=1, a frequency is varied, but if i=2, an angle of backlighting by a point source is varied; h - index characterizing a value of this feature, for example, for the frequency of 94 GHz this set i=1 and h=1, for the frequency of 95 GHz this set i=1 and i = 2 and so on). In Figure 6 there are shown curves 34 and 35 of such partial images, values of physical features of which are closely to $\alpha^h_i \approx \alpha^l_i$ (for example, the frequencies are closely the same ones (in case of variation of radiation frequency as the radiation features), or angles of backlighting (illuminating) are closely the same ones (in case of the illuminating angle variation). Their summation image 36 practically repeats initial partial images and possesses the same a low quality and correspondingly is not similar to a required "ideal" image 37. In Figure 7 there are shown partial images 38, 39 values of physical features of which are different from one another by a value $\bar{\alpha}_i$, i.e. $\alpha^h_i - \alpha^l_i \approx \bar{\alpha}_i$, upon which these images for the object under observation become statistically distinctive ones. If mediate energies of such images (or their distorted fragments) are the same ones (i.e. there is no an effect of mirror reflection), a summation of such images (or their distorted fragments) results in an obtainment of resultant images of improved quality 40. However, even in case of a satisfaction of condition $\alpha^h_i - \alpha^l_i \approx \bar{\alpha}_i$ in case of mirror reflection of one of partial components a partial image 41, corresponding to its, preferably will be more bright and correspondingly with more average energy (or energy of part of the fragments, comprising the mirror reflections) in comparison with the partial image of diffusely reflected radiation 42, besides, their sum image will repeat a mirror reflection 41 in spate of the presence of other diffusive images in general sum. It is understood that in case of a separate receiving of partial images their summation should be realized with various weights for an obtainment qualitatively sum image of type 40. In this case a system allows realizing a transformation of sum "mirror" (i.e. comprising a prevailing mirror component in all or a part of pixels-fragments) images of bad quality into sum diffusive images of improved quality, and it was not obtainable formerly.

Another but technically more complicate realizable way consists in a creation of multiplicative images in accordance with Figure 9, energy of which in each pixel is proportional to a square of module from a product of amplitudes of two various partial images. A dynamic range of such multiplicative images will be practically the same. Besides, if diffusion images in corresponding products are different 42, 44, the corresponding multiplicative images will be also different and their summation also results in the resultant image 45 of good quality. Such an approach may decrease significantly requirements to a dynamic range of receiving apparatus, besides, it is of course required a corresponding technical realization of separation such multiplicative signals or their sums. In order to obtain a multiplicative different-frequency image it is possible to illuminate the object equally by two sources, the frequencies of which differ by a frequency shift, but a mediate frequency is swept. Besides, a frequency of shift may be stabilized under hardware control by means of synchronous phasing with a phase of stabilized reference signal by means of phase-lock loop circuit diagram, an error signal of which is feed on a control electrode of one of such a source (VCO). (One of realizations will be shown below). On a receiving side after an amplification of such a doublet spectral signal its difference signal (corresponding to a multiplying of amplitudes of this doublet spectral components, which may be easy realized by means of corresponding non-linear element-diode in the first after amplification (which may include also a like frequency shift both the spectral components of the doublet in consequence of heterodyning) cascades in an amplitude detector) will correspond with a considered multiplicative image in a corresponding its pixel, received by said antenna. The difference of frequencies of the doublet spectral components may be regulated, and it allows determining an optimal difference in frequencies for the partial images. Another ability in a realization of the multiplicative images will be discussed further in view of the realization of modulated diffuser. In this case varied physical features will be an angle of the object backlighting (illumination) by means of radiation, primarily dispersed (scattered) by means of point disperser (scatterer) - diffuser element (cell).

A widening of effective frequency band of an illuminating radiation results in an increased number of spectrally distinctive, but then statically independent speckles of images. All it leads to a decrease of the image time coherence. Within limits of the present system it is possible the usage both the analogous or optically-similar integration of signals of partial images and digital (including weighted) summation of partial statically independent images.

As it was mentioned, one of the physical features of the backlighting (illuminating) radiation is its frequency.

As a multi-frequency source it is understood a source, which emits a radiation at least at two various frequencies. Spectrally distinctive partial images may be created only upon using a radiation, consisting of at least two essentially distinctive spectral ranges. It is essential, since wave fronts of radiation for components, having spectra approximately with the same spectral content, will be transformed by the object 9 and will be projected then by the lens 14 on the RD 16 by similar way, and it results practically in the same partial images, which do not give an improved image upon their summation, and inversely ordinary some distinctive partial images are sufficient in order to obtain an image of improved quality in consequence of their summation.

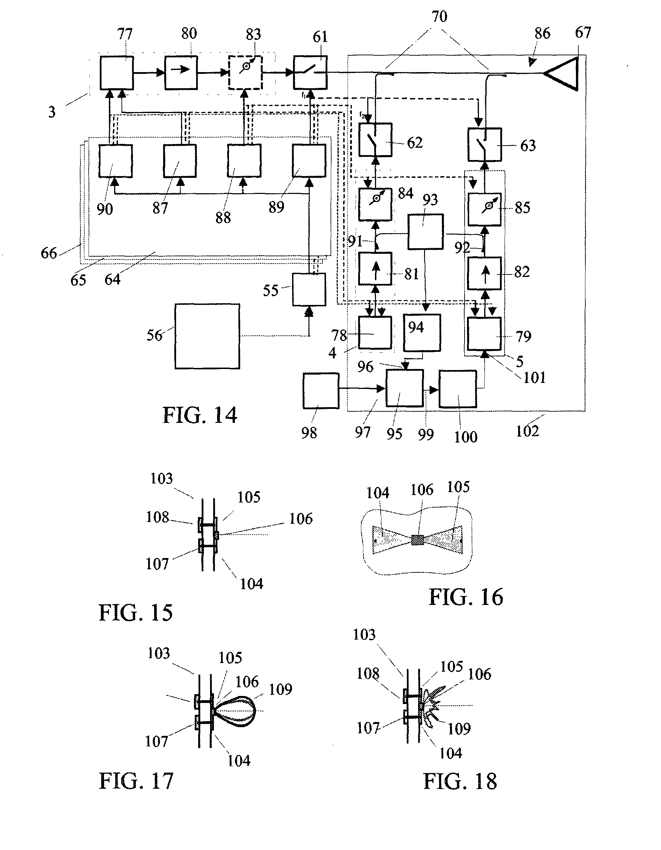

For a demonstration of practical influence of the above-described procedures of the summation of the partial images on a capabilities of identification of the objects in Figures 11 - 13 there are represented results of numerical simulation of the object (pistol), having outer likeness of shape and character sizes of details with such typical objects, for an observation of which systems for imaging in the millimeter range are mainly worked out. Upon the simulation there were removed all factors, that are capable to induce speckle-structure in images, in order to demonstrate a destructive influence only Gibbs oscillations and capabilities of their action overcoming. In the millimeter range in contrast to an optical range the spatial Gibbs effect, conditioned by a scantiness of passing band for spatial frequencies by a focusing element, is capable seriously distort the obtained images. In Figure 11 there is represented a distribution of intensity, accumulated during a time of exposition in an one-frequency spatially coherent image for the frequency of 70 GHz. (It is supposed that the wave front impinges on the object surface normally, and besides various portions of the object are quasi-plane ones). This image is distorted by means of irremovable oscillations of the intensity, which are typical for the Gibbs effect and essentially distort its quality, besides, a character of distribution of brightness specks in Figure 11 corresponds to a structure of specks in images of real pistols, which are experimentally obtained and have a bad quality. However an image, which is synthesized (or even combines) by means of accumulation of partial images, independently obtained for five frequencies 68,76,84,92 and 100 (see Figure 12) makes such a five-frequency image possessing of essentially improved quality, increasing simultaneously its information content, that is sufficient for the object recognizing, having a single meaning. In Figure 13 there is represented a scale of gradations for a single level in corresponding elements of the images, shown in Figures 11 and 12.

But a simple decreasing of number of frequencies is not capable to improve automatically a quality of image The Gibbs effect appears, when spatial frequencies in the image of the object exceed a band of passing spatial frequencies upon imaging. It is stated that preferable frequency step equals to N = 3 - 15 GHz and more. Further decreasing of the frequency step will result in a summation of practically the same distributions in the intensity of partial images and in increasing of signal absolute value, but not in essential limiting of oscillation limitations.

A frequency interval for an effective decrease of speckles in image, as it is known, is determined by a depth of heterogeneity of the object surface, and also it preferably makes up a value of 3 - 15 GHz and more.

There are below represented various embodiments of the multi-frequency source 2. Besides, the multi-frequency source may be represented in the form of partial independent sources, having fixed narrow-band spectral lines of radiation. They may be waveguide or monolithic (carried out in accordance with integral technology) embodiment of Gunn's diode or avalanche transit-time diodes (ATTD), a frequency of which may be any practically in a wide portion of the MM range. If outputs of these sources, as in other also any other, are loaded by frequency multipliers, which divisible increase frequencies of radiation (with certain losses of transformation), the range or overlapped frequencies by such combined sources, extends to the upper limit of CMM range. Such generators may be combined in such a manner, that the lines of their combined radiation (by means of output antenna of the same emitted radiations in free space) may be consisting of both the one spectral component (singlet) and two narrow spectral components (doublets) and also several components (multiplets). The difference signals of components doublets (multiplets) may be phase-synchronized by means of signal of support frequency-stabilized source(s), and it is important for a provision of high sensibility and high dynamical range of the receiving device of imaging system.

Depending on a realization of sources-oscillators the radiations of partial sources may be distinctively encoded (by means of modulating by amplitude or phase modulation). When the various partial sources are encoded, their radiation may be easy identified and the receiving side.

A spectral width of the lines may be sufficient wide, if there are used noise oscillators as partial sources.

A multi-frequency source may be designed as a source of swept (varied with respect to a frequency) radiation or as their combination, swept in the same ranges (a doublet embodiment) or in various ranges. Their hardware realization may be in the form of lamps of backward wave (LBW), lamp of running wave (LRW), FYG oscillators (based on the usage of films on the iron-yttrium garnet), outputs of which are loaded by the frequency multipliers. The ranges of tunable frequencies in these cases may attain to tens of gigahertz.

It should be analyzed separately an effectiveness of said "noise" sources of radiation. In a number of cases Their "noisiness" in the limits of 1-15 GHz for the effectiveness of imaging systems may be insufficient (from this standpoint they may be quite considered as quasi-monochromatic sources). However, such sources may represent an interest, if for a formation of images it will be used industrial standards of imaging of MM images in the form of MM chamber, input cascades of which have a wide band of operational frequencies, and they are not modified for receiving narrow band or phase-stabilized paired doublet signals.

Such chambers, as a rule, is worked out for a receiving a passive radiation and they excellently operate in open space under condition of high MM intensity temperature T, when the objects are contrast illuminated from above and from a side of upper semi-sphere by means of "cool" sky at T=70K and from below from a side of "warm Earth's surface" at T=300K. Owing to fundamental laws on thermodynamic balance of radiation in closed systems, in accordance of which MM intensity contrast of observed zone in closed rooms is insufficiently high for them, they would not be used effectively inside of rooms (wherein all the procedures of inspection properly occurs). In this case such MM-chambers may be used effectively, if the spatial coherence of radiation of noise sources is preliminarily destructed by the diffusers, various realizations of which are below described. As it follows from the above-adduced information a width of band of operational frequencies of solid-state noise sources, which does not exceed 1-5 GHz, is insufficient for an improvement of quality of images owing to a multi-frequency. If there are used vacuum super wide band noise sources (with a width of 10 - 20 GHz and over), in them separate spectral bands are not independently controlled, therefore there are beyond a registration and correction peculiarities of distribution in open space and diffuser dispersion, an absorption in the object and reflection by it as well as a receiving by receiving array separate components in various spectral ranges, and it narrows the capabilities of such a system. Besides the effect of the mirror reflection of this radiation from the object may whittle a broadbandness of radiation that illuminates the object.

In this case it will be a preliminary dissipation of broadband signal by means of diffuser, destructing its spatial coherence, besides, various and differently AM modulated beams of such a radiation should preferably illuminate various spatial portions of such a diffuser. It provides with a selectivity of receiving device with respect to mirror object reflections of the radiation, dispersed by mans of various portions of said diffuser. Besides, if a band of operation frequencies is sufficient high, it may be used said illuminating beams, characterized by means of spectra, which are localized in various spectral sub-ranges(and corresponding generators), positioning inside of this band. Besides, a radiation in such beams should be distinctively AM modulated, for example, by means of broadband pin-modulators. In this case parameters of the radiation are optimized both for the effective using of amplifying portion of the receiving device in order to improve its sensibility and for a provision of spectral and spatial selectivity with respect to the radiation, illuminating the object, in order to form images of improved visual quality.

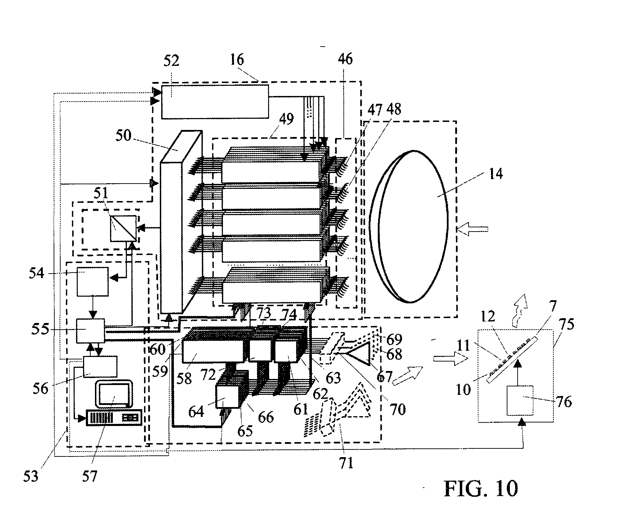

A generalized diagram of adaptive MMW/SMMW system with a broad-zone multi-frequency source with a controlled level of intensity and spectral content of composite radiation is shown in Figure 10.

Five principle sub-systems may be separated from each other in a loop of feedback of a self-adapting system of imaging:

> 1) the wide-band focusing element (FE) (e.g. lens) 14, intended for the focusing MMW/SMMW images in its focusing plane;
> 2) the receiving device 16, including:

> > a) a receiving array 46 (the two-dimensional immovable array, or, for example, a scanned line), intended for an obtainment by its elements 47, 48 spatial sample of signals in formed by the lens 14 MMW/SMMW image and transforming radiations of this partial MMW/SMMW image, received by the elements of the receiving array 46 in the corresponding array of independent electrical signals (features of which will be used for a formation of the corresponding elements of the corresponding (resultant) images);

b) multi-channel unit 49 for amplification, frequency transforming and decoding (demodulating) partial or complete signals, received by said receiving array (each element of array 47, 48 has own said channel, forming the corresponding receiving element 17,18 of the RD 16) and their transforming into the digital form by means of electrically connected to it;

c) unit 50 of multiplexers, which is electrically connected to

d) unit 51 of analog-digital converters;

e) unit 52 of oscillators-heterodynes, generating heterodyne signals for frequency shift downwardly of received signals into bands of amplification of corresponding controlling frequencies in a multi-channel unit 49 (if such a frequency transformation is necessary);

3) unit 53 for control of various nodes, which are parts of various units of system, and also for digital processing and visualization of array partial images, formed by the unit 49, carrying out functions of numerical processing of the corresponding two-dimensional signals, which, in turn, consists of pre-processor 54 (fulfilling a preliminary processing of the images, received by the RD 16), interface unit 55 (providing with a transferring signals between various nodes of the system), center processor unit 56(controlling a functioning all the system in whole) and unit 56 with a monitor 57 for processing, forming and visual displaying of resultant images;

4) unit 2 of radiation sources 3, 4, 5, each of which consists of separate radiation oscillators 58, 59, 60, each of which is provided with own radiation (AN/PM/FM) modulating node 61, 62, 63(an output each of the oscillators 58,59,60 is linked with an input of the corresponding modulators 61, 62, 63),besides, each of the modulators is controlled by means of corresponding control node 64,65,66.

Each generator has either own antenna system 67, 68, 69 for directing the generated radiation in a free space, or a general antennae system 67 (in case of waveguide embodiment), in this case the signals of the generators are united in one general waveguide, connected to said antenna system by means of unit 70 of guided couplers, besides, a one part of antennae systems 67 - 69 may illuminates the diffuser 7, but another part 71 illuminates immediately an area of observation. In this realization it is essential that each radiation source 3, 4, 5 may be provided with own attenuator 72, 73, 74, included, for example, in each channel of the source in series between the oscillator 58, 59, 60 of this channel and its modulator 61, 62, 63. Furthermore, an output of the generator (for example, reference number 58) of each source 4 is linked with an input of own attenuator 72, an output of which is linked in series with an input of the corresponding modulator 61. Besides, each attenuator 72 (as well as attenuators 73,74) is positioned under control of the corresponding control node 64 (65, 66) of the corresponding channel 4 (ref. numbers 5, 6), besides, the control node 64 (65, 66) controls not only the attenuator 72 (73, 74), but also and the modulator 61 (62), and properly the oscillator 58, (59, 60) (for example, in case or necessity of sweeping the lasts with respect to a frequency and so on).

It allows to control a level of radiation power of the corresponding oscillators 58, 58, 60 partly or completely spectrum of its radiation and modulation characteristics of the modulating node 61, 62, 63 and a radiation power of the corresponding source of the radiation, getting in a free space through the corresponding antenna 67, 68, 69, which is regulated by the corresponding attenuator 72, 73, 74, (so that a level of the radiation is controlled on the base of information, obtained from an analysis of partial images by the units 53, 56 in accordance with the selected criterion),

5) unit 75 of electronically controlled diffuser, which may consist of own diffuser 7 and control node 76 with independent elements of diffuser 10, 11, 12, if the diffuser is realized with a capability of its control by the elements. (In another embodiment the elements 10, 11, 12 of the diffuser 7 may be controlled immediately by the processor 56).

In case of another embodiment of the source a feedback will comprise other sub-systems, corresponding to a functional destination of such a source with an optimal construction for their characteristics.

In particular, a heterodyne source 54 and radiation sources 3, 4, 5 (more exactly, their oscillators 58, 59, 60) may be connected to each other by phase-lock loops (as it will be shown below), providing with a mutual spectral shift (a frequency of their different signal) of their signals by a value, corresponding to a intermediate frequency of corresponding control frequencies of an amplification channel of the unit 49, but their difference signals are synchronously - phased by means of harmonic signal(s) of high-stabilized source(s). It provides with a high frequency stability and a spectral purity of the intermediate frequency signal, arising at a shift of a useful signal, received by the corresponding receiving element 46, and with a signal of the heterodyne 52, stabilized by means of phase-lock loop. It, in turns, allows realizing a narrowband filtering of the signal, already beginning from a cascade of the phase-lock loop, providing with a rejecting of noises and significantly increasing a sensibility and dynamic range of the RD 16 of system in whole.

A broadband spectrally controlled source of the MMW/SMMW imaging includes at least two partial sources of MMW/SMMW radiation with an essentially distinctive spectral composition of emitted radiation (or only with central frequencies) or with at least one source, but it is frequency-swept in sufficiently wide spectral range. It is more preferable a source construction, in which various spectral components are emitted essentially from the same spatial point 9 (a phase center) or from points, which are near to each other. For a waveguide realization the same horn may be used for a radiation of all the spectral components. In this case, however, each frequency channel should be isolated from one another in order to exclude a mutual influence.

In order to resolve this problem there is used a set of waveguide directional couplers. A width of spectrum, radiated by means of horn, will be restricted by means of a passage of corresponding waveguide system. If it is necessary more wideband radiation, a source should include a limited quantity of point-similar horns, which are frequency distinctive ones and have own set of partial sources for each horn. In case of integrated realization of the partial sources the set of directional couplers is not necessary. Each partial source includes an individual radiating antenna (horn), which is integrally linked with the source 2.

Figure 10 shows a general block-diagram of self-adapting system and it is intended only for a demonstration of one of sufficiently general realization of a functional device. As it was above-mentioned, in the system each of the partial radiation sources 3, 4, 5, of the radiation source unit 2 may have an independent control, since the control node (driver) 64, 65, 66 for each of corresponding generator controls also the corresponding modulation node 61, 62, 63 of these oscillators and own oscillators (which may have any nature of embodiment (fixed with respect to a frequency, swept with respect to a frequency, noise ones and so on), and also their attenuators 72, 73, 74, besides, it has a specified electrical connection with the interface node 55 and correspondingly with the processor 56. An interconnection of the feedback mechanism allows providing with an ability of determination an optimal spectral distribution of multi-frequency MMW/SMMW source for each determined object and for a corresponding environment.

A control of average intensity (or other characteristic of the intensity) for each partial image (including images, which essentially differ by a frequency) by means of circuit of the feedback allows to determine the optimal spectral distribution in all the spectral ranges of the source in scale of real time. The offered approach is capable to take into consideration any frequency dependence for a propagation, permeation, reflection, adsorption and detection (mixing) of radiation signals in order to obtain an image of the best quality.

A multi-frequency approach may be successfully realized, if it is used RD, that is sensible to a radiation in all the spectral range of the used source, and quasi-optical elements, used for imaging, are also broadband ones.

In most cases an average of the intensity signals along all the set of pixels of each partial image is necessary in order to use correctly the intensity signals in order to estimate a correct level of the intensity in such an image. It takes a place owing to a speckle structure, that presents in each partial image, and in consequence of this fact a value of the intensity in one any pixel of such an image (or in their small quantity) can not be representative one.

In general case, at first the partial images should be formed by the focusing element 14, received and transformed into the form of array of electrical signals, separately amplified, decoded by the unit 49 and transformed into the digital form by means of units 50, 51 of the receiving device 16, then they should be processed by the unit 53 and only after that step an information may be used for a calibration of radiation sources of the unit 2 of sources and for control the diffuser 7. Such a calibration should be repeated in accordance with varied conditions of the reflection and adsorption for the observed object.

The calibration of the intensity of sources (and the diffuser) may be carried out by means of different ways. For example, various spectral sub-ranges (radiated by separate partial sources) may individually regulated sequentially in time. A sequence of operations of a system calibration method will be described with a reference to Figure 10 combined with Figure 1.

A quasi-monochromatic radiation of each of partial sources of the MMW/SMMW radiation 2 are selected under condition that they will easy detected by a receiving side. This condition consists in the amplitude or frequency modulation of carrier frequency, probably, in combination with a doublet realization of the spectral composition of radiation. This radiation is directed either onto the object 9 by means of antenna system 71, or initially onto the diffuser 7 and after then it is dispersed by means of the antenna system 67, 68, 69 into the direction of the object 9. The radiation, reflected and dispersed by the object 9, then is formed in the form of this object 9 image by means of the focusing element 14 on the receive array 46 of the receiving device 16. Each antenna element 47, 48 of the receiving array 46 works out the corresponding first electrical signal, and in general case each such a signal consists of set of composite differently encoded partial signals, corresponding to partial radiations of said partial sources 3, 4, 5 (dissipated in a number of realizations by the diffuser 7, carrying out an additional encoding of the radiation, which then should be demodulated (decoded) by corresponding demodulating circuit diagrams of the unit 16 after a corresponding amplification and processing. So procedures encoding of multiple radiation components allows separating ones at receiving side by their decoding so to identify value of correspondent radiation feature and to measure intensity of the radiation component (or other its parameter).

In process of the amplification and processing the corresponding signal, received by the separate receiving element 46 in the RD 16 may be mixed with the signal of heterodyne 52 of unit of the heterodynes, having a frequency, practically coinciding with a frequency of the corresponding spectral sub-range of the signal, and it takes a place (if a principle of heterodyning is used in the receiving circuit diagram of amplification channels). Further the signal may be amplified by means of control frequency of the unit 16 cascades, it may pass the step of secondary heterodyning (if necessary, its parallelism may be deleted (by means of frequency-selective circuits various partial signals have various spectral localization) on inputs of circuits of decoding devices (PM, FM, AM demodulators of decoders of another type), signals out oh output of which may be directed into inputs of electronic circuit diagram, separating an envelope of decoded signals (the simplest resolution of problem is the usage of amplitude detectors, normally realizing a non-linear transformation in order to separate the envelope of the transformed signal) and by sequential filers of low frequency or other integrators of the envelope energy (which is proportional to an energy of the signal, received by the antenna 47 and decoded by the corresponding decoder. Said integrators should have a corresponding time of the energy accumulation (in particular, the time of the accumulation naturally should be more than a time of the most long time of mutual phase deviation of components, which are a part of the signal, received by antenna, and which are passed through the corresponding independent decoding circuit). Such components may appear in the signal in consequence of a destruction of spatial coherence by the diffuser 7 on the base of incidental, incidental-distinctive or distinctive modulation of various spatial portion of the dispersing diffuser 10, 11, 12. An summation of such components my means of said signal integrator allows by analogous way in common accumulate the energies of these components, which are proportional to an energy of corresponding radiation components, suppressing simultaneously any interferential signals by means of their averaging in time. Thus, the output signal of the integrator will be proportional to that group of components of radiation, received by the considered antenna, which turn out the same decoded ones. If a discrimination of decoding device is variable, for example, by means of width variation and a variation of center frequency of corresponding band-pass filters in a frequency depended decoders, the output signal of the integrator will be proportional to a total energy of greater or smaller group encoded (including distinctly) components, totally hitting in a band of such a decoder. Besides, it is realized an analogous accumulation of energy of both the phase-incidental and equally-encoded components and the components, encoded by various way (which also may be additionally by accidently-phase-modulated), but which are equally decoded by the given receiver. A number of independent decoders in each channel of signal amplification and processing, associated with the given antenna in considered case determines a quantity of possible independent partial images, each element of each of which is proportional to an energy of said equally decoded radiation components, occurring in the given antenna in the considered interval, associated by means of the focusing element with the corresponding spatial dispersing a radiation portion of the observed object or the area of observation. If, for example, there is a portion of surface of the dispersing diffuser corresponds to said radiation components, equally decoded, and is associated with them, the elements of corresponding partial image will be responsible for the image, obtained upon an illumination of the object or area of observation by means of spatially non-coherent radiation (naturally with a corresponding frequency and polarization) disposed and having spatial sizes, equal to sizes and a position of a corresponding portion of the diffuser. The last condition determines a mediate angle of impinging of the spatially non-coherent radiation components on the object, illuminated by them, which are a part of equally decode signal. The last condition is very important upon a reveal of flashing components of a radiation, dispersed by the object, for sequential their removal or for a proportional decrease for equalization with the components, reflected the same portion of the object, but at other angles of illumination. The is possible a technical realization, at which all the independently encoded components (being even independently encoded for all the spatially small portions of the dispersing diffuser, determining a radius of spatial coherence) may be independently decoded, and corresponding numerous partial images may be obtained and, for example, loaded into a memory of digital means in order to their weighted summation by digital way. However, partial images, obtained for radiation components, dispersed nearly positioned dispersing portions of the diffuser will be physically and practically equivalent ones (their speckle structures will be the same ones), and it leas to a deletion of their speckle structure upon their summation. In this case too much number of the partial images will lead to unjustified usage of system resources (hardware, temporal and so on), and said regulation of a discrimination of decoders is capable to optimize the system with respect to its effectiveness and cost. It is also understood that upon a complete or partial accumulation of signals of possible partial images a signal amplified after an amplitude detector an comprising several groups of partial signals, should pass the step of filtering in order to accumulate the energy of signals of partial images and the step of excluding of all the inter-modulation products. In case of partial analogous accumulation of the signals of the partial images, the signals only of that part of the partial images, which are subjected to the analogous accumulation, should be directed onto the amplitude detector and integrator. It may be realized (as it was mentioned), for example, by means of band filtration of these signals by virtue of a difference in their modulation frequencies or by any other way.

If there is used a swept radiation source, a time of accumulation-integration of signal, obtained in various instant time, for which the swept sources are characterized by varied physical features of radiations, generated by them, should be at least more or should be equal to a maximal time of radiation sweep by value of the correspondent physical radiation feature. In case, when a physical radiation feature is the carrier frequency of the radiation, it should me more than time of frequency sweep and reciprocal quantity from a minimal frequency interval between nearest spectral components, which is present in general spectrum of the emitted radiation. Besides, if at least two swept generators are simultaneously used, their radiation should be independently encoded. If finally an analog-digital converter is used for digitizing signals from output of said stage (integrator) of said receiving unit to be loaded in digital memory It appears simple possibility for time demultiplexing of the signals corresponding to the same encoded radiation component but which exhibits different values of radiation physical features in different instances when the features are scanned in time, by digital processing means (processor) being programmed in such a way to extract independently (to independently receive) the correspondent signals because the ADC will sample the signal sequentially in time and correspondent secondary signals corresponding to different values of the features may be separated by correspondent processing procedure. The correspondent partial images independently for each selected value of the radiation feature for all the range of scanning will be received independently, therewith said integrator should be optimized for the receiving only the signals, encoded independently, without taking into account an effect of summation of partial images for various values of swept radiation feature.

In general case the signals from output of said integrating filters are keyed into the input of a corresponding analog-digital converter (ADC) of unit ADC 51 by means of the unit 55 of multiplexers (or each integrator has own ADC) and then after a digital transformation further is processed correspondingly by means of the pre- 54 an main processor 56.

In case, when the unit 16 completely realizes the step of decoding of signals, entering in composition of each of signals, received by the receiving elements 47, 48 of the array 46, then a two-dimensional array with a dimensionality, which is equal to the dimensionality of the receiving array 46, and the elements of this array are filled by secondary signals to form the corresponding partial image. Said secondary signals equally decoded and exhibiting the same set of current values of the correspondent radiation features of the correspondent received radiation component (or that is equivalently, by their information-significant parameters, for example, by a value of average spectral density or in more general form, by an integral power of the decode signal) separated out of the corresponding received signal associated with the corresponding receiving element like 47 by its decoding (demodulation) and time demultiplexing (demultiplexing is used if the radiation feature is scanned). Besides, other such arrays, comprising equally decoded signals, but of other value of corresponding code (or a parameter of modulation) and/ or distinct set of the same correspondent values of correspondent radiation features will form other partial images.

It is understood that a frequency decoding and demultiplexing (in case of frequency encoding of radiation components) may be realized also wholly in the digital form by means of realization the digital fast Fourier transformation (FFT) over corresponding digitized outputs temporal signal (comprising frequency encoded components), transformed into the digital form by means of the corresponding ADC of the ADC unit 51 and further processed.

An algorithm of self-adaptation of system for decreasing a level of backlighting and adaptive suppression a part or all the mirror reflections of the object is worked out in such a manner that to calculate a mediate value of energy of partial image or other statistical value with respect to all the elements (or required fragments) of formed partial images and on the base of this information to regulate the system units. Repeating said procedure for each of the partial source 3, 4, 5 of the unit 2, a multi-frequency source is regulated with respect all the range of the frequencies, used in the given application, besides, there are revealed those individually modulated and regulate elements 10, 11, 12 of the diffuser 7, the dispersed radiation by which causes mirror flashes in the partial image after a reflection from the corresponding portions of the object 9. This method is a calibration method of sequential type. Here factors of weighting (a coefficient of regulation a power of the partial source 3, 4, 5 by means of the attenuators 72, 73, 74) are created for each of the frequency ranges, besides, there are created sets of information for the regulation of said elements of the diffuser in the same spectral ranges. These factors of weighting and said sets may be further immediately directed into the control nodes 64, 65, 66 in order to regulate an intensity of each source radiation. The intensity of each source may be supported constant one, but a factor of the weighting and the corresponding set for each frequency interval may be used for its usage in software upon a creation of improved image by means of digital methods.

Another method for the system calibration is a method of parallel type. In this case there are simultaneously radiated all the partial sources 3, 4, 5. The partial source for each frequency interval in this case should be distinctly modulated by means of modulated signals, for example, by the signals, generated by the modulation units 61, 62, 63. The signals of the units 64, 65, 66 control each source of the source set 3, 4,5. All the modulated multi-component radiation of the sources is directed either onto the object, or onto the diffuser 7 through the corresponding antenna system 67, 68, 69, then onto the object 9 (see Figure 1). The radiation, reflected and dispersed by the object 9, then is focused on the elements of the receiving array 46 of the unit 16. The simultaneous demodulation of signals of each frequency interval by means of amplification and pre-processing nodes 49 allows revealing statistical information about each of the partial images, and it also leads to the calibration and to the obtainment of the weighting coefficients. Again these coefficients (factors) may be used either in software or by means of a direct usage by the elements 72, 73, 74 and by other elements of the radiation source and the diffuser 7.

Since a principle of improving of image quality consists in a summation of statistically independent speckle images, which comprise determined spatial information about the imaged object, any additional approach in the independent obtainment of such images will complementary provide with further improvement of quality of the resultant images. Such additional partial images may be obtained on the base of peculiarities of a movement of the observed object. It is known that even relatively small variations of orientation of the object 9 surface, which may be geometrically sufficient complicated with respect to an entrance pupil of the focusing element 14, may lead to an essential variation of a distribution of relative phase shifts, originating in wave front of partial radiations, which are dispersed by different portions of this surface (these phase shifts turns out various ones for various spectral ranges, an it increases capabilities of multi-frequency method) that causes variations in the spatial speckle structure of the corresponding partial images.

Since the determined spatial information about the object in slightly reoriented objects will be practically the same, (it is suggested, that a frequency of frames in the imaging system is sufficiently high, that allows to fix small variations the object angle upon a movement of its carrier-individual in the field of view if the imaging system, which is coincidence generally with a field of view its focusing element) and at the same time their speckle structure will by sufficiently different, a set of such images (obtained in accordance with a method of fast changing of frames) is an additional set for a procedure of accumulative improvement of quality of the resultant image. This technique is attractive one, when the system allows to make a recording of numerous frames in process of contraband detecting, owing to the fact, consisting in that an individual-carrier of contraband practically always makes automatic movements by own body, even when stands and particularly in a process of own movement. These movements allow making a set of instantaneous frames of partial images with various speckle distributions for the nearest angles of the observed object. A speed of obtainment of such frames-mages should be sufficiently high one in order to provide with a speed of obtainment of such frames-images should be sufficiently high in order to provide with a "photographing" of even small variations in the object angle. These conditions may be satisfied for SI equipment, wherein the frame speed is more than 1 frame per second.

Any common usage of adaptive in time or in space or disintegrated in the corresponding partial components pf radiation (in case of disintegration both with respect to a wide spatial spectrum and with respect to a wide spectrum of carrier frequencies it may say about a source of "white" radiation) in combination with the above-described multi-frame technique will create a plurality of effects, leading to an improvement of quality of images of the observed objects owing to mutually independent characteristics of the corresponding partial images. An adaptive complex MMW/SMMW radiation of illumination creates images of high visual quality, firstly, owing to that an increased number of statistically independent images may by simultaneously used and, secondly, owing to that their combined usage may realized by means of digital methods on the base of used computer system.

It should be noted that in the declared method it is realized a simple digital summation of partial images, comprising partial radiant components, dispersed by means of spatially different dispersers-elements of the diffuser. In this case information about mutual phases between the wave fronts, responsible for a forming of different partial images, will be naturally lost, as it is required for a spatially-non-coherent illumination. A procedure of summation partial images by means of digital means is equivalent one to a non-coherent accumulation of radiation by means of integrating analogous receiving circuits. Of course, a number and a form of partial images should not be more than necessary for goals of correct detection. A summation of partial images in the above-mentioned procedure may be used both of digital and analogous types simultaneously in that or another degree in accordance with the destinations of particular imaging system.

Since a signal, obtained by each receiving element of the RD 16 (or, in other words, a signal, forming each pixel of such a multi-parameter synthesis combined image) is temporal (varying in time), the dimension of matrix sets, (structure and dimensions of this array will be determined by means of dimensionality of the receiving device 16 receiving array) of such time signals, having a determined final duration (this duration is determined by means of minimal frequency, comprising in such a signal in accordance with the Kotelnikov-Shennon's theorem) will comprise all the information (including a dynamics of the observed object path) about a multi-parameter image of the object, obtained by quasi-optical way. Every signal from the matrix set consists of signal parts each of which associated with different set of values of radiation physical features of source radiation if at least one of the physical features of the composite radiation is time varied. Said signal parts may be extracted from correspondent signal, for example, by demultiplexing with forming correspondent second electrical signals. On the other hand, such matrix set of the signals, by means of time multiplication of said signals of said matrix set into single broad-band communication signal, may be transferred by means of traditional broadband communication systems in any place of location of more powerful computer for fast processing.

In order to send such signals from all the elements of the receiving array, a diagram of the multiplication may be used in such a manner that the signals from various elements of the RD 16 are sent ( are connected into united communication channel in various time intervals (at first the signal of the i-element of the RD, then the signal from the (i+1)-element).

In Figure 14 there is represented a waveguide realization of MMW/SMMW multi-frequency point-like source (all the frequencies are radiated from one phase center) with a controllable spectral density of radiation for a self-adaptive imaging system, operating in scale of real time. Any waveguide partial sources of MM range (back wave tubes, Gunn's diode and so on) may be narrowband with a fixed frequency; swept in narrow range, in wide range, any broadband MMW/SMMW source like noise sources or others and so on) may be used in such a composite source. Each of the partial sources consists of own waveguide realizations (waveguide generators) of oscillators 58, 59, 60 (that in sequential drawings may be mutually replaceable 77 by 58, 78 by 59 and so on, if it is not stipulated that the shown generator has no waveguide realization. Each generator operates on the own frequency or in the own range of frequencies, if it is an voltage -controlled oscillator (VCO), the frequency of which varies upon a variation of the voltage of a controlling supplied to controlling electrode of the VCO. Outputs each of which are waveguide in series (in series by means of waveguide connection) connected to own one-directional rectifier 80, 81, 82, which, in turn, are waveguide in series connected with the radiation attenuator 83, 84, 85 (for example, realized on PIN-diodes), outputs of the partial oscillators 58, 59, 60, which are outputs of the corresponding radiation attenuators 83, 84, 85, are waveguide in series connected to the separate radiation modulator (any of type of modulation, e.g. f AM- amplitude modulation or FM- frequency modulation modulators type) 61, 62, 63, outputs of which are connected to a general waveguide, besides, the directional couplers of the set 70 of the directional couplers are used for some said modulators 62, 63. A general waveguide 86 is connected to a general antenna, through with the signals of the generators 77, 78, 79 are radiated in a free space.

Each partial source 3, 4, 5 has correspondingly own control unit 64, 65, 66, each of which (64) consists of own power sources for oscillators 87, unit 88 for modulation control and unit 89 for radiation attenuation control, if a frequency of the oscillator is swept, it may be additionally used a unit 90 for scanning control, each of which is connected to corresponding inputs of functional units of corresponding partial sources. Control signals into units 87, 88, 89, 90 enter from the center processor 56 via the interface unit 55 (the last unit may include additionally a unit-synchronizer, realizing a general synchronization of operation of all the units of the multi-frequency generator, and if there is no such a generator the same synchronization may be realized by the processor 56).

For simplicity, there is only small number of the partial sources 4, 5, 6, which are shown in Figure 14. It is preferably that this set of sources with distinctly various frequencies and a spectral content would be sufficient one in order to cover all the spectrum of interest, going into a waveguide pass band of used type. In order to replenish a spectrum composition it may be used a similar multi-frequency source, used for a waveguide of other type.

Each oscillator 58, 59, 60 includes the own radiation attenuator 83, 84, 85 in order to regulate separately a radiation intensity (or correspondingly a spectral density) of each partial source.

Each attenuator 83 is controlled by the own control unit 88, which, in turn, is controlled by the processor 56 in accordance with an algorithm of self-adaptive imaging. In case of the usage of partial swept source, which is swept upon a sufficiently broad ranges (which are different for various sources) sweep-generator(s) is (are) connected to a control electrode of the corresponding oscillator 77. Each sweep-oscillator 90 is also controlled by the processor 56.

Each partial oscillator 58, 59, 60 may be switched-off from the general waveguide 86 by means of the own attenuator 83, 84, 85 in order to allow an independent calibration of each channel.

Besides, an intensity of each frequency sub-range may be exactly regulated by means of the same waveguide attenuators 83, 84, 85 (functionally corresponding to the attenuators 72, 73, 74 in Figure 10), each of which is under control of a pre-processor via the own control unit 88. If it is used frequency sweeping node, the mentioned nodes (attenuator, sweeping oscillator and so on) should be controlled by the processor 56 in accordance with the self-adaptive algorithm for the sources of such a type. In this case the corresponding unit-attenuator 83 should be dependent with respect to a time and should be controllable with respect to synchronization with the swept oscillator 77 for a provision with a required regulation of the radiation spectral density all over the broadband range. A maximal width of such a spectrum should not be more than a pass band of the corresponding waveguide. If it is required a radiation with a band broader width, it is necessary to use a set of sources with a corresponding waveguide characteristic.

Partial sources may be united between each other by means of additional controlling circuit diagrams for an additional control of radiated radiation and their mutual spectral frequency. The partial sources, additionally united may be sources of doublet or multi- doublet radiation with separate circuit diagrams of control the frequency shift and mutual phases between components of the doublet/multi- doublet (being doublet-pair of two nearly positioned singlet spectral lines of frequencies, the multi- doublet represents by itself a several of such singlet, which are grouped close by each other in some cluster). Besides, it may be attained a novel quality in a modulation of such doublet signals, stabilization of their difference frequency (as well as a locking in phase of their difference signal (formed by means of mixing signals of the doublet components) with a high stabilized signal of an additional oscillator (for example, crystal oscillator) or its harmonic. The last condition is very important, since the mentioned difference signal will be obtained in a consequence of it in channels of amplification of RD after the first amplitude detection (by any non-linear element-diode) additionally amplified (and perhaps frequency-shifted after heterodyning equally for both the doublet components) doublet signal. And the doublet signal will possess of higher spectral cleanness (and low phase noises), corresponding to a spectral cleanness of narrow-bandness) of the mentioned support stabilized signal of the crystal oscillator. Besides, frequencies of themselves partial MMW/SMMW oscillators may be characterized by very bad stability, also a stability and spectral frequency of any heterodyne oscillators of the receiving device are not important, since their phase noises are added in both the components of the doublet signal by means of identical way and they will be excluded at the step of amplitude amplification. Furthermore, the difference signal is secondary detected by means of synchronic detector, the support signal in which is taken from the mentioned crystal oscillator. The offered diagram of generation and receiving of doublet signal provides with a record high sensibility and noise immunity (and even a covert capability, if a carrier frequency of sources is varied additionally and by means of special way) of a receiving, since it secures a limit high instantaneous narrow-bandness of such a technique and correspondingly a low level of own noises of the receiving device. A doublet representation of spectral lines secures also a simplicity of radiation encoding of set of sources with various frequency and polarization. Since a frequency shift may be arbitrarily large, but a stabilization of the difference frequencies (which are different for various doublet sources) extremely high, a number of such partial components (with various sets of values of said physical features) may be arbitrary great, since a spectral distribution of the difference frequencies, obtained after the amplitude detection, will be precision stable. Furthermore, as a matter of fact there is offered a novel method for a FM modulation by means of modulation frequency and/or phase of the difference signal of the doublet components, which may be synchronically phased by any FM/PM signal.

A realization of device of such a stabilized doublet source may be such as follows. Two practically identical MMW/SMMW oscillators, for example, the oscillators 78,79 (in the given case of waveguide embodiment, but, perhaps, and of monolithic embodiment), one oscillator 79 or both the oscillators 78, 79 are oscillators with voltage control (VCO), i.e., its frequency may be varies upon a variation the voltage of control) are positioned in such a manner that they will generate a radiation in open space by the same way (or even from one phase center) - in the given case it is realized by means of the usage of said two directional couplers of the coupler set 70 for combining of energies of signals of both the oscillators in the general waveguide 86 and their radiation will pass in a free space through the general horn antenna 67.

Smaller portions of the energies of the signals of each of oscillators 78,79 are derived by means of directional couplers 91,92 and are separately connected to outputs of the oscillators 59,60 via the corresponding rectifiers 81,82 into a mixer 93 for a formation of signal of difference frequency; from an output of the mixer 93 the signal of the difference frequency through a band filter 94 is fed to the first input 95 of phase detector (or in other words, phase discriminator) 96; to the second input 97 of this phase detector 96 it is fed a support signal of reference oscillator 98 (it may be a signal of the above-said stabilized crystal oscillator (or its low harmonics); a signal of phase mismatch (error) from an output 99 of the phase detector via a filter 100 of low frequencies (which is used for a decrease of phase noises in the difference signal) is fed to a control input 101 of the VCO 79 as a signal of the phase mismatch of difference and reference signals for its elimination. The considered loop of the phase-lock loop diagram (PLLD) (of phase automatic frequency control) provides with a phase synchronism of the difference signal and the spectrally clean stabilized signal.

As it was mentioned, greater portions of energies of the oscillators 78, 79 via the corresponding directional couplers of the unit 70 of the directional couplers are united in the general waveguide 86 and are radiated in a free space via the general antenna 67.

A circuit diagram of pair oscillator of doublet signal 102, providing with a spectral narrowness(cleanness) of the difference signal may be added by a node of automatic search and locking-in a frequency of the difference signal by means of a preliminary feeding of scanned voltage (for example, from the unit 90) to the control electrode of VCO before a moment of the difference frequency locking-in by means of the considered loop of PLLD with a sequential switching-off of the scanned signal after a statement of such a locking-in. There are also possible other realizations of the doublet source with the stabilized difference frequency of the higher spectral cleanness.

In order to improve the receiving device parameters (its sensibility and dynamic range) in each amplifying channel of the last it may be added a synchronic detector, an input of which is electrically connected to circuit diagram, separating and amplifying the signal of the difference frequency from the doublet signal, received by antenna, besides, to the reference input of the synchronic detector it is fed a signal of the above-considered stabilized crystal oscillator. If such a transceiver is used in applications, associated with realizations of the MMW/SMMW imaging systems, the signal of the crystal oscillator may be fed to the input of the synchronic detector by means of coaxial cable through a phase shifter, compensating a phase increment of signal in the cable, since oscillators and receivers are positioned at near distances. (Besides, at the output of such a parametric quadrature detector it will be separated an envelope, which is proportional to an intensity of the doublet components, receive by the antenna, cutting information about dispersing properties of the object surface. In place of the phase shifter it may be used a circuit diagram with an obtainment of quadrature components at the synchronic detector output, in this case the envelope will be also obtained).

In case of the usage such a transceiver for transmission of information signal, which may be controlled by one 62 or phase opposite by both the modulations 62, 63 of a coupled doublet oscillator 102 (see Figures 15, 17, 18), at the mentioned reference input of the synchronic detector of the above-considered receiving circuit diagram it should be fed a signal, preliminary separated out of corresponding additional diagram of frequency selection of the receiving device, which is separated out of complete spectrum of the received communication doublet signal and which spectrally corresponds to a signal of said crystal oscillator. Besides, a phase of the separated reference signal should be shifted by a value of the phase depending on a type of the used modulation. In order to provide with proper selection of the doublet signal modulation in a transceiver it should be provided the form of general signal at the transceiver output, upon which said support signal is expressed in the form of separate spectral line. In order to improve an effectiveness of the receiver operation, the receiver should be added by a heterodyne VCO, a intermediate frequency of which corresponds to the frequency of the support signal, and which is synchronized by means of system of the phase automatic slight adjustment by said signal, separated from the general spectrum. Besides, an output of the VCO through the phase shifter is connected with the support input of the synchronic detector.

The above-considered transceiver provides with a high multiplexing of communication channels in MM + MMW/SMMW ranges, since it provides with a tough spectral localization (with an accuracy up to tens Hertz and less) of the difference information signal, arising in the receiving device after a non-linear detection of doublet simulated signal. Besides, the central frequency of the difference signal may be arbitrary small up to several MHz and arbitrary high up to 1 to 1.5 GHz and over, since it is determined only by a frequency of the stabilized source 98 signal. If this source is frequency or phase modulated, another possibility of the difference frequency oscillator 102 appears. Another possibility consists in an addition (for example, by means of summing operational amplifier or any other quick-acting summator) to an error signal, fed to an input of a control electrode 101 of the VCO 79 some more and a modulation signal, an information in which consists in a variation of its amplitude (voltage).

A frequency spectrum of this modulation signal is deflected, taking into account a condition of its suppression by the filter 94 in a composition of the difference signal, separated by the mixer 93 and the filter 100 in a composition of the erroneous signal, an output of which is fed to one of inputs of the summation device (to the second its input there is fed a modulating signal, but its output is electrically connected with the control electrode 101 of the VCO 79. In this case the doublet difference signal will be frequency-modulated with a great deviation of the difference frequency, besides, a central non-modulated component (line) of spectrum of the difference frequency signal (a non-modulated difference signal of the corresponding doublet signal, obtained upon the absence of said modulating signal) will be synchronically phased stabilized by means of the crystal oscillator 98.

A multiplexing of signals and their broadbandness is important in systems of high speed wireless inter-computer communication and in other communication applications. Besides, a stabilization themselves oscillators of the MMW/SMMW range may be how like bad one. It is all the more important that the stabilization of the MMW/SMMW sources is very difficult and expensive one.

A principle of improving of visual quality of the object images, destructed by the coherent noises of the radiation source includes an summation of numerous speckle images of the object, besides, each of spackle image should be statistically independent (in the present case the question is a spatial distribution of the speckle structure image). As it was shown above, the variation of frequency of the radiation, which may be radiated from the same point, results in an obtainment such statistically independent speckle images, but their sequent summation (accumulation) allows to obtain a decrease of speckles in the resultant image, and it promotes an improvement of visual quality of images.

It is possible to vary a position of point disperser (diffuser) with respect to the illuminated object without a variation of illumination radiation frequency. These variations of the spatial position of the diffuser element result in a variation of angles of impinging on the object surface, and it, in turns, results to a variation of corresponding optical way of this radiation from a dispersing radiation of the diffuser elements to the nearest points of the object surface. Owing to the letter phase differences in wave fields, dispersed by means of the mentioned nearest points of the object, will be redistributed, causing variations in the speckle structure of the corresponding partial images.

As it was shown in Figure 10, the coherence radiation from the source 2 is directed onto the immovable, but electrically (or optically) controlled diffuser 7, which is intended for a destruction of the spatial coherence of radiation (or for said destruction and an additional partial encoding, or for a whole encoding, that results in said destruction of the spatial coherence), impinging at it. In this context "the immovable" means that the diffuser does not rotate or it does not move as a whole (although upon a number of realizations in principle its separate portions may move). Within the bounds of one aspect of the present invention the diffuser may be designed as antenna-array one. Such a diffuser represents by itself a spatially distributed set of antennae, paired conductive elements of each of which in the point of input port (input) are connected to each other by means of non-linear element (capable to vary itself impedance under action of control signal that is electrical and elliptical one). The antennae may be positioned on the plane in the form of two-dimensional array with distances between the adjacent antennae, which are no more that several lengths of waves for a provision of complete destruction of the spatial coherence of the dispersed radiation. Besides, the antennae may be located at the more complex surface (for example, in the form of paraboloid) for a concentration of the radiation and for a uniform illumination of the area of inspection by it.

One of such antennae is shown in Figures 15 and 16. A band of frequencies of such antennae is selected in accordance with the MMW/SMMW radiation of the source 2. Impinging on spatially-distributed array of differently modulated such antennae, the spatially coherent radiation 8 (see Figure 1) is transformed into the dispersed spatially non-coherent radiation 15 with a controllable degree of spatial coherence (besides, the components, dispersed by differently modulated antennae appear additionally distinctly encoded, but the impinging radiation appears decomposed into various components, distributed variously in the area of illumination, and which are independently encoded by means of electronically controlled elements of the diffuser 7 array).

In Figure 15 there is shown a section of antenna 103, which is loaded by means of impedance. In this realization each antenna represents by itself at least two conducting antenna portions 104 and 105, connected between each other in a point of the antenna input by means of non-linear element 106 for providing with the antenna load, which is controllably varied by the impedance of this load 105, and each portion of the antenna is shifted by itself contacts 107, 108, through which a voltage of the shift and/or a modulation signal is fed at the non-linear element 106 for control a value of the impedance of dispersing element.

If the portions of the antenna are disposed on one side of a dielectric substratum, on which there are located the antenna portions 104, 105 and the non-linear element 106, but contacts 107, 108 are disposed on the other side of the base, each element 107, 108 has itself conducting connection with the corresponding antenna portions 104, 105 through said base. In Figure 16 it is shown the considered element with a frontal position. In this realization as an antenna it is selected antenna-butterfly 104, 105, characterized by a broadbandness of operation frequencies.

As a non-linear load it may be the Schottky's diode, p -1-n diode, a corresponding transistor (including field-effect transistor) or other non-linear element, providing with a non-linearity of conductivity between its electrodes, which are included at the antenna input, besides as a non-linear element it also may be selected a photoconductive element (photo-diode, photo-transistor an so on), in this case a control optic modulation signal proceeds from a side of the substratum or from a side, that is opposite with respect to substratum.

When an impedance of the load 106 is completely matched with an impedance of the antenna 104, 105 input, an impinging radiation is essentially dispersed by such an antenna (by means of "almost mirror" way), as it was shown in Figure 17 by an indicatrix of diffusion 109. In that case, when the load is completely mismatched with the antenna impedance, the indicatrix of diffusion, being initially "almost mirror", becomes "diffusive" 110 (Figure 18), besides a level of diffusion of radiation abruptly decreases. Upon a variation of the impedance in time thus an amplitude simulation of the dispersed radiation occurs.

By means of load switch between values, matched and mismatched by means of impedances, a wave field, dispersed by such an antenna element 103, may be made of controlled and modulated one. This switch may be realized by means of application of electrical or optical modulating signal to the dispersing element.

The impedance load 106 of the antenna 104-105 as well as principles of its modulation may be different with respect to a nature. For example, the loads may include the Schottky's diode or a bismuth bolometer or even two-or three-terminal micro-mechanical switches (MEMS). The loads may be also photo-controlled from a photo-conductor to a photo-transistor.

There are various approaches for a modulation of the antenna load. A resistance of the bolometer, for example, may be varied owing to a resistor heating and cooling or by means of modulation of low-frequency electrical signal, for example, applied to the load 106 via the antenna elements 104, 105. The modulation signals may be applied to the antenna elements via band filters of nigh frequency in the form of catchers, for example, including inductive elements, worked out in such a manner that the electrical modulation signals pass through them, but the signals of millimeter radiation are completely blocked.

Another approach for a modulation of the load may be realized on the base of principle of photoconductive load modulation by means of optical modulation signal, which may illuminate the loads through corresponding openings in an array substratum. A principle of optical modulation provides with advantages, consisting in that circuits do not require any low-frequency electrical circuits, which are necessary in order to feed a signal to a modulated element.

Besides, the impedance of non-linear element may be preferably of capacitive character (a capacitive portion exceeds considerably a resistive portion, for example, varactor Schottky's diode), and in this case the dispersed radiation will have a various phase of radiation, dispersed by it, (accidental or regular depending on a character of modulation signal) upon a variation of impedance element value, but a combination of such arrays will accidentally vary a phase of various spatial portions radiation, dispersed by means of wave front array, i.e., will destruct its spatial coherence.

If the non-linear element is preferably resistive one, its modulation results in an amplitude modulation of radiation, dispersed by it. Side components of the radiation, dispersed by various ways by modulated antennae will have different shift of frequencies, making the dispersed radiation distinctive way frequency-encoded one, allowing carrying out a decoding of each component of the radiation, received by a receiver by hardware-simple way.

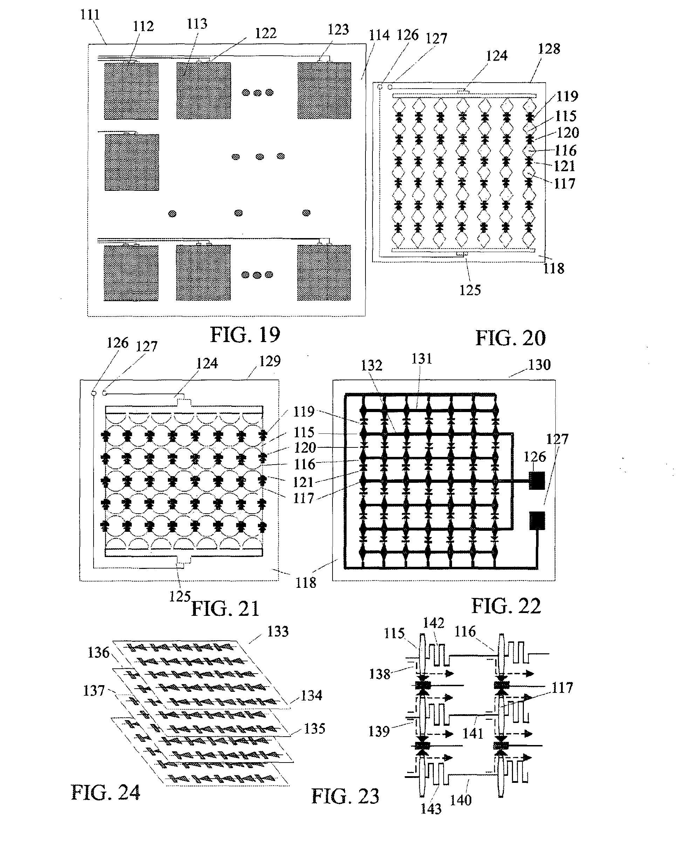

In order to improve an effectiveness of the diffuser dispersion the diffuser 7 may be designed as a diffuser 111 in accordance with Figure 19 in the form of spatially distributed set of independent quasi-optical radiation switches (IQORS) 112, 113 of radiation, disposed on a general substratum 114 of plane or piece-plane shape (in whole the piece-plane substratum 114, which is shown in Figure 19 an at which there are disposed the IQORS 112, 113,... may have a shape, that is optimal for the observed area illumination). Each of the IGORS may carry out an amplitude or phase modulation of radiation, dispersed by it by means of various ways (by means of accidental, regulatory-distinctive way or by means of way. Combined with two previous ways) depending on modulating signals and it may function both with the radiation passing and with it's reflecting depending on the realization.

Each such an independent quasi-optical switch (see Figures 20 - 2 4) represents by itself a spatially distributed set of independent conducting elements (CE) 115, 116, 117 of end sizes, which are positioned at a plane substratum 118, besides, the adjacent conducting elements 115-116, 116-117 and so on are preferably connected between each other in the determined (first) spatial direction by means of connecting elements 119, 120, 121 (by means of non-linear elements of various origin, the realization of which are above-described in connection with the antenna diffuser array, the Schottky's diodes, the varactor Schottky'st diodes, photodiodes and so on), each of which may be located both in the high-impedance (first ) state and in the low-impedance (second) state. The conducting elements 115, 116, 117, as a response on the radiation, impinging on them, have themselves impedance, which is compensated (deleted or is made insignificant one) in combination with an impedance of the corresponding connecting elements 119, 120, 121 upon a transforming of the letters into the low-conducting state. In this case the mentioned conducting elements 115, 116, 117, being connected by means of the CE 119, 120, 121, positioned preferably in the first state, appear united ones in a structure in whole conducting preferably in the first mentioned direction in such a manner, that a radiation, impinging on the present receiving system, being preferably polarized in the first spatial direction, turns out preferably reflected by means of the considered such a structure. Upon a translation of the connecting elements 119, 120, 121 into the second impedance state the impedance of the conducting elements 115, 116, 117, as a response on the impinging radiation in a combination with the second conducting state of the corresponding CE 119, 120, 121, remains high one, and such a quasi-optical switch (IQORS) remains open and transparent for the impinging said radiation. Since the conducting elements are connected between each other in the first direction, a shifting and/ or modulating voltage via the corresponding independent electrical connections (122, 123) of Figure 19 may be fed only to two points (124, 125) in Figure 20 of such a structure (IQORS) via the corresponding contacts 126, 127 in order to provide with a simultaneous shift of all the diodes of IQORS.

If the base is conducting for the MMW/SMMW radiation, IQORS functions with a pass of the radiation, if a side of the base, which is opposite to the side, on which there are applied the elements of IGOR, is metallized, the IQORS functions with an reflection, besides, an optical thickness of the base is properly optimized.

Upon the optical shift of the diodes, which are simultaneously illuminated by means of beam of corresponding modulating light signal, problems of electrical inter-connections between a control unit and each of IQORS do not arise (owing to an absence of necessity of such connections).

If the mentioned conducting elements are not electrically connected between each other in the second spatial direction, orthogonal to the mentioned first direction, in whole such an IQORS 128 (see Figure 20) turns out broadband one and in the conducting state it preferably functions as a corresponding polarization array. If such elements have between each other a conducting connection in the second direction, perpendicular to the first direction, (see Figure 21) such an IQORS 129 turns out a frequency-selective one for the impinging radiation and capable to realize a frequency selection of the impinging radiation.

The inter-connections in an IQORS 130 may be optimized, as it was shown in Figure 22. In this case shifting signals are fed from a control unit via conducting connections 131, 132 immediately to each non-linear element 119, 120, but not by means of sequential shifting of the various connecting elements 119, 120 via the conducting elements 115, 116, 117,...

The non-linear connecting elements may have the expressed capacitive character(for example, a varactor Schottky's diode), in this case a corresponding selection of impedance of the conducting elements as a response on the impinging radiation allows to realize a phase modulation of reflected or passed radiation (see Figure 24). In order to increase a number of discrete phase shifts of the dispersed radiation such structure may be spatially combined into a set of such IQORS 134, 135, forming a spatial IGOR 133, a space is filled by means of dielectric substrata 136, 137 with an optical thickness minimizing a dispersion of radiation, passing between layers. In this case the diffuser 111 may comprise namely such volume elements as the independent elements 112, 113.

Finally, non-linear elements IQORS (diodes) may modulated quasi-optically (see Figure 23), when currents, induced at the conducting elements of IQORS of modulated radiation, are preferably distributed along the conducting elements of mentioned type in one direction, while currents of the radiation are modulated in the other direction 138, 139 along corresponding conducting elements 140, 141, provided with structures 142, 143, which are of high impedance for the considered currents and which prevent a mutual influence of modulating currents and modulated currents.

A principle of modulation of such diffusers for encoding and/or destruction of spatial coherence is the same one as for the mentioned antenna diffuser.

Sizes of conducting elements of IQORS are selected, taking into consideration a condition of an effective radiation modulation, besides transverse elements of IQSR itself (112, 113 in accordance with Figure 19) should be sufficiently small in order angular sizes at which the present IQORS is visible from a spatial point, matched with one of any of the observed object 9 points (see Figure 1), in comparison with angular sizes of the diffuser 7 itself (pos. 11 of Figure 19) as a whole from the same point of the illuminated object 9 position. It is understood that in order to increase sizes of IQORS (112,113 in accordance with Figure 19), being a part of the diffuser, it is necessary to increase the sizes of the diffuser 11 itself and to move it from the observed zone of the object 9. On the other hand, the sizes of IQORS should be sufficiently small ones in order to provide with a necessary diffraction divergence of beam, modulated by it, for uniform illumination of observation scene.

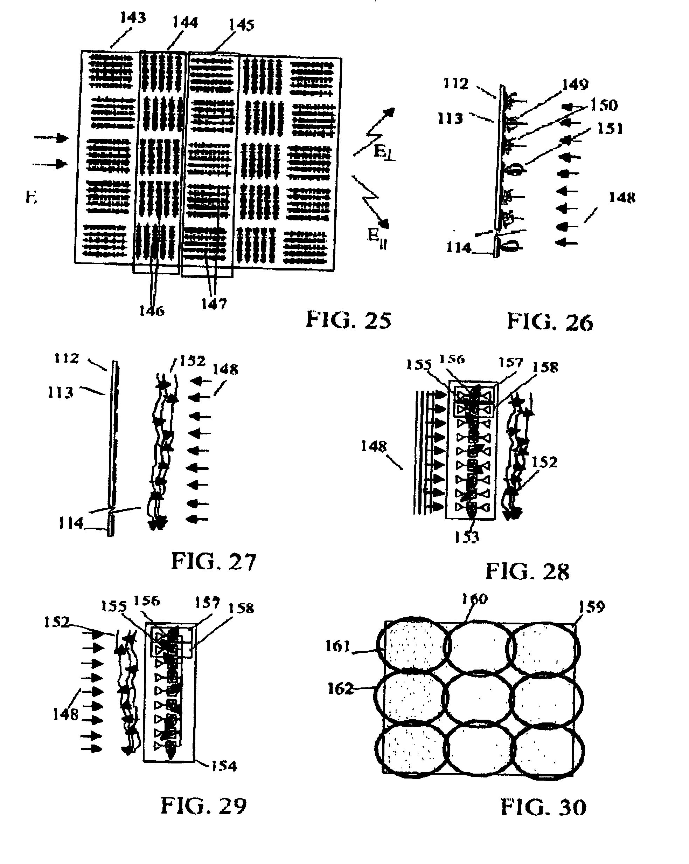

In order the IQORS functions for any type of polarization it may be provided with an additional polarization array, conducting bands of which are preferably directed to into the second direction, which is orthogonal with respect to the mentioned first direction In Figure 25 there is shown an array of the IQORS 111, consisting of sub-arrays of IQSR (pos. 114 and 115), which are spatially inserted in each other, are mutually added each other and in each of which corresponding separate IQORSs (pos. 146) are oriented by the same way in one direction for one sub-array (144) and in another direction (147) for another sub-array (145), besides, the mentioned directions are mutually orthogonal ones. Besides, the elements in each of the sub-arrays are modulated in such a manner that side bands of modulation signals for each of the sub-array are frequency separated. Thus, if on the array a linearly polarized radiation impinges, the direction of polarization of which does not coincide with the mentioned directions, the array will be create an encoded radiation, consisting of spectral lines, being as part of the doublet, a polarization components of which are orthogonally polarized.

In Figure 26 there is shown a principle of amplitude modulation by means of elements 112. 113 of the array IQORS 111 in accordance with Figure 19 spatially coherent radiation 148 (the previously considered antenna array functions analogously, but with smaller effectiveness). It is seen that various portions of regular wave front, impinging at various IQORSs 112, 113 (the IQORSs operate with a reflection), are subjected to a different amplitude modulation by various way owing to a different in time reflection of the portions of this wave front by various IQORSs 149, 150, 151 are inicatrixes of the dispersion by the corresponding IQORSs 112, 113 in observed instant time. It establishes distinctly modulated divergent beams of radiation, partitioning an initial radiation with a regular wave front into a corresponding quantity of independent components, which equals to a quantity of IQORSs in the array-diffuser 11, which are a part of such a diffuser.

Thus, the independent portions of the diffuser additionally disperse the independent spatial components of radiation, which have various angles of their impinging at a surface of invisible object, and, besides, they are independently encoded. The radiation encoding by amplitude modulating IQORSs may be based on the fact, consisting in that dispersing properties of the diffuser elements are modulated by various frequencies, therefore a spectrum of these components will be varied by various way, but namely: the spectrum of each separate spatial component of radiation will consist of at least spectral component on the carrier frequency of illuminating radiation and additionally at least of two spectral side components, arising in consequence of the mentioned modulation, which are shifted with respect to main zero components by a value of modulation frequency. These shifts for the side spectral components render various ones for various elements of the diffuser and the corresponding radiation components. The diffuser is worked out in such a manner that an intensity of the mentioned components of radiation after their reflection by means of this diffuser has been rendered equally by value in all the area of inspection (i.e., it is fulfilled a condition of uniform illumination of the object by a radiation of the mentioned component). Therefore any their relative variations after the reflection from the object and hits in the corresponding elements of receiving device show on the presence of the differences in their reflection by various portions of observed objects. Each of separate spatial component of radiation has itself angle of distribution in the area of the observation. Here each spectral component is a component of radiation, decomposed in accordance with the angle of the distribution, such a component illuminates the object out of the corresponding diffuser point and a position of this point in a space is strictly associated with a value of frequency of modulating signal for a point-like dispersing element of diffuser. Regions of localization in the spectrum of such components and regions of spatial localization of the corresponding elements of diffuser, which are responsive ones for a generation of these components are uniquely imaged an are associated with each other, and it is important upon the spectral analysis of received signals and upon their effective decoding. Any relative variations in amplitudes of the mentioned radiation components, which are dispersed by each separate point of surface (and/or by inner point) of the object will be strictly determined by means of dispersing characteristics of this object in this point. Some of such components may be mirror-imaged from this point (owing to a mirror reflection at determined angles of impinging, so called clint effect) and represent by themselves very strong signals at an output of the receiving array element. In the offered imaging systems such destructing signals will be simply removed or extracted at the step of processing of signals, since they have various frequency localizations. A possibility of selective extraction of the destructive signals without any influence on the other informational signals of image (even only for one pixel of such an image) is a basic property of this modem MMW/SMMW imaging systems, which creates a novel realities for procedures of imaging.

In Figure 27 there is represented a principle of phase modulation of wave front 148 by means of array of the IQORS, each of which independently modulates a reflected radiation phase. In this case various portions of reflected wave fronts 152 are subjected to various phase delays in the corresponding IQORSs 112, 113, and it destructs a spatial synchronism of the initial wave fronts 148, impinging onto the diffuser, an creates a spatially non-coherent dispersed radiation 152.

The same effect may be attained in any phase antenna array (PAA) of passing 153 (see Figure 28) or of reflecting type 154 (see Figure 29), intensively and multilateral worked out at the present time for radars with controlled beam in the ranges up to the short MM range. (A set of quasi-optical switches, if phases of radiation, omitted by them, are interconnected, may be related to the radars with the controlled beam of scanning).

For the PAA, functioning in the mode of the diffuser, phase shifters 155, 156, forming independent elements of the PAA 157, 158 should realize incidental and independent modulation of the phase of beams, reradiated by such elements, and it leads resultantly to the incidental modulation of the phase along the wave front of the reflected radiation, and as a consequence to a destruction of its spatial coherence.

It should be noted, that such diffusers, which are not capable to encode various spatial components of the dispersed radiation, but in whole which destruct the spatial coherence of such a radiation, may provide with a high quality of obtained images.

However, it should be noted, that the usage of such diffusers by analogy with optical systems of imaging, in which the spatial coherence of beam of the coherent, as a rule, laser radiation, was destructed, for example, by means of rotating incidental phase screen, and spatially non-coherent images, formed by the optical system by this way possessed of high quality. In contrast to an optical super-short wave radiation, for which a majority of objects are diffusively reflected (except for plainly mirror surfaces) in the millimeter range the above-mentioned approach does not give a desired improvement, since all the objects practically reflect its radiation by means of mirror method. In this case it is necessary to isolate a mirror component, which completely turns out in a lens pupil, from a total sum of components, turned out in the pupil only partially by virtue of sharp directivity of dispersion indicartix and therefore causing signals in a receiving element, which are significantly less with respect to amplitude. It is necessary artificially to compare the amplitude of the mirror component to amplitudes of the rest components, realizing a diffuseness of reflection a creating an image of high quality.

In case of diffusers, which are capable only to destruct the spatial coherence of the radiation, impinging on them, it may be made only by means of illumination of its various spatial portions by various beams of differently modulated radiation. This situation is shown in Figure 30, wherein a spatially distributed coherence 159 of the diffuser 7 is illuminated by means of various beams, besides, various beams 160, 161, 162, being differently modulated, illuminate various portions of the diffuser. Besides, the reflected radiation 8 of the various beams (with a partially reduced spatial coherence) will impinge onto the surface of the object 9 (see Figure 1) at various angles, and it allows to localize a beam, causing the mirror reflection, independently decoding and decreasing a level of corresponding signals, received by the receiving device RD 16. It is clearly that a quantity of such is more, a selectivity to the mirror reflection of the offered diagram is higher.

Realizations of diffusers, which are capable only to destruct the spatial coherence of the radiation, dispersing by tem, may be sufficiently simple ones.

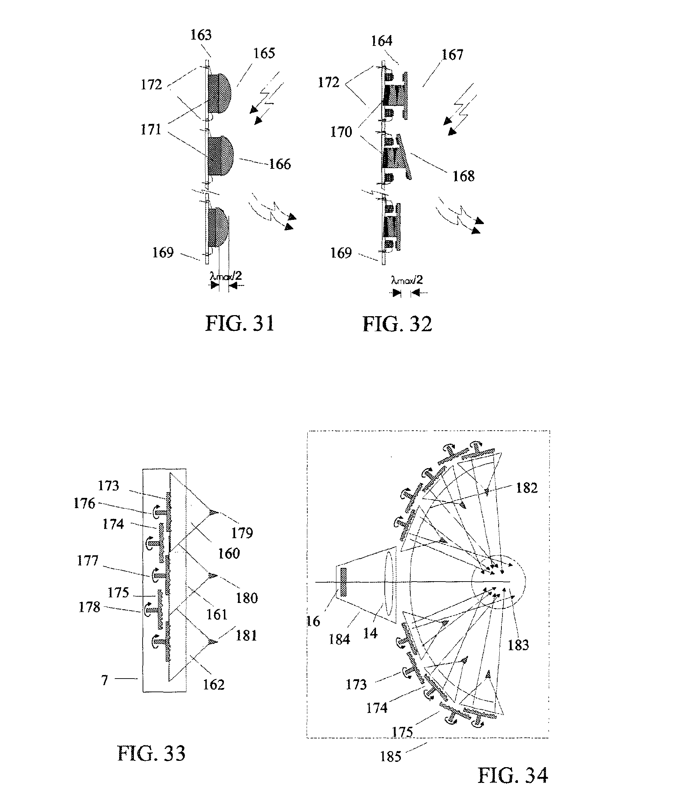

It may be diffusers 163, 164 (correspondingly in Figures 31 and 32), consisting of, for example, a set of mirror reflecting small elements 165, 166 or 167, 168, a position of which with respect to a general plane base 169 (or a base in the form of complex surface) is varied randomly in time, but by a value, that is no more than a half of length of intensifying radiation. (Elements, for example, may be connected to movable magnetic cores of inductive circuit coils 170 (or they may be connected to crystal-elements 171), fed by accidental electric currents, applied by means of electrical connections 172 from outer electronic circuits.

The diffuser may consist of independent crystalline liquid (CL) cells, optical (dispersing/passing) properties of which vary independently by means of modulated or accidental modulation signals.

It may be a (spatially distributed) set of resonantly dispersing antenna (narrow-band) systems with slightly different central frequencies, besides, the diffuser is illuminated by means of radiation, scanned with respect to a frequency and so on.

A possibility of using an imaging system in a wide range of frequencies of intensifying radiation suggests a possibility of realization of an accidental screen, having similar technical characteristics in this range of frequencies. This, such a screen should be broad-band one and it supposes the presence of a possibility of its using for any harmonics of the MM range. Let us consider one of these realizations.

It is well-known, that a rotating accidental screen represents a good realization of such a diffuser (taking into consideration all the above said). Such a screen represents by itself a reflective metallic surface with a regular (in principle of any shape) bedding (mediate) surface and with accidental deviations of quasi-points of the surface (which may have a broad-band realization of dispersion function) from the mentioned bedding surface (a spatial distribution of the points of which with respect to a depth represents a realization of a random process). Drawbacks of such a diffuser consist in the necessity to rotate a bulky screen of large sizes, but its dispersing characteristics are different and are not predicable ones for a radiation of various frequencies. It may be realized a certain modernization of such a screen, allowing to resolve the mentioned problems. In particular, the general diffuser 7 may be composed of a set of accidental diffusers 173, 174, 175 (see Figure 33) with relatively small sizes, each of which is rotated around their own axes and each of which should be separately illuminated by means of their own radiation beam 160, 161, 162, radiated by means of separate source 179, 180, 181 of distinctly modulated radiation (there are may be radiation elements 2, 3, 4 in accordance with Figure 14). In Figure 34 it is represented a possible circuit diagram of imaging with a composite diffuser, consisting of independent accidental diffusers of relatively small sizes, which are capable only to destruct a spatial coherence of impinging radiation and each of which has e separate oscillator of MMW/SMMW radiation. The mentioned diffusers 173, 174, 175 of smaller sizes are geometrically positioned relative to each other according to a radius of great sphere (182 in Figure 34) and may composite any other surface, in a reflective center of which it is located an area 183 of observation, in which the observed objects 9 should be positioned in accordance with Figure 1. The observation area 183 coincides with a field of view of a imaging system 184, in which as a minimum there are the lens 14 an the receiving device 16. The present geometry of the observation diffuser 182 of the system for imaging and active illumination 185 is intended for a provision with a maximal range of impinging angles of radiation components into the area of the observation and for a better illumination of the observed objects upon smaller sizes of diffuser system, and it may practically provide with the observation area backlighting with 180 degrees, and it completely corresponds to a character of natural backlighting, but with preferences of synthesized (encoded) images. In general case the accidental diffusers 173, 174, 175 (see Figure 34) of final small sizes, which are separately illuminated 179, 180, 181 (see Figure 34) and forming an illuminated surface 182 of optimal shape, may have any embodiment in a system for imaging and for active illumination (the PAA, the set of IQORs and so on, including the above-described rotating diffusers with an accidental reflective surface 173, 174, 175, as well as the diffusers, encoding a radiation).

It is understood that the shape of the composite diffuser 182 and even more arbitrary shape may be formed also by diffusers, which do not destruct the spatial coherence, but only diffusively disperse a light. They may be also used in a diagram of illumination of their various portions by means of various and distinctly encoded beams. However, in the last case a quantity of possibilities to synthesize improved images is less than in case of encoding diffusers or diffusers, which are capable only to destruct the spatial coherence.

The broadest possibilities to synthesize improved images are opened by means of using diffusers, encoding a radiation, dispersed by them.

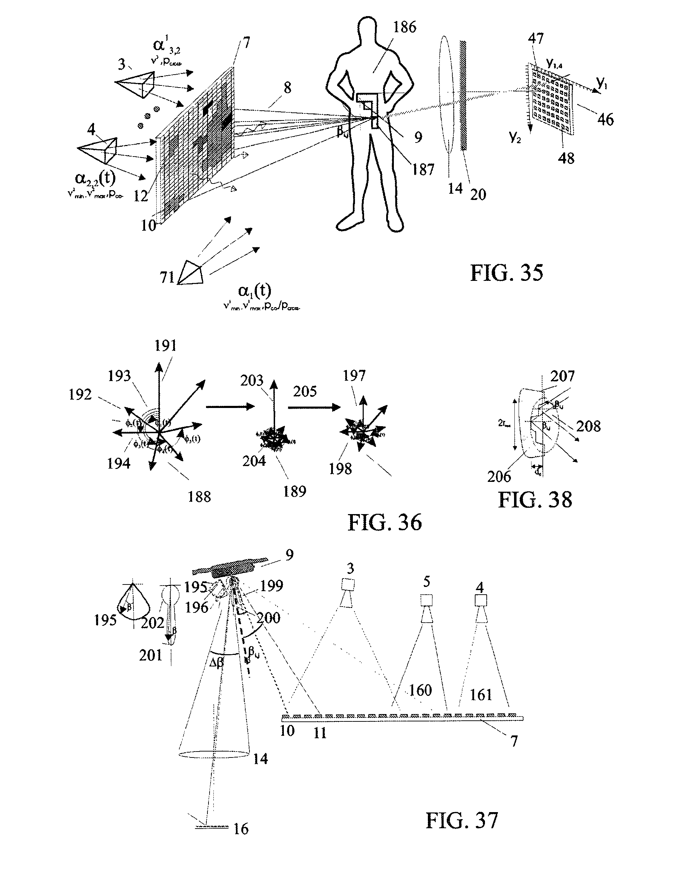

For an illustration of the above-mentioned and for a further substantiation of the offered method for imaging in Figure 35 it is represented a general diagram for forming of images, masked on the human body 186 of dangerous objects (weapon) 9 upon an illumination of the observation area by means of the radiation 8, dispersed by means of the independent elements 10, 11, 12, by the of the diffuser 7, encoding the dispersed radiation. A mechanism of functioning of such a diffuser 7 may be base on the independent amplitude modulation of various portions of impinging regular front by different way by various the dispersing elements 10, 11, 12, (for example, it may be an array of amplitude modulating IQORSs, which is described in accordance with Figures 19, 20, 26, operates with a transmission (or reflection depending on a diagram of diffuser backlighting by the independent and distinctly encoded sources 3,4 of radiation of fixed or scanned frequency) or any other encoding diffuser).

Thus, the encoding diffuser 7, in general case, consists of the independent elements 10, 11, 12, dispersing an impinging on them co-phased wave front of spatially-coherent radiation by independently from each other way, creating by this way additional partial components of radiation, which are independent on each other by phase, besides such components are encoded by distinctly from each other way and therefore they may be independently received and decoded in each receiving element 47, 48 of the receiving array 46, forming the receiving device 16 (see Figure 1). The diffuser 7 is illuminated by the sources 3, 4 of illumination, a spectrum of which may consist of a set of spectrally different components in a broad range of carrier frequencies, or it may be continuously scanned in the mentioned range. On the way of propagation of the radiation 6 of the sources 3, 4 to the diffuser 7 it may be located the polarization array 21 (see Figure 1), which are not schematically shown in Figure 35 and separates a linear-polarized radiation. The radiation of the sources 4, 5 is dispersed and encoded by means of the diffuser 7 is directed into the observation region and after its secondary dispersion by the object 9, as well as by a wear and skin of the carrier-object 9 of individual 186 from the region of the observation partially turns out into the entrance pupil of the lens 14 of the imaging system. (A size of the entrance pupil in most cases coincides with a diameter of the used focusing element (the lens 14)). The focusing element (FE) 14 ( for example, lens or mirror) focuses a radiation, dispersed in the region of the observation, into the region of receiving, in which there is positioned the multi-element array 46. Before the receiving array it may be located the polarization array 20 for separating co- and cross-polarized components in a radiation, focused by the lens at the receiving array. Besides, the focusing element 14 establishes a mutually univalent correspondence between points in the receiving array region and the points of the observation region, corresponding to them, upon which any radiation, dispersed by any defined point 187 of the object 9 is preferably focused in a determined point of receiving and is received by the corresponding receiving element 47 of the array 46. Therefore any partial radiation components of the diffuser elements 10, 11, 12, which are reflected from the point 187 of the object 9 and are hit into the entrance pupil of the focusing element 14, may be received by the element 47 of the receiving array and are independently decoded by means of electronic circuit diagrams, forming a part of amplifying and decoding channel of the receiving device 16 (see Figure 1), associated with this receiving element.

In ideal case each point in the region of receiving (in a plane of acute image) should be correspond to the determined point in the region of observation (in a plane of the object). However, by virtue of final aperture of the used FE to each point (or the defined region) in the receiving region the defined region of the observation uniquely corresponds, and a radiation from this observation region is focused in this point. In essence, the question is in a volume of acute image for the considered element of the receiving array, which is obtained upon the presence of the used FE and a position of which is determined such that there is an optical mating of the region/plane of receiving and the observation region/plane by means of the FE. Lateral sizes of this volume are determined by a radius of resolution, resolved by means of quasi-optical system of resolution element, but a longitudinal size is correspondingly determined by means of sharpness depth of the focusing element (lens). The mentioned final sizes of the resolved element determine spatial sizes of speckle noises and are proportional to sizes of Gibb's oscillations, which are characteristic to the MM images and intensively destruct their quality.

As it was shown, in the MMW/SMMW ranges a reflection of radiation from the observation objects is realized mainly by mirror way. The last moment determines a low level of quality images, formed in the MMW/SMMW range, though any methods for a destruction of spatial coherence in a field of view of an imaging system, realized by analogy with an optical systems.

Said facts will be clarified by example of evolution of state of phasor diagrams upon a distribution of radiation in a layer of space between the dispersing object and the entrance pupil of the focusing element of phase diagram of radiation, dispersed by a portion of the observed object 9 in the point 187 and received by the corresponding element of the receiving array 47 (see Figure 35).

In Figure 36 there are represented phasor diagrams of radiation in the point 187 of radiation in accordance with Figure 35 nearly with respect to a surface of the object 9 immediately before its dispersion 188 as well as in the point 47 in accordance with Figure 35 in case of mirror 189 and diffusive 190 reflection of radiation by the corresponding portion 187 of the object 9 in accordance with Figure 35, but in Figure 37 there is shown a circuit diagram of an imaging system, illustrating a mechanism of forming strong "mirror" and weak "diffusive" components in the signal, received by the element 47 of the array 46 in accordance with Figure 35. Each phasor (see reference numbers 191, 192) in Figure 36 corresponds to the component of radiation, dispersed by the corresponding independent element 11, 12 of the diffuser 7 in accordance with Figure 35. Such phasors practically have the same amplitude (length) and different mutual phases (193, 194) ( the letters are inessential ones, since a diagram of processing isolates squares of lengths of phasors) before a dispersed object. If the components are diffusively by means of surface portion, the indicatrixes of their scattering have broad angular distributions 196, 197 (see Figure 37), which practically overlap by each other in a space of their propagation. Since a relative portion of wave fronts, corresponding to the mentioned components, dispersed by this portion, practically will be intercepted by the entrance pupil of the lens 14. Lengths of the phasors of the corresponding components 197, 198 (see Figure 36) after their focusing at the corresponding receiving element 47 (see Figure 35) will be practically the same ones (in case of the presence of speckles it means that there are equal amplitudes of speckle oscillations in the given pints the nearest points for partial components, corresponding to the considered components) therefore the system will be operate as a system with ideally destructed spatial coherence of illuminating radiation and radiation, receiving by the receiving device with a formation of spatially-non-coherent images of improved quality (on account of effect of statistical averaging of coherent speckles and a spatial noises of other form). If the components are mirror dispersed by means of surface portion, the corresponding indicatrixes of their diffusion have narrow angular distributions 199, 200 Therefore the relative portion of the wave fronts of the corresponding components will be intercepted by different way by the entrance pupil of the lens, since a mirror surface of the scattering indicatrixe 201 hits in the entrance pupil of FE 14 only for a part of the elements 11 of the diffuser 7, while for the rest elements 10 it is intercepted only diffusive (relative small) portion 202 by the FE 14.

Therefore in the phasor diagram 189 a phasor responsible for specular-reflected radiation component 203 dominates in comparison with a phasor of any diffusive-reflected radiation component 204.

If the radiation components are not modulated, a signal, received by a receiver, can be detected only as an inseparable sum of squares of the correspondent phasors. Since in this sum only the signals dominate, wh ich is formed only by a limited part of the closely-positioned point scatterer 11 an image, formed by them, will be again spatially coherent and will exhibit speckle noises, which are inherent for such images, despite the object is illuminated by radiation being spatially incoherent in the object region. Since each of considered component of radiation both in the object region and in the receiving region exhibits high spatial coherence (because it is formed by point-like portion of the diffuser, the angle of observation of the diffuser portion from any point of the object region should be practically delta-shaped), therefore an image, formed by such a component, will be spatially coherent and will have a noise speckle distribution, which is inherent to it. Thus, when a illuminated radiation is reflected by observable object by specular manner (that it is inherent for the MMW/SMMW radiation) traditional destruction of the radiation coherence in the object region (in contrast to an optical range) will not allow to improve a quality of formed image and to make this image free from coherent speckles and from influence of the Gibb's effect.

If the partial radiation components are modulated, there exists possibility to vary their relative contribution to every pixel of the resultant image by means of both hardware and software because each of them can be distinctly received by receiver. In this case there appears possibility to artificially convert a bad-quality specular image to high-quality diffuse-like image. (it is schematically shown by the arrow 205 in Figure 36).

Let us analyze possibilities of the above-mentioned correction of contributions of partial radiation components for values of pixels of resultant images in case of the usage of the radiation-encoding diffuser.

In accordance with a principle of superposition complex amplitude of radiation in a point of receiving (for example, in input of receiving antenna) may be presented as a sum of complex amplitudes (phasors) of partial radiation components. Each of said component was primarily scattered by one of a particular cell (or in other words a spatial portion) of the diffuser and then, after of its propagation towards the observation area the component was secondary scattered by the portion of the observed object surface, which is optically conjugated with aforesaid point of receiving (m,k) due to radiation focusing, and in process of further propagation the component partially hits into entrance pupil of the imaging system.

(1)

It is understood that the sum is performed over all the independent cell of the diffuser (index I is a maximal number of the diffuser cells along a diffuser cell row, J is a maximal number of the diffuser cells along diffuser cell columns respectively). For simplicity of consideration the independent cells of the diffuser 7 are arranged in the form of two-dimensional rectangle array, wherein each element has its order number in array row i and array column j. It allows to uniquely determine a spatial position of every diffuser cell including its position relatively to every points of illuminated object 9 being under observation. In this case the order numbers of the diffuser cell uniquely determine angles $b_{i,j}$ of incidence of cell-created partial radiation components on any portion of the observed object surface.

$$\phi_{i,j}^{m,k}(\vec{x}_{m,k},\beta_{i,j}) = \phi_{i,j}^{sc} + \phi_{i,j}^{pr}(\vec{x}_{m,k},\beta_{i,j}) + \phi_{i,j}^{ob}(\vec{x}_{m,k},\beta_{i,j}) \quad (2)$$

In the formula $\phi_{i,j}^{sc}$ is a phase value of the considered partial radiation component immediately after its scattering by the diffuser cell (i,j);

$$\phi_{i,j}^{pr}(\vec{x}_{m,k},\beta_{i,j})$$

is average change of the phase value of the radiation component after its propagation from said diffuser cell to the receiving point (since this term does not vary in time and does not influence on the final result, it will be omitted in further formulae), at last

$$\phi_{i,j}^{ob}(\vec{x}_{m,k},\beta_{i,j})$$

is an additional phase random change arising due to additional propagation of the radiation components from real position of scattering portion of the scattering object surface up to focusing lens object plane along correspondent additional propagation path being equal $d_d$ (arising the term is responsible for propagation of the radiation component in followings of the scattering surface), and at last.

$$\alpha_t^d \hat{V}_{i,j}^{m,k}$$

- is a complex amplitude (phasor) of the part of said partial radiation component, which was reflected by said portion of the object surface, then hits into the entrance pupil of the imaging system and then was focused in the point of the receiving plane $y_{m,k}$. The amplitude of the focused radiation is determined by said part of the radiation component, which hits into the entrance pupil of the focusing lens and depends on scattering indicatrix of the portion of the object surface for the radiation component, which is quasi-optically matched with the correspondent input of receiving antenna by means of the focusing lens (the aforesaid scattering indicatrix is mainly determined by type of radiation scattering which can be both specular or diffusive). In general case for said phase change it may be written that

$$\phi_{i,j}^{ob}(\overset{\rho}{x}_{m,k},\beta^{m,k}{}_{i,j}) = 2\pi \frac{d_d(\overset{\upsilon}{x}_{m,k})}{\lambda_l} \frac{1}{\cos \beta^{m,k}{}_{i,j}} \qquad (3)$$

wherein $d_d$ is a distance (or an optical distance if the object is positioned in a medium) from the scattering portion of the surface (206) of the object to the focusing lens object plane (207) (in other words, the input plane of the focusing lens which is optically matched with the receiving plane of the focusing lens in accordance with formula for a thin focusing lens) (see Figure 38); $\beta^{m,k}{}_{i,j}$ is an angle (208) of incidence of partial radiation component being scattered by diffuser cell (ij) on the portion of the object surface at space point $X_{m,k}$; $\alpha_t^d$ — is a symbol, characterizing some physical feature of radiation used for illumination of the diffuser, for which index mark t can show a type of distinctive physical feature of the radiation component (for example, index mark t can indicate a carrying frequency of radiation component some limiting region of the diffuser, illuminated by the radiation source (t can indicate consideration of both said features together for correspondent said symbol and so on); besides index mark d can indicate a concrete value of the correspondent feature (for example, some order number of t can indicate the value 94 GHz for the carrier frequency or indicate the portion the illuminated diffuser cells (5, 25; 20,45), which is disposed within the diffuser cells (5, 25; 20, 45), located between diffuser columns (5, 25) and the diffuser rows (20, 45): d can indicate even a combined set of such values in a case if the index t characterizes set of radiation features of radiation-illuminated radiation).

Voltage at an output of averaging non-linear detector (in assumption that all the harmonics of carrier frequency are filtered) for signal received at the considered receiving point $y_{m,k}$ may be written as

$$\alpha_t^d S_{m,k}(\overset{\sigma}{y}_{m,k}) = \sum_{i,j=1}^{I,J} \left\langle \left(\alpha_t^d \hat{V}_{i,j}^{m,k}\right)^2 \right\rangle_T + 2 \cdot \sum_{l,n=1}^{I,J} \sum_{i,j=1}^{I,J} \alpha_t^d \hat{V}_{i,j}^{m,k} \cdot \alpha_t^d \hat{V}_{l,n}^{m,k} \left\langle \cos\left[ i(\phi_{i,j}^{m,k} - \phi_{l,n}^{m,k}) \right] \right\rangle_T \qquad (4)$$

where T is a characteristic time of the signal averaging by the averaging circuits of said detector. In case, when a relative difference of phase values for the radiation components, being scattered by different diffuser portions, does not vary in time (this is valid in case when the diffuser does not capable to change spatial coherence of diffuser-scattered radiation), then the signal at the output of said detector will consist of both terms of the formula (4) and, thus, will include interference additives, which will depend on the phase differences between the radiation components. In this case various partial images with essentially distinct speckle content may be formed only due to changes of values of radiation physical features which are characterized by the symbol $\alpha_l^d$ (the radiation features are not associated with a spatial coherence of the radiation or, in other words, with various directions of incidence of partial radiation components on the surface of the object). In this case quality of the resultant image may be enhanced (for example, it is valid when only radiation carrier frequency is changed, moreover, in this case the image enhancement will be achieved even if the illumination radiation is directed towards the object. However, in this case, the requirements to the range of the carrier frequency variation will be higher than in case of the usage of the additional scattering diffuser).

For eliminating the second interference term in aforesaid formula said differences of the phases should be varied in time. This case corresponds to case of formation of spatially incoherent images, The case takes place, when during said time duration T the difference of the phases for different radiation components of the signal is essentially changed at least within range 2p radian.

Namely it may be realized due to special designing of the dynamical diffuser in which there are realized the phase changes $\phi_{i,j}^{m,k}$, which are varied in time and different for different cells (i,j) of the diffuser (the changes may be both accidentally varied in time or regularly).

In another realization of the imaging system including the diffuser, the independent components may be created due to distinct modulation of illuminating radiation in every cell (i,j) of the diffuser and correspondingly distinctly received (for revealing both the absolute value of phasors of the received components and squares of the values).

In both cases the second term of sum in aforesaid formula, describing effects of mutual interference of the partial radiation components formed by different cells of the diffuser is suppressed (in this case inter-modulation term in the detected signal becomes equal to zero) while the first term of the sum becomes to be proportional to time duration of exposure T (it is supposed that all the modulations of the signal are removed by previous demodulation circuits). Thus the signal at the averaging non-linear detector output is equal to

$$\alpha_i^d S_{m,k}(\overset{\sigma}{y}_{m,k}) = \sum_{i,j=1}^{I,J}\left(\alpha_i^d \hat{V}_{i,j}^{m,k}\right)^2 \tag{5}$$

Thus, the recorded signal is a sum of squares of modules of amplitudes of received partial components (the sum of squares of lengths of the correspondent phasors (see Figure 36)) and is proportional to sum of powers of these components (every term of the sum is proportional to a power of correspondent radiation components), accumulated during the time T, at that any interference term is negligible.

In essence the formula (5) means that the signal at the output of said averaging non-linear detector is a sum of the averaged powers (in other words spectral densities of radiation exhibiting some set of physical features which were accumulated during an interval of the image exposition) of partial images formed by partial phase-independent radiation components (in accordance with the formula (5) ) each of which was scattered by one of the independent scattering element of the diffuser by accident manner.

When the diffuser-illuminating radiation is scattered by aforesaid distinctive manner, then at every receiving point the different partial radiation components may be received distinctly from each other, at that, received signal may be considered as a set of correspondent constituent (or in other words partial) signals (as separable set of such signals) and characteristics of said constituent signals (for example, their power) may be distinctly determined.

(6)

Such set of the signals allows to rearrange the formula (5) to the formula in which every sum term, being responsible for particular constituent signal, is additionally multiplied by arbitrarily-chosen weight coefficient (thus the set is characterized only by a value).

(7)

Matrix image obtained by aforesaid manner is an array of independent elements (in other words pixels every of which is characterized by said value) every of which will be visualized (being complementarily spatially arranged) in the form of a resultant entire image.

(8)

Besides, weight coefficients will be chosen under requirements of an obtainment of the resultant image exhibiting the best visual quality and/or information content. Since said coefficients may be varied by an arbitrary way (when the signals are converted in digital form and loaded in memory they can be multiply processed by a digital processor), a number of such sums is unlimited, the same is valid for a number of variations of relative contribution of each constituent signal in a total value of correspondent pixel (being equal to the aforesaid weighted sum) of the resultant (entire) image. It allows, in particular, to reduce one of the constituent signals which can correspond to a particular partial radiation component being specularly reflected from particular portion of object surface and which is redundantly large relative to other constituent signals corresponding to diffusely-reflected partial radiation components. Such transformation of a pixel value may be performed for any other pixel of the resultant image, at that, a number of terms summed for formation of the pixel value is equal to a number of constituent signals extracted form a compound signal being received by correspondent receiver and further decoded..

In general case the object is illuminated by radiation which is scattered by a diffuser additionally performing secondary encoding of the scattering radiation, at that the encoding is different for various spatial portions of the diffuser. The radiation, that is directed towards the radiation-scattering diffuser may consists of several physically distinctive radiation components which are primarily encoded (such a double encoding of every radiation components being scattered by the diffuser allow to distinguish ones from each other, such additional doubly-encoded radiation components appears due to scattering the primarily encoded radiation components by the diffuser which, in turn, creates multiple additional radiation components, being encoded for the second time, from every said primarily encoded radiation component).

(9)

From aforesaid set of multi-parametric data a lot of different resultant (entire) images may be obtained due to post-imaging processing. The resultant images will exhibit different specific radiation features (from monochromatic spatially-incoherent images to polychromatic spatially-coherent images and, at last, to polychromatic spatially-incoherent images. The later takes place when the object is illuminated by the "the white" radiation).

(10)

The aforesaid weighted summation synthesis approach is valid for such a case when it is used a traditional diffuser being able to destroy spatial coherence of radiation but without its encoding different spatial portions of which are illuminated with different radiation beams being distinctly encoded. As this takes place, the radiation beams can exhibit all the same radiation physical features except the spatial localization of spatial portions of the diffuser illuminated by them, besides a particular radiation beam illuminates a beam-associated diffuser spatial portion. In this case the compound signal of every receiver consist of a set of independent constituent signals

(11)

every of which exhibits power being equal to an inseparable sum of powers of signals every of which is responsible for the radiation components which are scattered by those non-encoding diffuser cells being disposed within a diffuser portion illuminated by one of said radiation beam. In this case said cells form a distinctive group of the cells which is marked as $(I^c, J^c)$, where c is an index mark of the group. If the group has rectangle form it includes the cells within cell matrix $(I^c_{min}, J^c_{min}, I^c_{max}, J^c_{max})$. If the group has other spatial form the aforesaid power summation also has to be performed over all diffuser cells included into the group.

(12)

A value of every pixel of the resultant (entire) image is determined from criteria of optimization of the resultant image therewith said value is the result of synthesis of correspondent constituent signals (being equal to a weighted summation of time-averaged powers of the signals)

(13)

therewith the weighing coefficients are determined by aforesaid optimization criteria. Said coefficients being associated with the same radiation parameter $\alpha^d_t$ but with different cells groups $(I_c, J_c)$ may be different for different pixels (m,k) of the resultant combined image.
The coefficient may be the same for different pixels so it means that the whole constituent partial image comprising the whole image pixel matrix (M,K), which exhibits radiation physical features $\alpha^d_t$ and $(I_c, J_c)$, will be formed to be added wholly in resultant image. The coefficient may be the same only for portions of the whole image pixel matrix (the matrix is determined by whole set of samples performed by the receiving means in receiving plane of imaging system). The size of the portions may be different and may consist of any amount of pixels up to one pixel only.
At last if it is used the diffuser all cells of which distinctly encode scattering radiation then aforesaid technique of grouping the diffuser cells may be realized by digital manner in memory of a computer. In this case every term of the power summation within a particular group can have own weighing coefficient (it allows to eliminate disturbing signals (for example, ones being responsible for specularly reflected radiation components) already within the cluster

$$\alpha^d_t \, S^{I^c, J^c}_{m,k} \left( \overset{\sigma}{y}_{m,k} \right) = \sum_{I^c_{min}}^{I^c_{max}} \sum_{J^c_{min}}^{J^c_{max}} \left( \alpha^d_t \, R^{m,k}_{i,j} \right) \cdot \left( \alpha^d_t \, \hat{V}^{m,k}_{i,j} \right)^2 \quad (14)$$

This case may be reduced to the previous one, by supposing that the weighting coefficients for terms corresponding the signals belonging the same cluster are equal to each other

$$\alpha^d_t \, R^{m,k}_{i,j} = const \, .$$

The aforesaid technique of clustering allows to form resultant images exhibiting different conditions of object illumination with different characteristic points of illumination and different characteristic spatial sizes of correspondent spatially-incoherent source (correspondingly it may be changed as well a radiation temporal coherence, its polarization, etc.). Such processing may be performed by processing means in real time after procedure of image information acquiring by hardware part of imaging system therewith a lot of peculiarities will be revealed by means of visualization of observable object and following analysis (including computer one) of said images. This is possible even without a usage of encoding diffuser or without a usage of any diffuser at all (in this case object-illuminated radiation components have to be encoded) but a number of possible resultant images and capabilities of said analysis will be reduced.

If cells of the diffuser are electronically controlled and there exists ability to vary modulation parameters of cell-controlling signals then re-arranging of said clusters may be made by hardware as well. As it takes place the modulation parameters (for example, frequencies of shifting of side band components of the radiation which appear after amplitude modulation of radiation by the diffuser cells) may be made almost the same for cells within the same cluster the latter makes possible clustering of the modulation parameters. Such approach allows to jointly select correspondent constituent signals responsible for the same cluster which are encoded by almost the same manner therewith final decoding circuits of receiver may detect only summing power of the correspondent compound signal (which is the result of summing of time-averaged powers of constituent signals from the cluster). In this case there is no necessity to extract a constituent signal from said compound signal. For example, in case of the mentioned amplitude modulation each frequency cluster may be isolated by means of frequency selective circuit, detected in order to separate an envelope and then accumulated by any low-frequency filtering circuit.

At last, it is necessary to find parameters, which are suitable for a general estimation (or even for a complete analysis) of characteristics of any partial constituent image. Such a partial constituent image (characterized by a two-dimensional matrix image with a number of pixels, either corresponding to a number of receiving elements in a case of usage of receiving starring array or to a number of spatial sampling positions of the receiving elements in case of a usage of mechanical scanning of such elements for whole sampling of the image, in the last case 3D sampling of receiving area is possible as well) may be formed by filling every pixel of its image matrix by only such constituent pixel value (for example

$$\alpha_t^d \, S_{m,k}^{I_c,J_c}$$

) from a correspondent whole set of constituent pixel values which is responsible for a constituent signal being characterized by chosen particular set of encoding indexes $\alpha_t^d, (I_c, J_c)$ (in other words, by radiation physical features $\alpha_t^d, (I_c, J_c)$, etc of the correspondent constituent radiation component associated with such a signal). Such an image may be presented in the form of a set'

$$\alpha_t^d \, S^{part}$$

(in other words, in the form of two-dimensional pixel matrix with dimensions (M,K)) of pixels, values of which are responsible only for those constituent signals which exhibit the same chosen particular set of encoded indexes $\alpha_t^d, (I_c, J_c)$ etc.

$$\alpha_t^d \, S^{part} = \sum_{m,k=1}^{M,K} \alpha_t^d \, S_{m,k}^{I_c,J_c} \qquad (15)$$

Since various partial images will exhibit different levels of their average powers, it may be introduced a parameter, characterizing the image average power level. It may be a value (due to the fact that pixel values are non-negative)

$$\alpha_t^d \, \overline{S}_{part}^{I^c,J^c} = \frac{\sum_{m,k=1}^{M,K} \alpha_t^d \, S_{m,k}^{I^c,J^c} (\overset{\sigma}{y}_{m,k})}{M \cdot K} \qquad (16)$$

This parameter shows an average level of image power over all pixels of correspondent constituent image.

Certainly, such a parameter may be introduced, if it is necessary, for any portion (limited number of pixels) of each constituent image.

It should be noted that, as to the technique of formation of resultant images, correspondent partial constituent images and constituent pixel values may be obtained by means of different realizations of hardware. For example, it may be used a starring non-scanning two-dimensional array of receivers or a single mechanically-scanned receiver, radiation physical features of illumination radiation may be scanned in time (for example, carrier frequency of illumination radiation beam may be scanned or the beam may be mechanically scanned along different portions of a diffuser, etc.), then correspondent constituent signals will be obtained in various time moments after correspondent changes of values of said radiation features (properties), moreover an observable object may be illuminated by several partial radiation components simultaneously then the components have to be encoded and the receiver should have corresponded decoding units for distinctive receiving of these components.

At last it is possible a case, when the values of radiation physical features of several constituent radiation components of composed radiation are scanned in time simultaneously and, besides the composed radiation may include components all physical features of which are non-varied in time, in any case correspondent hardware may have (and should have) such a realization which will allow to extract all encoded signals in all sequential time moments of changing/keeping constant of their radiation features values.

Generally for a technique of synthesizing of said resultant images concrete realizations of system hardware may be different. However, system hardware realizations, allowing obtaining the greatest amount of said constituent signals in the shortest time intervals, and in ideal case, simultaneously, are preferable.

An inherent impossibility to obtain object images with high quality in the MMW/SMMW spectral range in cases, when spatially coherence of object-illuminating radiation is traditionally destroyed in area of object localization, is caused by that the resultant signal of receiver is an inseparable sum of multiple terms. In this case every such term is not so individually, as complementary informatively important for forming a quality image as a whole. However, in the MMW/SMMW range in such sum only one term or very limited number of ones dominate (which are responsible for specular reflected radiation components) which are not sufficiently representative components to be used for forming a qualitative image.

Since the aforesaid sum presents a summation of powers (intensities) of said partial radiation components (in receiving area such components are equivalent to corresponded partial image), it is expedient to encode different radiation components. Said encoding approach will allow to separately determine power values of said different encoded signals, after their receiving and decoding in every sampling spatial point within receiving area, and then electronically change their relative contributions for every pixel of the image for enhancing image quality.

In this case there exists possibility to synthesis high quality "diffuse" images even when observable object specurlarly reflects illuminating radiation.

In order to realize the proposed approach it is necessary that each independent cell 10, 11 of diffuser 7 (see Figure 35) preferably performs distinctive regular phase, frequency or amplitude modulation of cell-scattered radiation rather than aforesaid non-distinctive random modulation of one. In this case because primary partial constituent radiation components, which were generated by correspondent radiation sources 3, 4, 5, are initially modulated then their second distinctive modulation by different portions of the diffuser allows to definitively identify correspondent constituent signals, including those signals being responsible for different scattering diffuser portions, in any receivers associated with correspondent receiving input elements 47, 48 of correspondent receiving input array of receiving unit 16 which incorporates correspondent signal-decoding circuits.

As this takes place, the first initial demodulation allows to identify a specific radiation source (and correspondent specific features of the diffuser-illuminating radiation such as carrier frequency, polarization, beam-illuminated diffuser portion), the second modulation allows to point at the specific cell of the diffuser (or diffuser portion) which has scattered the radiation of said source towards illuminating object. In contrast to optics MMW/SMMW apparatus allows to use effective radio-engineering methods for practical realizations of aforesaid operations.

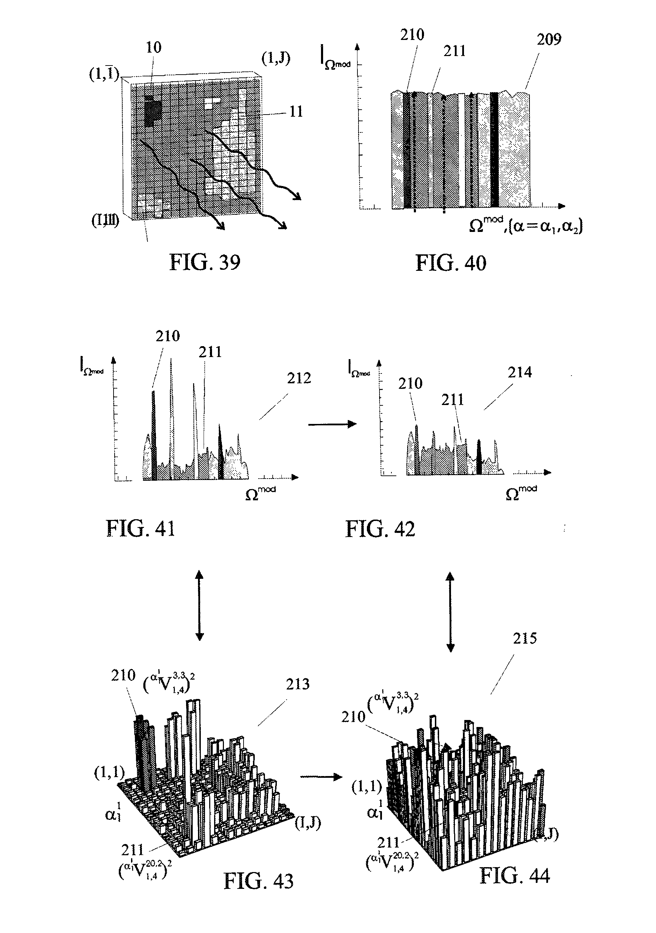

In Figure 39 it is presented a diffuser array 7 (which can have one of aforesaid realizations, for example, it may be the array IQORS 111 showed in Figure 19) providing independent amplitude modulation of incident radiation with every diffuser independent cell. Electronically controlled cells 10, 11 of the diffuser array 7 in Figure 1 (equivalently, cells 112, 113 of the diffuser array 111 in Figure 19) transform incident spatially coherent radiation into scattered radiation with destructed spatial coherence (therewith, the scattered radiation is decomposed into multiple constituent radiation components being modulated distinctly from each other).

Independent cells of any aforesaid encoding diffusers, after their illumination by spatially coherent radiation exhibiting regular wave front, additionally create independent spatial constituent radiation components due to amplitude modulation of the scattered components exhibiting different angles of its incidence on surface of an object disposed within observable area, therewith said radiation components are independently encoded.. The distinct encoding in the case is based on the fact, that scattering properties of the diffuser cells are modulated by modulation signals exhibiting different frequencies, therefore a spectrum of created partial constituent radiation components, scattered with different cells of the diffuser, will be definitely changed. But namely: due to aforesaid amplitude modulation a spectrum composition of every said constituent spatial radiation component will consist of fundamental (zero) spectral component with frequency equal to a carrier frequency of diffuser-illuminating radiation and, additionally, a two side-band components appearing due to said modulation which are shifted relatively to said fundamental component by value being equal to a particular frequency of one of said modulation signal $\Omega^{mod}$. The frequency shifts of said side-band components are different for the radiation scattering by different diffuser cells. The diffuser is developed by such way that intensity of every of radiation components being scattered with the diffuser appears to be the same for different directions within the observable area (that is, the observable area is uniformly illuminated by every of aforesaid radiation components). In Figure 39 there is schematically represented the considered amplitude-modulating diffuser, which is in essence an array of the above-considered modulation structures (for example, the IQORS), each of which has its own frequency of AM modulation $\Omega^{mod}$ of the scattering radiation.

In Figure 40 it is presented a spectrum 209 of one (positive) band of the side-band components of the resultant (reflected from all the set of diffuser cells) radiation at a particular spatial point in the observation area. This spectrum consists of practically uniformly-filled set of spectral lines (210, 211) of said partial radiation components, every of which may be received by the same receiving input element (m, k) and value of every of which corresponds to a power value of that determined separate (decoded) partial constituent radiation component (averaged during exposure time interval) which was scattered towards the observable object with a correspondent cell (i,j) of the diffuser array. Besides, it is supposed that the diffuser array was illuminated by means of radiation, characterized by the determined distinctive physical features or a set of these features $a_i^t$ (as it was considered above), wherein indexes marks indicate the correspondent physical feature and features set or even set of the features, for example the feature may be radiation carrier frequency at 94 GHz. A number of the independent spectral components is equal to a total number of cells in the diffuser array (I X J) therewith J is a number of cell rows in the diffuser array, J is a number of cell columns of one. The values of the spectral components are preferably almost the same at points within the observable area before interaction of correspondent radiation components with the object due to design of the diffuser.

Any relative changes of the constituent radiation components (see Fig.1) after their reflections from the object 9 and, finally, after their collections with the correspondent receiver input elements 47, 48, o f the receiving unit 16 demonstrate differences in said reflections from different portions of observable object 9. Every such spectrally-distinctive constituent radiation component exhibits specific angle direction (ch) of its propagation in observable area. Every such component is a component of diffuser-scattered radiation which is decomposed into constituent radiation components every of which exhibits distinct angle directivity of its propagation due to the fact that every such object-illuminating component is originated from correspondent diffuser spatial point.

Position of every such spectral radiation component in the aforesaid component spectral distribution is definitely associated with spatial localization of a correspondent diffuser cell which is responsible for creation of such radiation component and this fact is essential for providing an analysis of correspondent signals in obtained image signature.

In Figure 41 it is shown a detailed structure 212 of spectral distribution of a signal, including spectral lines 210, 212, which are received with one 47 of the receiving input elements of the receiving array 46 after reflection of radiation from the object and after its focusing on the receiving input element (in a array representation of the receiving array this element has a position (1, 4), i.e., it is positioned in the row 1 and in the column 4 of the receiving array).

For illustration goal in Figure 41 it is shown a dominated "specularly reflected" spectral component 210, associated with the cell 10 of the diffuser (in a array representation of the diffuser-array this cell has a position (3, 3), i. e., it is positioned in the row 3 and in the column 3 of the diffuser) and a weak "diffusively reflected" spectral component 211, associated wit the element 11 (in the array representation of the diffuser-array this cell has a position (20,2)).

For more clear graphical illustration of peculiarities of the spectral line distribution of the decoded signal (210) (which are spectrum presentation of the signal, received by only one receiving input element 47 of the receiving array 46) a two-dimensional diagram-array representation of the distribution is introduced. Structural arrangement of the diagram-array is similar to structural arrangement of the diffuser cell array the cells of which are responsible for correspondent radiation spectral components. The spectrum 212 (see Figure 41) of said signal of the receiving input element 47 (or (1, 4) element in aforesaid array notation) is transformed into an matrix-diagram 213 in such a manner that each spectral line component 210, 211 of the spectrum 212 fills such an matrix element position in the matrix-diagram 213, which is occupied by that cell of the diffuser array 7, which has created said spectral line (the cell creates the spectral line component by distinctly encoded scattering of this component) Thus, appearance of the matrix-diagram 213 allows to exactly estimate a contribution of various cells of the diffuser in a formation of content of signal received by aforesaid receiving input element associated with the image pixel indexes (1, 4).

Analogous matrixes-diagrams will be produced for any of the receiving input elements of the receiving array. Thus a multi-parameter multi-dimensional image signature, received with the M-by-N receiving array in a case when the object 9 is illuminated by a single radiation component, being scattered by the I — by - J encoding diffuser array, is a set of M-by-N pixel groups every of which is a I-by-J matrix of pixel values. When a sizes of the receiving array and the matrix-diagram are large then there can be received a great volume of information being equal to multiplication MxMxIxJxY where Y is a number of bytes in digital representation of value of correspondent constituent signal power in computer memory.

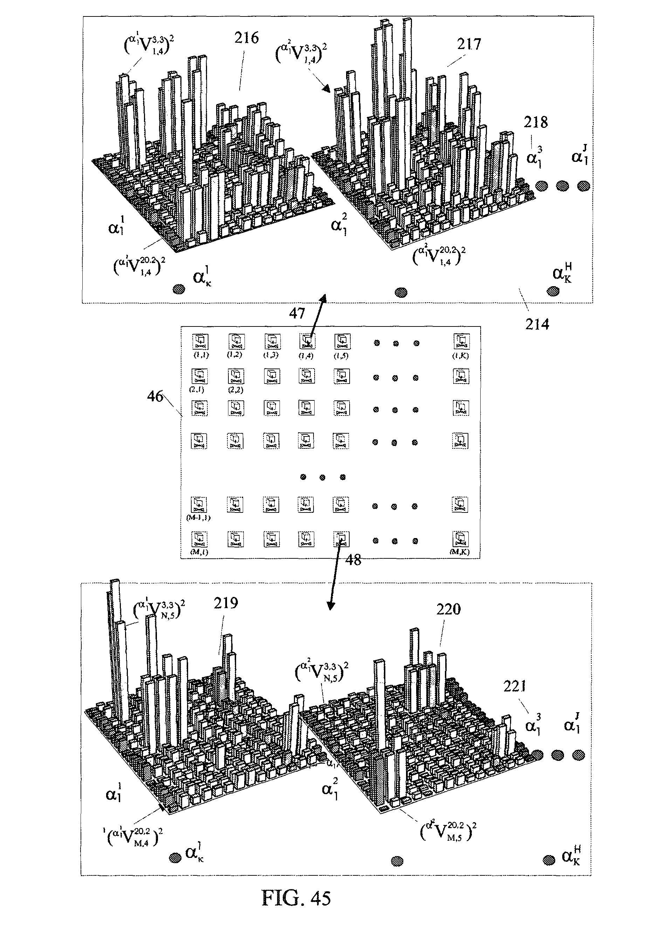

In essence, said matrix-diagram is an arranged set of power values of constituent signals containing in the signal received with correspondent receiving array element (m, k) (it may be such a signal which was received by a receiving element in a particular sampling spatial point when the receiving element is mechanically scanned within an image plane) wherein said constituent signals are originated with correspondent cells of I-by-J diffuser array being illuminated with radiation beam exhibiting a particular set of physical features. Therewith after changing a value of, at least, one of physical features from said physical features set a new matrix-diagram is generated which corresponds to the new value of the physical features (or new values of the set of the features). This situation is illustrated in Figure 45. Every of receiving elements of the receiving array (and correspondingly said pixel group of a multi-parametric multi-dimensional image) receives (contains) information volume which can be presented in the form of a particular set (like set 214 or set 215) of aforesaid matrixes-diagrams (like 216,217,218,... or 219,220,221,... which characterized by a specific value of some radiation feature (or by specific values of the radiation features from said set of radiation features) of diffuser-illuminating radiation.

Besides, it is clear that each of different said sets of the matrixes-diagrams will contain one matrix-diagram characterized by one of changeable said values of said radiation features (or one of changeable said values of said set of said features) of diffuser-illuminating radiation (this takes place because the encoded radiation components are received by all the receiving elements of the receiving array). This is essential that the diffuser may be simultaneously illuminated with distinctly encoded radiation components exhibiting different values of said radiation features or values of said radiation features are scanned or some combination of the cases takes place. It is important that object would not essentially change its foreshortening relative to input pupil of the focusing lens.

A partial constituent image may be formed by means of filling every pixel of the image by a power value of the correspondent constituent signal from correspondent set of matrixes-diagrams, like set 214 associated with said pixel, for example, pixel 47 in Fig. 45 (formed from signals correspondingly received with the receiving element being associated with said pixel), therewith all said power values are ones of those constituent signals which exhibit the same values of radiation features of a correspondent object-illuminating constituent radiation component (such a specific value of carrier frequency, polarization state, and diffuser cell indexes indicating a directivity of the cell-originated radiation component). Partially or fully synthesized (really combined) image may be formed by means of filling every image pixel by a weighted sum of several power values of correspondent constituent signals from such a matrix-diagram set which is associated with the pixel therewith a number of said constituent power values and sets of values of radiation features of the object-illuminating radiation components responsible for the values are the same for different pixels of such images.

Depending on aforesaid choice of said specific constituent power values such images may exhibit different averaged radiation features of image-formed radiation. It may be monochromatic spatially-coherent images, monochromatic spatially-incoherent images, or, for example, polychromatic spatially-coherent images, or, at last, "white" image with radiation exhibiting determined angle of incidence on object surface and etc. (the choice may be performed in accordance with formalism discussed earlier with connections with formulas (5)-(16)). Every such image may reveal additional distinctive information on observable object (for example different distinctive specific peculiarities of object surface may be revealed by illuminating the object by radiation components exhibiting different carrier frequencies or different angles of its incidence on object surface).

Besides, such images may be also obtained by usage of only hardware part of the imaging system, when a formation of aforesaid sums of power values of constituent signals in every pixel-receiver (as it was discussed including in connection formulae (5)-(16)) is realized by units of receiving apparatus.

Combining of the formed partial constitution images (by either hardware or software manner) and forming their summation synthesized image with elimination (or only with a decrease of their large contributions in the summation image) of disturbing partial constitution images with a high level of noises (or reducing of the contributions of their portions which may consist of any number of image pixels down to one pixel) is the most simple but effective processing.

Any relative changes in amplitudes of the constituent radiation components after their scattering with different points of surface (and/or internal points) of object will be strictly determined by scattering properties of the object in these points for every values of radiation features from correspondent set of the features. Some of such radiation components may be reflected specularly by some said points of the object (so called "glint" effect, the specular reflection at determined angles of radiation incidence) and produce very strong constituent signals at output of correspondent element of receiving input array. By analyzing the spectrum of aforesaid constituent signals the constituent signals responsible to specularly-reflected radiation components may be easily determined because they are originated with diffuser cells modulated with correspondent modulation signal frequencies.

In the simplest variant of the aforesaid technique such destructing constituent signals may be simply eliminated or extracted at a stage of processing of the signals. An ability of selective extraction of the destructing constituent signals without any influence on other informational signals of image (even only for one pixel of such an image) is a basic property of said novel MMW/SMMW imaging system, which makes available novel imaging possibilities.

In Figures 42 and 44 it is shown a spectral distribution of power of radiation encoded signals received by the considered receiving element 47 (associated with a correspondent multi-parameter image pixel) of receiving array after extraction of disturbing constituent signals (including signal 210), being responsible for specularly-reflected radiation components, from the correspondent composite signal, therewith such an extraction procedure may be performed by processor 56 (see Fig. 10). A variation of values of spectral components are inherently caused with speckle structure of correspondent partial constituent images, however, averaged deviations of such values relative some their average value are shown to be the same and it provides a high quality of a resultant image after correspondent usage of such spectral lines for the synthesis of the image.

If, besides, such a diffuser is illuminated with various beams of radiation exhibiting different physical values of radiation features (the beams, besides, are differently encoded) or if these values are additionally scanned in time (or only some part of them) then information on object, which can be received by the imaging system, greatly increases. Therewith partial volumes of the information which becomes available for calculating values of correspondent pixels, similar to pixels 47, 48, of resultant images (which can be described in accordance with formula (9)) can be presented in the form of correspondent matrixes- diagrams sets, similar to sets, 214, 215. Such volumes of information allows to use more comprehensive possibilities for analysis of parameters of an observable object and its surface and more comprehensive possibilities of forming high-quality resultant images of any type and physical nature (spatially-incoherent images, quasi-monochromatic spatial coherent ones, "white" ones, etc.).

Therewith there may be revealed unique peculiarities of the objects, which are inaccessible from analysis of traditional images. For example, a large volume of the information allows revealing structural parameters of the object surface from the analysis of partial constituent coherent images. Particularly it is known that speckle distributions of the images are changed while changing values of physical features of object-illuminating radiation. Therewith these changes are different in different pixels of the images depending on values of deviation of the surface in correspondent spatial points from averaged form of the surface. By means of analysis of dependences of such changes versus position of point-like cell of a diffuser and wavelength of illuminating radiation it may be revealed an inclination angle of surface (or the value of the deviation) of the surface at correspondent point and even orientation of the inclination in a case of a large scale inclination. Using such a multi-parameter statistical information on object a relief of the object surface or even object internal structure (when object material is transparent for MMW radiation, for example, in case of ceramic weapon) may be determined.

It is understood that a number of possible procedures of the optimal analysis processing and further synthesis processing of resultant images is greatly increased with a growth of the information volume, which may be obtained on the base of the proposed imaging method.

To show capabilities of the proposed method for synthesizing high quality images some results of digital simulation of procedure for forming a resultant image and enhancement of its quality by means of minimization of influence of disturbing partial constituent image in the process of summation of different of partial constituent images to synthesize their resultant image. For the simulation used partial constituent images are chosen taking into account their probable appearance, however, procedures of their complete or partial summation are processed exactly by means of computer simulation.

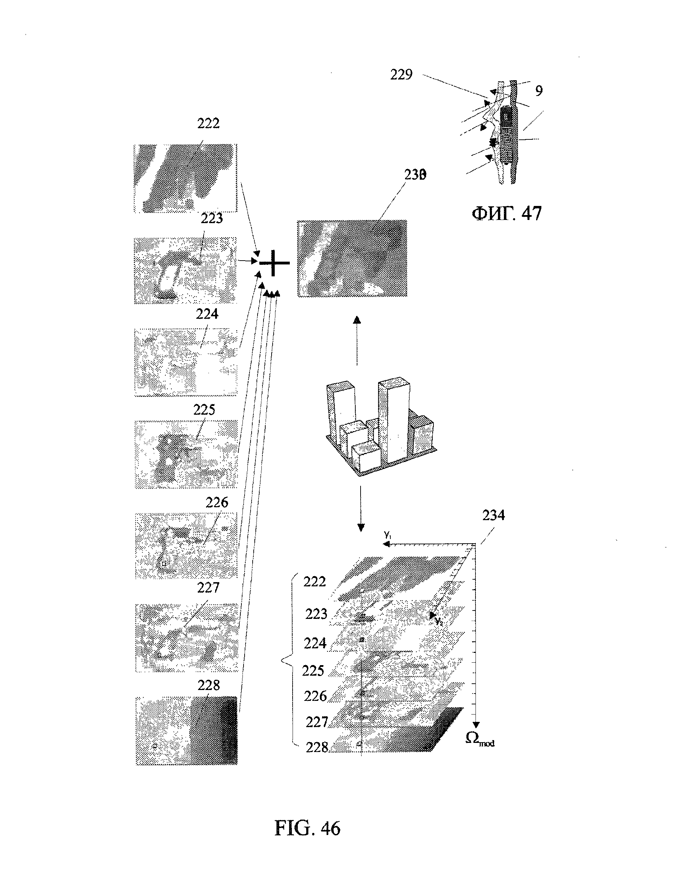

Seven partial constituent images from 222 to 228 (see Figure 46) may be experimentally formed, for example, in such realization of illumination subsystem which is based on usage of a traditional diffuser being capable only to destroy spatial coherence of scattered radiation without any additional encoding of the radiation. Therewith spatially-distinct portions of the diffuser are illuminated with distinctly-encoded independent radiation beams by such way that every of said diffuser spatial portions is illuminated only by one of said illumination beams (see Figs. 30, 33-34). In such case every said radiation beam forms its own partial constituent image, like 222, 223, (such image is characterized with particular averaged angle of incidence of illuminating radiation on observable object), therewith all said images may be simultaneously received with receiving apparatus 16 due to their distinct encoding. From another side, said partial constituent images may be obtained by means of mechanical scanning of a single relatively-narrow radiation beam over said diffuser and, as result, sequential formation of correspondent partial constituent images 222, 223.

In aforesaid cases every partial constituent image may be described with formulae (12) and possible resultant images may be described with formula (13) in the latter weighted coefficients may be different for different constituent component of the resultant compound image (13) for every its pixel.

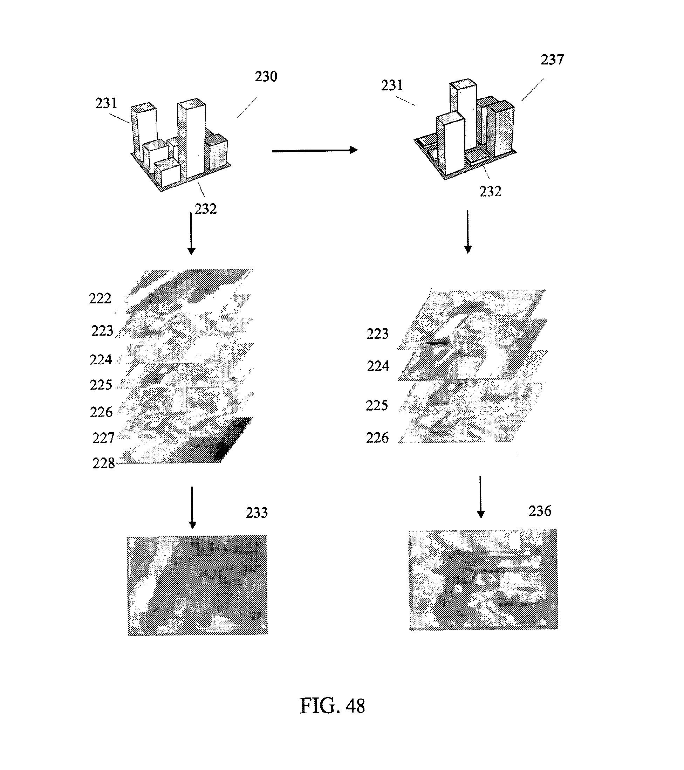

Noise-like partial constituent images 222 and 228 may be naturally generated as a result of illumination of object 9 at particular angles of radiation incidence when correspondent illumination beams are specularly reflected from individual clothes 229 of said object 9 or due to other reasons (see Figure 47).

An averaged matrixes-diagram 230 (obtained as a result of averaging of aforesaid matrixes-diagrams over all pixel values of correspondent partial constituent images for illustration differences in middle energies of correspondent partial constituent images 222-228. Therewith value of the element with indexes (1, 1) of the average matrix-diagram 231 is equal to averaged energy of the image 222, value of the element with indexes (3, 2) of the average matrix-diagram 232 is equal to averaged energy of the image 228.

In the Fig. 34 it is shown a classical resultant image 233 which will be received with usual radiometric imaging system which, traditionally, does not include any aforesaid signal-decoding units. Said image will have such appearance even in case when the observable object 9 will be illuminated with aforesaid radiation when the radiation is formed due to scattering of said distinct radiation beams with diffuser being primarily illuminated with the beams by aforesaid manner (moreover, such image will be characterized with low quality in any cases of illumination of the diffuser). The resultant image 233, if it is used a formalism of the formula (13) for its description, is obtained in a case, when weighted coefficients associated with pixels of summed partial constituent images are the same for any pixels of any said partial constituent images are the same (or, in other words, it is obtained by means of direct non-weighted summation of all the partial constituent images 222 to 228, including also the disturbing images 222 and 228). In this case a noise in the images 222 and 228 is additively added to the object information content in partial constituent images 223 to 227 (the latter images may be also distorted for other reasons (a partial spatial coherence caused limit sizes of correspondent radiation beam), however if only such images are summed without said disturbing images then their summation can generate good quality resultant combined image).

Aforesaid technique of image formation is a classical technique which can be based on usage of any of known methods of radiometric approach in passive imaging or on usage of active imaging approach which is based on simple destruction of object-illuminating destruction.

Thus, anyone radiometric imaging system may receive and visualize only one-parameter images of image 233 type, which will always exhibit low quality in situations when the object 9 is carefully concealed.

On the other hand, proposed imaging system forms multi-parameter image of 234 type in the form of set-stack of partial constituent images, each of which is characterized by own values of physical features of radiation forming such an image.

A simple extraction of three images 222, 227, 228 (see Figure 48) of the seven images leads to formation the set-stack 235, only consisting of the lesser noisy images 223, 224, 225, 226, the summation of which results in the resultant image 236 exhibiting enhanced quality and informational content. Correspondent averaged matrix-diagram 237 is shown in Fig.48 which illustrates above mentioned average power contributions in the new resultant image 236, and the matrix-diagram has no contributions associated with the disturbing images.

Results of mathematical simulation of above-mentioned procedure of summation of contents of the selective images in correspondent image pixels are shown in Fig.48. Therewith, weighting coefficients were taken the same for different pixels belonging to the same partial constituent image but different for different for pixels belonging to different images 222 to 228.

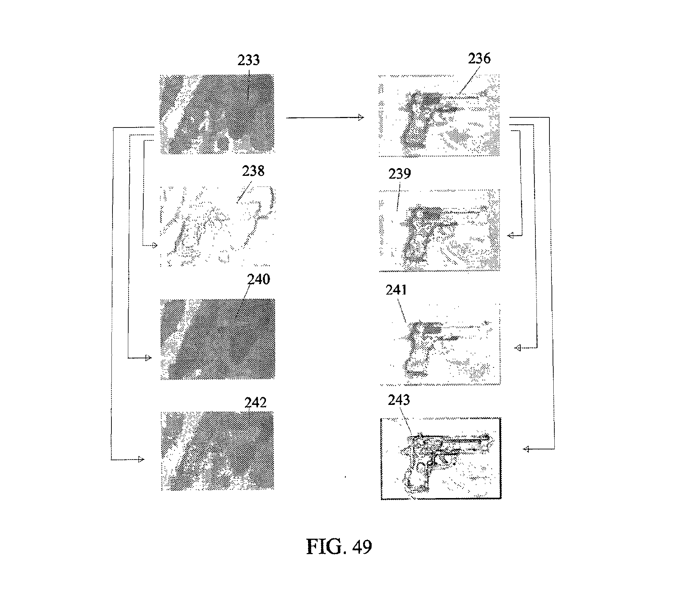

In Fig. 49 there are illustrated possibilities of conventional mathematical post-imaging processing of the initial conventional image (the passive image 233) and the synthesized resultant image 236.

Pairs of images 238, 239; 240, 241; 242, 243 are pairs of such images which are generated as a result of conventional mathematical post-imaging processing of correspondent aforesaid images 233, 236, therewith the processed images in every said pair are subjected to the same type of the processing procedure (spatial low-frequency filtration, contour enhancement, etc). It is easy to see that such processing procedures become more effective, if the noisy image 233 is substitute by its new appearance 236 according to aforesaid method of transformation of said contributions in pixel values of the final resultant image 236 (on the based of aforesaid synthesis method), than applications of conventional methods of processing becomes more effective 239, 240, 243 in comparison with the cases of their applications 238, 240, 242 to original noisy image 233.

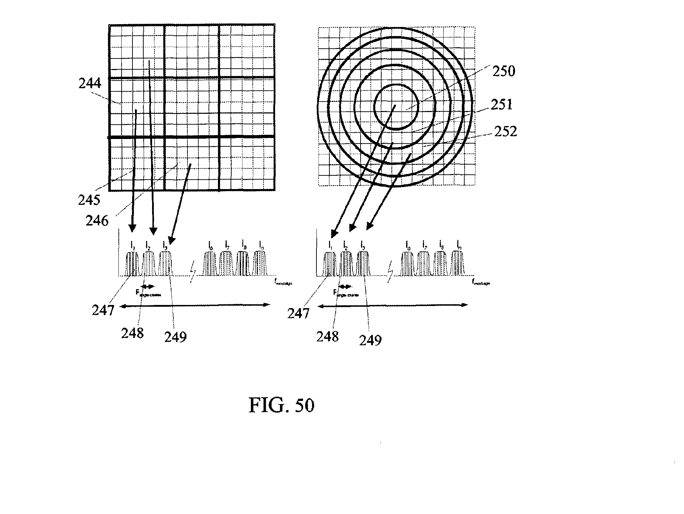

In Fig. 50 there are presented various variants of electronic grouping of cells 10, 11, 12 of the diffuser 7 in clusters. In the first case which is illustrated in the left part of Fig. 50 diffuser cells is grouped in clusters of rectangle shape 244, 245, 246. It takes place due to varying of values of encoding parameters for said cell-encoding signals. In encoding unit such values are generated to be matched with correspondent bands of 247, 248, 249 of such parameters (the bands are characterized with correspondent bandwidths and central values of the encoding parameter) in correspondent decoding unit. In the second case, being illustrated in the right part of the Fig.50, diffuser cells are grouping in clusters of concentric circle forms 250, 251, 252 therewith said encoding signals for which are fitted in the correspondent said resolution bands 247, 248, 249 of encoding parameter of correspondent decoding unit. In the first case correspondent partial constituent images will be characterized with different angles of incidence of correspondent partially-coherent radiation, Second case will allow to distinctly reveal parts of observable object having sphere shapes by analyzing correspondent partial (or in other word, constituent) images. Aforesaid clustering may be realized in real time for radiation components exhibiting different frequencies or frequency bands or different polarization states.

The above-described approach in encoding of radiation components may be realized by means of various methods and approaches.

A main problem of active imaging systems consists in the requirement of extremely possible decreasing of level of radiation 132, lighting the observation region (see Figure 34). This aim, in particular, may be attained by means of the usage of two and more narrow-band oscillators of MMW/SMMW radiation, frequencies of which are shifted relative to each other, and their difference frequencies are synchronically phased by means of high-stabilized oscillators of difference frequencies. In this case, though an instability of frequency radiation of the oscillations themselves, their difference signals, obtained in the receiving device, will be characterized by super-high frequency stability and by a narrowness of band, which are practically identical with respect the same characteristics of signals of the difference frequencies of the mentioned oscillators.

The mentioned difference signals, obtained in anyone receiving channel of the receiving device RD 16 by means of feeding a sum of all said signals, are received by antenna of the receiving element 47 and are amplified at a quadric diode (in case, when it is used a doublet (multiplet) realization of partial radiation, illuminating the object or diffuser, or in a mixer, when one of such signal is additionally fed to a heterodyne input of the mixer, which is a part of the mentioned receiving channel, but the rest signals are fed to a signal input of this mixer).

A phase stabilization of the difference frequency of spectrally shifted carrier two or several such signals allows to resolve this problem of high sensitivity of receiving equipment as well as to realize an effective encoding of partial radiations.

The first problem is resolved by means of maximally possible concentration of signal energy, carrying information about the object reflecting surface properties in an extremely narrow band of the difference signal, separated individually in a receiving portion of system for each element. It takes a place though the fact, consisting in that an intrinsical stability of oscillators of singlet radiation (from one spectral line)) of the MMW/SMMW ranges does not allow in principle to attain the required stabilization of frequency and correspondingly such a spectral concentration. Besides, a super -high energy concentration of the difference signal is attained for frequencies, in a region of which the spectral power of excessive noises of electronic component (but there are the frequencies at least no less than of 10 to 15 MGz, but it is completely attainable that they may be over 3 GHz and so on depending on the realization of doublet line oscillator) becomes minimal one and is characterized by only the spectral power of heat noises, which although are not practically eliminable for none spectral range, but in the mentioned range of the difference frequencies are characterized by negligible small value (for the band of frequencies of 1 GHz it is characterized by the value of $10^{-20}$ Wt).

Thus, a double approach, consisting in the extremely possible narrowing of the difference signal (or, it is equivalent one, of a spectral concentration of energy of a signal, reflected by the object) and its partial stabilization (up to 1 GHz of the difference signal deviation), an on the other hand, a transfer of its frequency in the range with an extremely low level of the electronic equipment (which is a comparable or over 1 GHz) allows to attain an extremely high sensitivity of receiving equipment of the imaging system(but it means that there is attainable a super-low level of active radiation, lighting human wear, that is significantly less in comparison with a general level of outer natural background of radiation in the given spectral range), but, on the other hand, it allows to attain an increased dynamic range of the spectral concentration of the receiving equipment.

The latter is important one in connection with a mirror reflection radiation of this range from observed objects, and it determines a great dynamic range of signals, reflected at arbitrary angles from the observed object surface an at angles of the mirror reflection. Besides, it is obvious that if the dynamic range of the receiving equipment is insufficient one, only radiation components, mirror reflected from the object, will be visually reflected, and it automatically determines an extremely low quality of formed images.

In accordance with the present invention a transceiver of imaging system for an obtainment of complete information about a radiation, dispersed by the object, under conditions of low level of the object illumination power in accordance with the first example of embodiment comprises a heterodyne receiver, intended for a receiving MMW/SMMW radiation of images of said imaging system, a source of MMW/SMMW radiation, intended for an illumination of the object or diffuser, which disperses the source radiation into the direction of the object, besides, the heterodyne receiver includes a receiving antenna, connected to a first sub-harmonic mixer for a receiving a signal at its reference input, a first radiation oscillator, fulfilling a function of the heterodyne for said mixer, a first band filter, connected to the first mixer for a separation of intermediate frequency signal, a second sub-harmonic mixer, a signal input of which is electrically connected to an output of the first band filter, but a reference input is intended for a receiving of reference signal, multiplied with respect to a frequency by a first multiplier of the oscillator signal frequency, a second band filter, an input of which is connected to an output of the second mixer, a high-frequency or low-frequency analyzer of signal, an input of which is connected to an output of the second mixer, means for signal mapping and processing, connected to an output of the analyzer, a source of radiation represents by itself a second radiation oscillator, an output of which is connected to an input of a second frequency multiplier, an output of which is connected to a radiation antenna and includes a control unit for controlling of radiation frequency of the second radiation oscillator by means of frequency of the first radiation oscillator by means of forming a signal of difference frequency of said oscillators and by means of providing with a phase synchronization of said difference signal by the signal of the first oscillator of reference signal by means of regulating of the second oscillator frequency, the oscillator of the reference signal is intended for an activating of the control unit and for a generating of the reference signal for said signal analyzer, but the first and second multipliers of the signal source frequency and the first sub-harmonic are designed with a capability of functioning upon a harmonic of the same order.

In this transceiver the signal analyzer represents by itself two analogous-digital transformer, realizing a synchronous quantization of the signal from the output of the second band filter and multiplied signal of the reference signal oscillator from the first frequency multiplier and a processor, having a memory for loading digital file of said quantized signals and designed with a capability of a computation of amplitude and phase information of the signals, received by the receiver.

In this transceiver the control unit represents by itself a first directional coupler, connected to an output of the first oscillator and realizing a division of the first oscillator signal with respect to a power into a smaller and greater portions, a second directional coupler, connected to an output of the second oscillator and realizing a division of the first oscillator signal with respect to a power into a smaller and greater portions, a mixer, inputs of which are intended for a receiving of the smaller portions of said first and second oscillators and which realizes a separation of a difference frequency signal out of said signals for a feeding of this difference signal via the band filter into one input of phase detector, another input of which is intended for a receiving a signal of said reference signal oscillator, but an error signal of the phase detector, which is a signal of phase mismatch between the difference frequency signal of the signals of said first and second oscillators and the signal of the reference frequency oscillator, is fed onto a controlling electrode of the second oscillator for a variation of the frequency signal of the second oscillator and for a decrease of said phase mismatch.

The heterodyne receiver of the transceiver may be mounted on a scanning device with a capability to receive of complete image radiation, formed by a system of imaging by means of the heterodyne receiver scanning in a plane of sharp image of this system.

The heterodyne receiver of the transceiver may be designed in the form of an array of heterodyne receivers, disposed in such a manner that phase centers of said antenna receivers of each heterodyne receivers coincide with a plane of sharp image of imaging system, but each heterodyne receiver is provided with a directional coupler for a transmission a portion of the power of the second oscillator onto a heterodyne input of the corresponding first mixer, but said second oscillator is a general one for all the heterodyne receivers, each of which is designed with a capability to receive a portion of its power via the corresponding direction coupler.

In accordance with the second embodiment example a transceiver of system for imaging of MMW/SMMW images for an obtainment of detail information about a radiation, dispersed by the object, under conditions of low level of the object illumination power comprises a receiver for direct amplification and detection of MMW/SMMW radiation, intended for a receiving of MMW/SMMW radiation images in said system for imaging, a source of composite MMW/SMMW radiation, intended for an illumination of the object or diffuser, which disperses the source radiation into the direction of the object, besides, the receiver for direct amplification and detection includes a receiving antenna, connected to an amplifier of high frequency, a signal of which is fed into a quadratic detector, an analyzer of signal, an input of which is connected via a filter to an output of said quadratic detector, means for signal mapping and processing, connected to an output of the analyzer, a source of composite radiation, consisting of a first radiation oscillator, connected to a first directional coupler and dividing the signal of the first oscillator with respect to a power onto a greater and smaller portions, and of a second radiation oscillator, connected to a second directional coupler, dividing the signal of the second oscillator with respect to a power onto a greater and smaller portions, of output antenna system, intended for a transmission of said greater portions of power of signals of the first and second oscillators in a free space preferably by the same way, a control unit, onto inputs of which from the corresponding outputs of said directional couplers there are fed said signals of smaller power of correspondingly first and second oscillators and which is intended for controlling of radiation frequency of the second radiation oscillator by means of frequency of the first radiation oscillator, and an oscillator of reference signal, intended for an activating of the control unit and for a generating of the reference signal for said signal analyzer.

The analyzer of signal for this example may represent by itself a band filter with a central pass frequency, corresponding to a frequency of said oscillator of reference signal, connected to an analogous- digital transformer, realizing digital samplings of signal and fillings by these samplings a memory of processor, realizing a processing of these samplings in order to obtain a spectral composition of this signal. Besides, the analyzer may additionally consist of mixer, a signal input of which is connected to a an output of said band filter, but onto a reference input of said mixer there is fed a signal of the reference signal oscillator, and an output signal of said mixer via the filter is fed onto an input of the analogous-digital transformer, realizing digital samplings of signal and fillings by these samplings the memory of the processor, besides the processor realizes a digital processing of these samplings in order to obtain a spectral composition of this signal.

The control unit for the transceiver in case of this example of embodiment represents by itself a mixer, inputs of which are intended for a receiving of the smaller signal portions of said first and second oscillators and are connected to the corresponding outputs of said first and second directional couplers, and which realizes a separation of the difference frequency signal out of said signals for feeding of this difference frequency signal via the band filter onto one input of the phase detector, another input of which is intended for a receiving of signal of said reference signal oscillator, but an error signal of the phase detector, which is a signal of phase mismatch between the difference frequency signal of the signals of said first and second oscillators and the signal of the back-up frequency oscillator, is fed onto a controlling electrode of the second oscillator for a variation of the frequency signal of the second oscillator and for a decrease of said phase mismatch.

Besides, the receiver for the direct amplification and detection may be mounted on a scanning device with a capability to receive of complete image radiation, formed by a system of imaging by means of the heterodyne receiver scanning in a plane of sharp image of this system.

In a region of sharp imaging of focusing element it may be positioned an array of said receivers for the direct amplification and detection in such a manner that antennae of said receivers are positioned near to a plane of sharp image of the focusing element.

In case of the usage of a set of said composite radiation sources, upon which frequencies of signals of the reference signal oscillators o of the corresponding sources differ from each other, to an output of the quadratic detector of the receiver for the direct amplification and detection there are parallel connected several said analyzers of signals, a number of which equals to a number of said sources of composite radiation in said set, and a central frequency of the band filter of the corresponding analyzer equals to a frequency of signal of the reference oscillator of the corresponding source of the composite radiation.

In case of the usage of the set of said sources of composite radiation, upon which the frequencies of signals of the oscillator of the reference signals of the corresponding sources differ from each other, to an output of the quadratic detector of the receiver for the direct amplification and detection there are parallel connected several said analyzers of signals, a number of which equals to a number of said sources of composite radiation in said set, and a central frequency of the band filter of the corresponding analyzer equals to a frequency of signal of the reference oscillator of the corresponding source of the composite radiation, besides onto an reference input of mixer of said signal analyzer there is fed a signal of reference oscillator of said source of the composite radiation.

Besides, various sources of the composite radiation from the set of the sources are intended for an illumination of preferably spatial-different portions of the object or diffuser. Various sources of the composite radiation from the set of sources have essentially different their average frequencies, calculate as an arithmetic mean of frequencies of corresponding paired oscillators.

A radiation of said greater portion of signal of the first oscillator, distributing in a free space, is preferably linearly polarized in a first spatial direction, but a radiation of said greater portion of signal of the second oscillator, distributing in a free space, is preferably linearly polarized in a second spatial direction. In this case the first spatial direction coincides with the second spatial direction or the first spatial direction is orthogonal to the second spatial direction.

The receiver may be provided with a polarization means, separating a radiation, linearly polarized in the first spatial direction, from a radiation, impinging on it, or the receiver may be provided with polarization means, separating a radiation, linearly polarized in the second spatial direction, from a radiation, impinging on it.

The frequencies of the first and second oscillators of the composite radiation are simultaneously increased or decreased in a sufficiently wide range of frequencies, but said control unit saves said controlling of frequency and phase of the second oscillator by means of a frequency and phase of the first oscillator in all the mentioned range of the frequencies.

In accordance with a sequential embodiment example a transceiver of system for imaging of MMW/SMMW images for an obtainment of detail information about a radiation, dispersed by the object, under conditions of low level of the object illumination power comprises a receiver for direct amplification and detection of MMW/SMMW radiation, intended for a receiving of MMW/SMMW radiation images in said system for imaging in a plane of its focusing element sharp image, a source of MMW/SMMW radiation, intended for an illumination of the object, the which disperses the source radiation into the direction of the object, the receiver for direct amplification and detection includes a receiving antenna, connected to an amplifier of high frequency, a signal of which is fed onto a quadratic detector, a high-frequency of low-frequency analyzer of signal, an input of which is connected via a filter to an output of said quadratic detector, means for mapping and processing, connected to an output of the signal analyzer, the radiation source consists of a composite radiation source and diffuser, which is illuminated by a radiation of said composite radiation source and which disperses to a side of the object a radiation, impinging on the diffuser, said diffuser consists of spatially distributed point dispersers, realizing a distinctive modulation of radiation, dispersed by them, a source of composite radiation, consisting of a first radiation oscillator, connected to a first directional coupler and dividing the signal of the first oscillator with respect to a power onto a greater and smaller portions, and of a second radiation oscillator, connected to a second directional coupler, dividing the signal of the second oscillator with respect to a power onto a greater and smaller portions, of output antenna system, intended for a transmission of said greater portions of power of signals of the first and second oscillators in a free space preferably by the same way, a control unit, onto inputs of which from the corresponding outputs of said directional couplers there are fed said signals of smaller power of correspondingly first and second oscillators and which is intended for controlling of radiation frequency of the second radiation oscillator by means of frequency of the first radiation oscillator, and an oscillator of reference signal, intended for an activating of the control unit and for a generating of the reference signal for said signal analyzer.

In this example of the embodiment, said signal analyzer represents by itself a band filter with a central pass frequency, corresponding to a corresponding frequency of said reference signal oscillator, connected to an analogous-digital transformer, realizing digital samplings of signal and fillings by these samplings a memory of processor, realizing a processing of these samplings in order to obtain a spectral composition of this signal. Said analyzer may additionally consist of mixer, a signal input of which is connected to an output of said band filter, but onto a reference input of said mixer there is fed a signal of the reference signal oscillator, and an output signal of said mixer via the filter is fed onto an input of the analogous-digital transformer, realizing digital samplings of signal and fillings by these samplings the memory of the processor, besides the processor realizes a digital processing of these samplings in order to obtain a spectral composition of this signal.

For this example the control unit represents by itself a mixer, inputs of which are intended for a receiving of the smaller signal portions of said first and second oscillators and are connected to the corresponding outputs of said first and second directional couplers, and which realizes a separation of the difference frequency signal out of said signals for feeding of this difference frequency signal via the band filter onto one input of the phase detector, another input of which is intended for a receiving of signal of said reference signal oscillator, but an error signal of the phase detector, which is a signal of phase mismatch between the difference frequency signal of the signals of said first and second oscillators and the signal of the reference frequency oscillator, is fed onto a controlling electrode of the second oscillator for a variation of the frequency signal of the second oscillator and for a decrease of said phase mismatch.

It may be used a set of said sources of composite radiation, besides the frequencies of signals of the oscillators of the reference signals of the corresponding sources should differ from each other, but to an output of the quadratic detector of the receiver for the direct amplification and detection there are parallel connected several said analyzers of signals, a number of which equals to a number of said sources of composite radiation in said set, and a central frequency of the band filter of the corresponding analyzer equals to a frequency of signal of the reference oscillator of the corresponding source of the composite radiation.

For this example of embodiment it also may be used a set of said sources of composite radiation, besides, the frequencies of signals of the oscillator of the reference signals of the corresponding sources differ from each other, to an output of the quadratic detector of the receiver for the direct amplification and detection there are parallel connected several said analyzers of signals, a number of which equals to a number of said sources of composite radiation in said set, and a central frequency of the band filter of the corresponding analyzer equals to a frequency of signal of the reference oscillator of the corresponding source of the composite radiation, besides onto an reference input of mixer of said signal analyzer there is fed a signal of reference oscillator of said source of the composite radiation, and, besides, onto an reference input of mixer of said signal analyzer there is fed a signal of reference oscillator of said source of the composite radiation.

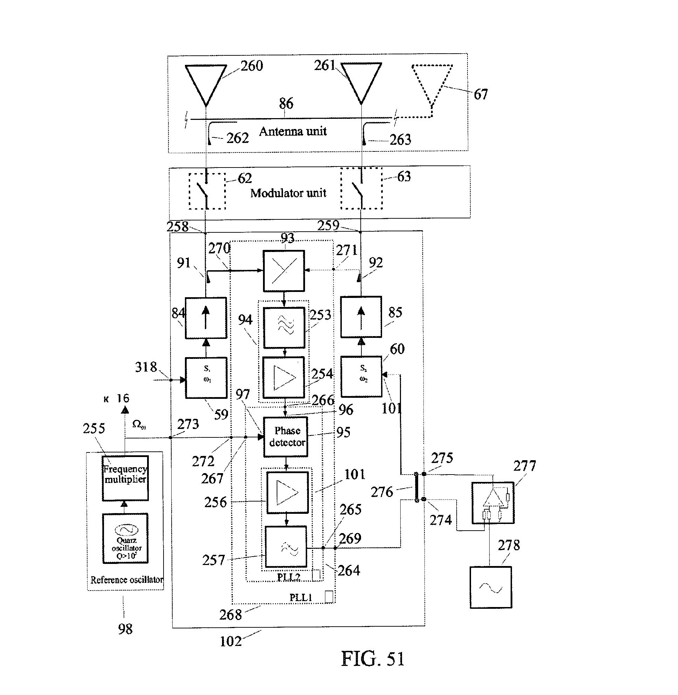

The simplest functional diagram of paired oscillators with a stabilized frequency of their difference signal is represented in Figure 51 (early named the oscillator of doublet line upon a consideration of its functional deepened diagram in a composition of the oscillator of multi-frequency signals (see Figure 14). Further such an oscillator will be called as an oscillator of mutually coherent signals (OMCS) or an oscillator of double (or several ) carrier frequency (in case of its using in systems of telecommunication).

The device (see Figure 51) consists of two oscillators 59 and 60 of MMW/SMMVV ranges, operating at the same frequency, and at least one oscillator 60 is the VCO (the oscillator, the frequency of which is controlled by means of external voltage). In case of waveguide realization of the oscillation at their outputs there are located rectifiers 84, 85 for uncoupling of the oscillators out of the rest parts of circuit. By means of directional couplers 91 and 92 smaller parts of power of signals of the oscillators 59 and 60 via their corresponding outputs are fed onto the mixer (quadratic transformer) 93 inputs in order to a formation of the difference frequency signal, said difference signal from the mixer 93 output is fed onto the input of the frequency selective circuit 94, consisting of a band filter 253 (tuned on a central frequency of the difference signal), in series connected to an amplifier 254, and from an output of the amplifier 254 is fed onto one of inputs 96 of the phase detector 95, onto another input 97 of the phase detector 95 there are fed a signal of the reference crystal oscillator 98 or one of its harmonics, formed in a frequency multiplier 255, in series connected to said reference crystal oscillator 98 (this oscillator may be crystal one an thermo-stabilized, therefore phase noises of such an oscillator are neglible small ones). An error signal from the input of the phase detector 95 is fed to an input of a filter 25 6 and from its output it is fed on an amplifier 257 of the frequency-selective amplification unit 100, besides, a band of passing frequencies of the filter 256 is selected by optimal way in order to provision due (with a low level of phase noises and/or filtration of high-frequency informational components of the difference signal ) functioning of the above-described phase-lock loop and then onto the control electrode of the oscillator VCO 79. Upon a correct selection of pass bands of the filters 254 and 255, the error signal, formed by the phase detector 95, adjusts a frequency of the VCO 60 in order to decrease (eliminate) phase differences between said difference signal of two oscillators 59 and 60 and the signal of the frequency standard 98 (98, 255).

Greater portions of the signals of the oscillators 59 and 60 from corresponding outputs 258 and 259 of the directional couplers 91 and 92 than may be radiated in open space (or may be used by another way), including after passing of the corresponding modulators (amplitude or phase) modulators 62, 63, each of which is in series connected to a corresponding radiating antenna 260 and 261, which may be both the individual antennae 260, 261 for each of channels for passing the greater portions of the signals of the oscillators 59 and 60 and the antennae, integrated by means of couplers 262, 263 into the general waveguide 86 for a radiation via the general antenna 67. The frequencies of such signals are shifted with respect to each other by a frequency of the oscillator 98 (98, 255) of spectrally pure difference signal and their difference signal is phase-synchronized with respect to the signal of said frequency standard 98, besides, said difference signal after a distribution of the signals of the oscillators 59, 60 till the receiving device 16 (see Figure 1) and after a sequential receiving by this device may be separated in the corresponding amplification channel of this receiving device 16 (see Figure 10) and this once again separated difference signal will possess of spectral characteristics of signal of the stabilized reference oscillator 98.

The frequencies of the oscillators 59 and 60 may be synchronously varied by value in principle in any limits in the side of simultaneous increase (or simultaneous decrease), for example, under the control of the scanning unit 90 (see Figure 14), besides, owing to the described circuit diagram of the phase-lock loop the difference signal of these oscillators will be as before phase-synchronized by the above-mentioned way and will possess the above-mentioned spectral purity (but signals of separate oscillators, swept in this pair by frequency, will possess of mutual phase coherence). A range of swept paired oscillators may be sufficiently large one (in case of LRW or IIG oscillators it may overlap till several tens of GHz), and it allows to obtain partial images upon a super-low level of backlighting in a wide range of frequencies, obtaining a principally novel information in the form of novel partial spectrally distinctive images.

Additionally such an oscillator may be also used for three-dimensional imaging in a quasi-optic circuit diagram, in which the signal of one of the swept oscillators 59 is used for an illumination of the object, but the signal of another oscillator 60 is fed onto the heterodyne input of the mixer in a channel of amplification of the receiving device 16, the separated difference signal of the output of the mixer will be mutually phase-coherent with respect to the signal of the stabilized frequency standard 98 for phase signal of difference frequencies, and besides it will comprise a phase information, concerning a distribution of signal of the oscillator 59 till the object, its reflecting and focusing on a receiving array. The feed of said difference signal from an output of the mixer onto a signal input of sequential synchronous detector and the feed of signal of the difference signal oscillator 98 to a support input of the synchronous detector (by means of coaxial cable) provide with an obtainment on the output of the synchronous detector quadrature signals, comprising an information about an amplitude and a phase of the signal of the oscillator 59, reflected from the object. An obtainment of such signals for various carrier frequencies of the oscillator 59 (positioned equidistantly on an axis of the frequencies) and a fulfillment of fast Fourier transforms with the obtained file of complex numbers will give information about a reflection coefficient and depth of disposition of centers, dispersing a radiation, in accordance with radar technique of frequency-synthesized impulse. Besides, it will be the information about the reflected radiation, focused only on one of receiving elements, electrically connected to the considered amplification channel of RD 16. Upon a carrying out of the same operations with signals, received by other receiving channels, (the receiving elements 47, 48 of which (as of early considered one) is optically mated with corresponding reflecting portions - points of the object 9) it will be obtained the hole information, on the grounds of which it may be constituted a volume image of the object, being in a field of view of the focusing element (lens) 14 (see Figure 1). It should be noted that such three-dimensional images (obtained without of diffuser) will suffer from mirror reflections, however, speckle distortions will be minimized, since various phase of signals, reflected from various portions, distinctly positioned by depth, will be remitted into the information about the depth of position, and it make such a system free from speckle distortion along with a capability to form three-dimensional images.

The above-shown circuit diagram demonstrates functional couplings of the oscillator device, realiz ed in a waveguide embodiment. The same device may be designed in the integral embodiment in the form of monolithic semiconductor device, in this case, in accordance with the monolithic embodiment of oscillator devices, the antennae 260 and 261 are united with the corresponding oscillators 59, 60 and serve both as really in a function of planar antennae for a radiation of generated signals in open space and for corresponding resonator systems as a part of corresponding oscillators (properly connected to a corresponding non-linear element with a negative impedance for a generation of signal, for example, to Gunn's diode). In this case the modulators 62, 63 are excluded out of composite oscillator (here it may be modulated a difference frequency of such an oscillator). The directional rectifiers may be also excluded. The directional couplers 91, 92 in a flat (band) embodiment fulfils the same function of extracting of smaller portions of energies of the signals, generated by the planar oscillators 59, 60, and of feeding them into the planar mixer 93. All the other elements, including also the phase detector 95 and frequency-amplification units 94, 100 may be carried out in accordance with the integral technology. The oscillator 98 of reference signal of stabilized type should preferably be outer one.

Such a paired oscillator may be very inexpensive (upon a mass production) and may find the wide usage in receiving and transmitting and telecommunication MMW/SMMW systems (including for inter-computer communication). Besides, on one base it may be positioned several paired oscillators with various difference frequency and even with various own frequencies of oscillators (upon a variation of their antennae configuration). Antennae may be various ones for various pairs and paired antennae may be differently oriented on one base (equally for antennae in pair, but differently for various pairs).

In Figure 51 the phase detector 95 an the selective unit 94 (the amplifier 257- the filter 256 is united in an unit of the phase-lock loop 2, having one output 165, coinciding with an output of the amplifier 257, and two inputs, by an input 266 coinciding with the signal input 96 of the phase detector 95, and by an input 267 coinciding with another (reference) input 97 of the phase detector 95, besides, the additionally mentioned the united unit 264 (PLL2) is united with the mixer 93 and the frequency-selective unit (the amplifier 254 - the filter 253) into united servocontrolling unit 268 (phase-lock loop 1- PLL1), having an output 269, coinciding (electrically connected to ) with the output 265 of the unit 264, and three inputs, an input 270 is at the same time the first input of the mixer 93, the second input 271 of the unit 268 is the second input of the mixer element 93, and the third input 272 coincides with the reference input 97 of the phase detector 95.

Finally, the unit 268 of the phase-lock loop 1, united with the oscillators 59, 60, the directional rectifiers 84, 85 and the corresponding the directional couplers 91, 92, form a paired oscillator of mutual-coherent signals (OMCS) 102 or in other terminology - the oscillator 102 of doublet (multiplet) line, if the mentioned OMCS is specifically used for a radiation in a free space of both the spectral components via the output united antenna 67 (see Figure 51) or by means of two preferably equally oriented antennae 260, 261, having preferably the same diagrams of of directivity.

The unit 102 has two outputs 258 and 259, which coincide with outputs of the corresponding directional couplers 91, 92, onto which the greater portions of energies of signals of corresponding oscillators 59,60 are fed, one input 273, coinciding with the input of the phase detector 95, intended for the feed of reference signal of the frequency standard 98, and two contact groups 274, 275, usually connected with each other by means of cross connection 276, (the presence of connection of the contact group 274, 275 by means of cross connection 276 provides with an electrical connection of the amplifier 257 output and the control electrode of the VCO 60 with a corresponding feed of error signal, formed by the phase detector 95 immediately onto the control electrode 101 of the VCO 60). In case of the absence of the cross connection 276 the mentioned error signal of the phase detector 95 may be fed onto one of inputs of summator 277 of voltage signal, onto other input of the summator it may be fed a modulating signal (in the form of signal voltage variation depending on time, for example) for PM/FM encoding of difference signal for the oscillators 59, 60 (or for a transmission of signal from a source 278 of messages, an output of which is electrically connected to one of inputs of the summator 277 in case, when the oscillator 102 is used as a transmitter of transceiver). As it was above mentioned (see Figure 14) bands of passage of the units 94, 100 should be selected in such a manner that a modulating (informational signal), arising on the output of the mixer 93 as a part of the general difference signal, is maximally suppressed and does not pass onto the output 269 of the unit 268. It provides with a high stability of difference signal frequency during intervals of the absence of the modulating signal of the oscillator 276 and guarantees a stability of corresponding parameters FM/PM modulating of the difference signal.

Such references, associated in a combining of various elements in various units, are accomplished for simplicity of sequent material presentation.

The above-considered oscillator OMCS and oscillators, which are analogous with respect to it and which are based on the principle of radiation practically from one phase center (of from several centers, but nearly positioned ) of mutual-coherent (two or more) signals, with modulated difference frequencies may represent a significant practical interest in communication MMW/SMMW systems. Such systems may find a wide application in wireless high-velocity (wide-band) inter-computer communication, relay broad-band communication, for wireless communication of various survival systems inside of buildings, for a concealed communication, if carrier frequencies of oscillators are positioned in bands of MMW/SMMW radiation absorption by the atmosphere (a stealthiness is also provided by means of forced deviation (it may be in accordance with an accidental law) proper of carrier frequencies upon a conservation of the mentioned phasing of the difference frequencies) and so on.

Besides, corresponding receiving and transmitting systems allow significantly to concentrate informational channels of communication (by means of temporary stability of spectral localization of corresponding difference frequencies), broadening at the same time both the band of one of such a channel (phase or frequency deviation of the difference signal may be as is wished great) and the range of frequencies, occupied by such channels (an absolute value of the difference signal may be as is wished great, besides a range of carrier frequencies of MMW/SMMW range in many times exceeds ranges of radio frequencies and microwaves frequencies. In this case the given device represents by itself a transmitting tract of transceiver with double (or with many) carrier frequency (frequencies), which may be used for aims of telecommunication with an improved noise immunity and without of additional restrictions with respect a band of informational signal. Besides, it may be used any modulation/demodulation methods, based on a principle of coherent (improved noise immunity and selectiveness) demodulation of received signals, since the difference frequency, presenting in a signal spectrum, possess of improved phase coherence. (There is a tremendous quantity of approaches to make it discrete one). Phase modulators may operate in anti-phase for an increase of depth or effectiveness of phase modulation.

In such systems by means of signal of communication it is modulated a difference signal (or signals in case of a number of mutually-coherent signals in the general signal more than two).

For a realization of duplex communication at an output of such a transceiver it may be mounted a frequency diplexer, besides, a difference of transmission frequency and receiving frequency may be sufficiently great in virtue of a principle of device realization, and it provides with an improved uncoupling of the transmitting channels and receiving channels. The uncoupling of the transmitting channels and receiving channels may be provided also by means of difference of frequencies of corresponding difference signals (correspondingly of transmission and detection).

The difference signal itself may be modulated by various ways. The simplest method is above described in connection with a discussion of the OMCS of waveguide realization in accordance with Figure 14 as well as in accordance with the general circuit diagram of Figure 51. The modulators 62 and 63, being a part of corresponding independent signal channels, may realize both the amplitude modulation of the carrier frequencies and the phase modulation of the carrier frequencies (besides, at the same time there are used both the modulators 62, 63, or only one modulator 63, the second carrier frequency plays a part in reference frequency for creation of difference signal in a receiving device of transceiver).

Another approach in realization of frequency (or phase) modulation of the difference signal consists in an addition of additional signal of the communication source 277, modulated with respect to an amplitude, to said error signal of the phase detector 95 even if by means of summation of these signals by the unit 276 (for example, by means of summing operational amplifier or more fast-acting device).

Another capability of modulation of two-frequency carrier consists in the frequency-phase modulation of signal of frequency standard 98 (the source of difference frequency signal). The frequency (phase) modulation of the difference signal my means of the OMCS (see Figure 51) is transferred into the corresponding difference signal. In this case a quick-action of device is determined by a realization of feedback circuit of the phase-lock loop.

A denomination of the last two approaches consists in a simplicity of integral and planar embodiment of such a transmitter, when a cost of oscillators (let us tell on the Gunn's diode) is not high one in virtue of low requirements to a stabilization of their absolute frequencies, besides, the MM mixer 95 as by the way all the elements of the OMCS device may be positioned at the same base (and is carried out by means of single integral technology as the technology of MM oscillators).

As oscillators it may be used oscillators of any ranges, beginning from IIG oscillators of the range of microwave frequencies(using sequential multipliers of frequency), easy changed in the range of 8 to 18 GHz, Gunn's diodes of MM range, lamps of return wave, changed in the range of tens of GHz and produced for spectral ranges up to THz.

Besides, the circuit diagram of the OMCS may be added by multipliers of frequencies, connected in series by one in each independent channel before and after the modulators 62, 63 (in this case the modulators should be tuned on a corresponding frequency range of functioning).

The multipliers of frequencies may be realized on the Schottky's diodes, allowing to obtain harmonics of pumping signal with a low level of looses during a transformation up to the TGz range.

Each such a multiplier may be provided with a frequency-selective band filter, separating harmonics desirable multiplicity (further the presence of said ban filter is suggested, but in sequential corresponding Figures it is not shown). The usage of multipliers makes possible to use anyone portion of MMW/SMMW spectrum for carriers, radiated in a free space by means of antennae 260, 261 (67) (see Figure 51), using as master oscillators 59, 60 sources of considerably low frequency (for example, a radiation of microwave frequency of IIG oscillators may be transferred into a MM range by means of multiplication of frequencies with a factor 3 to 5). The real factor of multiplication should not be more than a value of 8 to 10 (otherwise a level of phase noises begins rapidly to grow and to increase looses of transformation).

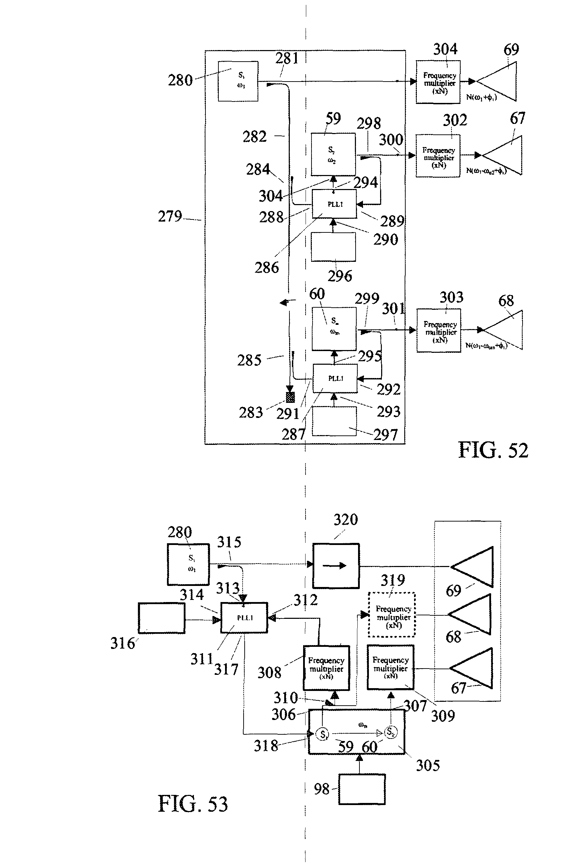

One of realizations of oscillator OMCS 279 with a number of generated signals more than two and with different value of difference frequencies is represented in Figure 52. As a part of OMCS 279 there are the oscillators 280, 59, 60 of separate signals, all or with the exception of one oscillator 280 are VCO ones. One of the oscillators, but namely: the oscillator 280 is selected as leading one, after signal phase of which by means of corresponding units of phase-lock loop the phases of the rest oscillators - VCO 59, 60 will follow. To this end a smaller portion of energy of the oscillator 280 by means of the directional coupler 281 is furcated into the waveguide channel 282 (of waveguide or micro-band embodiment depending on the realizations of oscillators 280, 59, 60), finished by means of mated load 283 for a minimization of reflections, and by the set of the directional couplers 284, 285, each of which provides with a corresponding portion of energy of signal of leading oscillator 280 control circuits of phase-lock loop of driven oscillators 59, 60. As a part of said control circuit there are units 286, 287, which functionally completely correspond to the second united unit 268 (see Figure 51), having inputs 288, 289, 290 (of the unit 286) and inputs 291, 292, 293 (of unit 287), which are functionally equivalent to the corresponding inputs 270, 271 and 272 of the unit 268, but outputs 294 (of the unit 286) and 295 (of the unit 287) correspond to an output 269 of the unit 268; as well as units 296 and 297, being oscillators of difference frequencies, being functionally equivalent to the unit 98 (see Figure 51), but having different parameters of corresponding difference signals. The circuit diagrams are also provided with directional couplers 298, 299, each of which divides the signals of the corresponding oscillators 59,60 into the smaller portions, fed onto the inputs 289 and 292 of the units 286, 287, but the greater portions are fed to waveguide structures 300, 301, which may ether immediately be connected to antennae 67, 68 (necessary in this case directional rectifiers are not shown in Figure 52), or they may be connected via multipliers 302, 303 of frequencies, increasing divisible a frequency of the signals, radiated by antennae 67, 68.

A principle of attainment of phase synchronism of difference signal of following oscillator 280 and one of the leading oscillators 59 (analogously as well as any other following generator 60) with a signal of the difference frequency oscillator 296 is attained by the following way. Onto the input 288 of the unit 296 the smaller portion of the oscillator 280 signal is fed, but onto the input 289 of this unit 286 the smaller portion of the following oscillator 59 signal is fed, the unit 286 by analogy with the functioning of the unit 286 (see Figure 51) forms a control error signal, which is proportional one to a phase mismatch of the difference signal of the oscillators 280 and 59 and the signal of the oscillator 296 of reference frequency, which from the output 294 is fed onto the control electrode 304 of the VCO 59 for a reduction of said phase mismatch up to an attainment of whole phase synchronism of said difference signal and said reference signal. Thus, it is attained the synchronism of difference signals of the leading oscillator 280 and the following oscillators 59, 60 with corresponding signals (preferably with various parameters) of the reference oscillators 296, 297.

In other words, a procedure of formation of multiplex mutually-coherent signals may be described by the following way.

The smaller portion of energy of the signal of the leading oscillator 280 is fed via the directional coupler 281 into the waveguide channel 282, from which a portion of the energy of this signal via the directional couplers 1284, 285 is fed in units of generating of other mutually-coherent signals. In each unit the corresponding signal from the channel 282 is fed onto one of inputs of the mixer 93 of the second united unit 286 (which is equivalent to the unit 268 in Figure 51). On another input of this mixer there is fed a portion of energy of the following oscillator 59 and, finally, on the input of the phase detector 95 of the unit 286 there is fed the difference frequency signal of the oscillator 296 of difference frequency with a frequency, which is different for various oscillator units. Owing to the feedback loop, which is provided by means of phase-lock loop (phases of corresponding difference signals turn out captured by phases of signals of the corresponding frequency standards). The outputs of the corresponding directional couplers 281, 284, through which there are fed the greater portions of the energies of the signals may be connected to the inputs of the frequency multipliers 304, 302, 303 for a formation of mutually-coherent signals of higher frequency.

Besides, a signal of one of oscillators preferably of the leading oscillator 280 may be used as a heterodyne source in an unit of the heterodynes 52 (see Figure 10) and its signal may be fed immediately 280 onto the heterodyne input(s) of the mixer(s) of the amplification channels 49 of the receiving device 16 (see Figure 10), while the signals of the oscillators 59, 60 are used for an illumination of the diffuser 7 or immediately for illumination of the object 9 (see Figure 1 ). After a reflection from the object and by means of receiving by each array elements 47, 48 (see Figure 35) of the receiving device 16 (see Figure 1) these signals will be mixed in corresponding mixer elements of receiving channels of the unit 49 with a mutually-coherent signal of heterodyne 52 (see Figure 10). The difference signals, formed at the output of such mixers will possess of frequency and phase stability of the oscillators 296, 297 of difference signals (see Figure 52), they by frequency will be divided in accordance with the frequencies of the corresponding oscillators 296, 297 of difference frequencies and will carry an information both about the amplitude and the phase of reflected signals. The information about the amplitude (which is proportional a length of phasors and a square root, extracted of spectral density 210, 211 in accordance with Figure 41) 197, 198 (see Figure 36) will be used for a formation of synthesized image, but the information about the amplitude and phase (analogous to 192, 193 but for phasors of reflected radiation 197, 198) may be used for constructing the abode discussed three-dimensional image (several three-dimensional images, but obtained upon the backlighting from various points by really the oscillators 59,60, swept by frequency ) and it may allow to neutralize an influence of mirror reflections.

Finally, it may be realized the circuit diagram of the OVCS in accordance with Figure 53, in which as a driving oscillator (which may be used as a heterodyne 52 (see Figure 10)) it is used a relatively powerful source 280 of MM radiation (LRW, Gunn's diode and so on), but follower oscillators, being as a part of paired OMCS 305 (which is functionally equivalent to the unit 102 in accordance with Figure 51), are the oscillators of lower frequency, for example, of microwave frequency, which may be realized by technology of, for example, IIG oscillators, which are easy controlled and retuned in wide range of 8 to 16 GHz. The signals of smaller (microwave) frequencies are transferred in this case into the range of the driving oscillators by means of corresponding multipliers of frequencies with a corresponding coefficient of multiplication.

Therefore in this case the signals of paired associated oscillators (59,60) (see Figure 5 1) of the united second unit 305 (see Figure 53) (which is functionally and schematically completely coincides with the unit 102 (see Figure 51) ), through outputs 306, 307 (see Figure 53), corresponding to the outputs 258, 259 of this unit 102, represented in Figure 51, are fed correspondingly onto the outputs of frequency multipliers 308, 309.

And their frequencies (of the signals of the oscillators 59, 60) are independently multiplied by said multipliers 308, 309 to a value of frequency of the third driving oscillator 280, besides, one multiplied signal from the multiplier 309 output is further used in accordance with its destination in the backlighting circuit diagram by means of the antenna 67; one portion of another multiplied signal, divided by means of directional coupler 310, is fed onto the multiplier 308 and after a multiplication the frequency with a factor N (as well as after a sequent filtration of multiplied signal by means of band filter for a separation of the multiplied frequency with a required factor of multiplication - this filter is not shown in the circuit diagram as well as such a filter will be not shown further, although its presence will be suggested) is fed onto a unit 311 of frequency adjusting of the VCO 59. The unit 311 is functionally and schematically equivalent to the unit 268 (see Figure 51), besides its inputs 312, 313, 314 are correspondingly equivalent to the inputs 270, 271, 272 of the unit 286 (see Figure 51), but its output 317 corresponds to the output 269 of the unit 268 (see Figure 51).

The smaller portion of multiplied frequency signal (through a filter, which is not shown in the circuit diagram and which separates the multiplied frequency signal) from a corresponding output of the multiplier 308 is fed into the unit 311 of signal phase adjusting of one of the oscillators 59 of the unit 305 (the analogue of the unit 102), used in the circuit diagram (see Figure 53), onto one of the inputs 312 (one of the mixing inputs 271 of the unit 268 in accordance with Figure 51). On another input 313 (which is equivalent to the unit 272 of the unit 268 of figure 51) by means of directional coupler 315 the smaller portion of energy of the driving oscillator 280 signal is fed, and onto the input 314 (corresponding to the input 272 of the unit 264 in Figure 51) there is fed a signal of frequency standard 316 (the analogue 98 of the unit 268 in Figure 51). From an output 317 (the analogue 269 of the unit 268 in Figure 51) an error signal, which is proportional to a value of phase mismatch between the signal of the frequency standard 316 and the difference signal of the multiplied signal of the oscillator 59 of the unit 305(102) and the signal of the follower oscillator 280, is fed onto an input 318 of the unit 305, being an input of the control electrode of the VCO 59 (in this circuit diagram both the oscillators 59,60 are the VCOs (see Figure 51), The error signal after the influence on the control electrode of the VCO leads to a decrease of said phase mismatch between said signals up to a complete liquidation of this mismatch and to an attainment of their phase synchronism.

Besides, the frequency of the oscillator 59 is smaller by N fold than the frequency of the driving oscillator 280, wherein N is a factor of multiplication of the multipliers 308, 309 frequency. Since the unit 305 provides with the phase synchronism between the difference signal of the oscillators 59, 60 an the reference signal of the frequency standard 98, N-harmonic of the oscillator 60 signal at the output of the multiplier 309 urns out in a state of the phase synchronism, upon which the difference signal between the signals on the output of the multiplier 309 and on the output of the oscillator 280 possesses of spectral purity of signals of the standard frequencies 316 and 98.

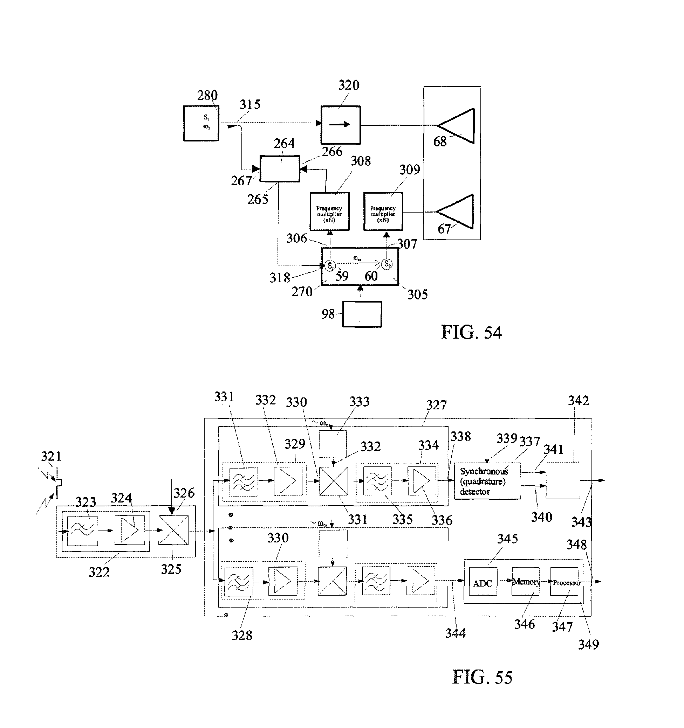

In a simpler circuit diagram of Figure 54, in which at the place of the unit 311 instead of the unit 268 there is positioned the unit 26 4,and besides, from the circuit diagram, there is withdrawn the units 316 and 319, which are considered as those units, that are not necessary. On the inputs 266, 267 of the phase detector of the unit 264 (or it is equivalent: on the inputs 96, 97 of the phase detector 95, being a part of the unit 264 in accordance with Figure 51) there are fed: correspondingly on the input 266 - the multiplied signal of the oscillator 59 from the multiplier 308 (through the filter, which is not shown in the circuit diagram), but on the input 272 - the signal of the oscillator 280 through the directional coupler 315. On the output 265 of the unit 264 there is received an error signal in the form of the phase mismatch signal between said signals, which are fed onto the inputs 266, 267. The error signal from the output 265 of the unit 264 is fed onto the control electrode 318 of the VCO 59, being a part of the unit 305 (or of the unit 102 in accordance with Figure 51, and it is equivalent).In this simpler circuit diagram the difference signal between the signal of the driving oscillator 280 and the signal on the output of the multiplier 309 is phase-synchronized (is positioned by phase in) with the oscillator 98 in accordance with Figure 53. Besides, this phase synchronization is realized by means of pair of follower oscillators 59, 60 of considerably lower frequency (it is technically simply) in comparison with the more powerful driving MM (or SMM) oscillator 280. From the output of the multiplier 309 (via a filter, not shown in the circuit diagram) a signal is fed onto the input of the antenna 67 and through it into a free space.

It is understood that in the circuit diagram it may be added another (and not only one) paired oscillator of the oscillator 305 form, outputs of which are loaded by means of multipliers of multipliers 308, 309 type with the feedback loop for the unit of phase-lock loop of 264 type. Said phasing of signals of the paired oscillator by means of signal of the driving oscillator 280 may be organized by analogy with the circuit diagram in accordance with Figure 52 (through the directional couplers 281, 284, 285 and the waveguide channel 282).

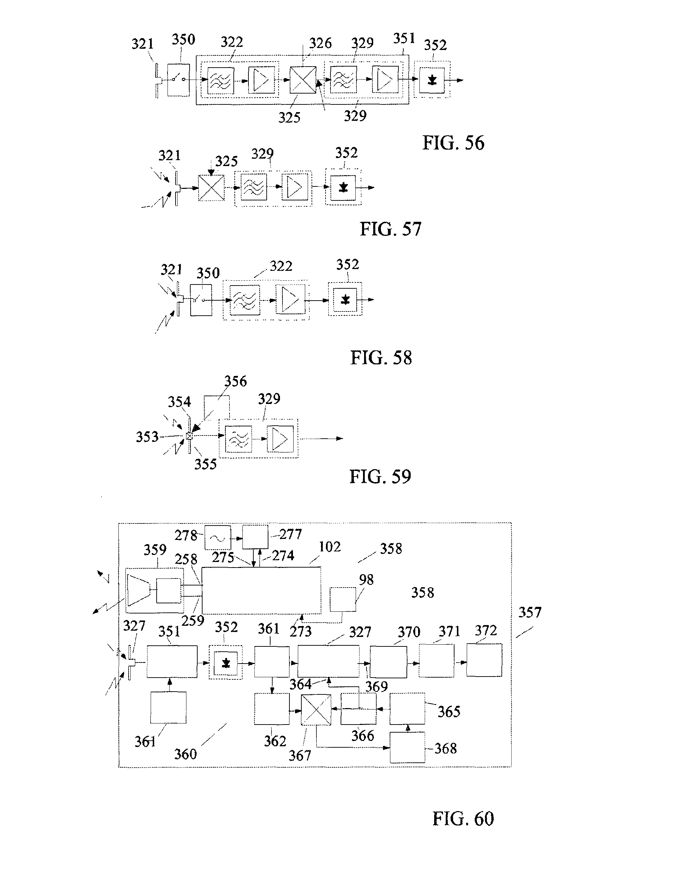

The base preference of two variants of the last discussed circuit diagram of OVCS consists in a capability of feeding the microwave frequency signals of the oscillators 59, 60 in accordance with Figure 53 (or only of one oscillator 60 in accordance with Figure 60) from the unit of oscillators, which in the given circuit diagram may be positioned in a region of the receiving device 26 (on the place of the heterodyne 52 disposition in accordance with Figure 10, and as a heterodyne the oscillator 280 of Figure 53 is used) before an illumination circuit diagram (in the form of the radiation source 2 and the diffuser 7) by means of flexible coaxial cables (permitting a microwave frequency radiation transmission up to frequencies of 36 GHz). Besides the multipliers 308, 309 of frequencies will be positioned immediately in the point of disposition of the antenna 67, associated with them, which for the illumination is directed ether onto the diffuser 7 (see Figure 1) or onto the object 9 immediately.

Such an approach resolves significantly a problem of flexibility of realization of various devices for receiving/ backlighting, since a flexible coaxial cable allows to move in a space of the backlighting system a light unit, consisting of multiplier, loaded by antenna, and to locate it in anyone point, which is optimal one for the diffuser or object illumination. It is essentially also the fact, consisting in that various oscillators 59, 60 of mutually coherent signals (see Figures 52 to 54) separately and sufficiently technically simply may illuminate various portions of the diffuser in accordance with Figure 30 (regions 160, 161) and Figure 37, wherein a region 161 of the diffuser will be illuminated by means of beam of the oscillator 59 radiation, but a region 160 will be illuminated by means of beam of the source 5, but a region 161 will be illuminated by means of the source 4 in Figure 52 or in Figure 53, thus providing a first encoding of radiation, reflected from these portions, since in the receiving device after mixing their signals with the heterodyne signal of the oscillator 280 in accordance with Figure 52 or Figure 53, being the heterodyne 52 for Figure 10, the signals of ultra-increased frequency on the output of the mixer for corresponding beans of radiation will be shifted from the start of frequency axis by a value of frequencies of the corresponding frequency standards 296, 297 (see Figure 52) or 98, 316. The last condition provides with their frequency separation by means of frequency-selective circuits of the receiving device 16 (see Figure 10).

A composition and mutual sequence of radio technical nodes, being a part of each of corresponding amplification channels of the receiving device 16 (see Figure 1), as well as a principle of their combined functioning upon en amplification and encoding of signals of radiations of partial components, reflected the same portion of the surface 187 (see Figure 35) of the object 9, on which the corresponding receiving element 47 of the receiving array (associated with one of said channels) "looks", are determined by means of peculiarity and sequence of primary radiation encoding, that is various for different partial sources 3, 4, 71 (see Figure 35) and of secondary encoding (if such an encoding is realized by means of the dispersing diffuser 70 In general case the realization of double (as of more multiplicity) decoding (demodulating) is not represent an essential complexity and may be realized with using of typical radio technical nodes (including along with amplifiers of corresponding ranges m heterodyne mixers, amplitude (quadratic) detectors, synchronous(parametric) detectors, including scanning detectors, as well as digital nodes, allowing a certain temporary sequence of amplified and shifted by frequency downwardly (may be at the same time partially decoded) signals to transform into their digital form by means of analog-to-digital converter and allowing to realize their decoding by means of methods of digital processing of signals. It may be realized for any forms of modulation/demodulation of MMW/ SMMW radiation (among them there are many sufficiently known methods).

The oscillators OMCS allow to attain novel boundaries for forming of imaging systems and transmission of information in communication systems in MMW/SMMW ranges. The application of the oscillators of mutually coherent signals for both the aims of the exploration (illumination) of the objects and their decoding (upon their mutually-coherent heterodyning ) in channels of receiving device allows to attain principally novel abilities both upon the information obtaining from such signals and upon improving of sensitivity of receiving and transmitting instrumentation and its dynamic range.

For an understanding of encoding (modulation) / decoding (demodulation) details let us discuss the peculiarities of formation of their difference signals in one of amplification channels of the receiving device after their propagation from a radiating antenna of corresponding partial element 3(4) of radiation till the receiving array 46 and upon their receiving by one of the elements 47 of this receiving array 46 (see Figure 35).

The difference signal of the oscillators of mutually-coherent signals, discussed above, may be obtained in the receiving device at least by means of two distinctive methods. In the first case both the components, being, for example, a part of corresponding doublet communication signal or of doublet signal, used for illuminating in the imaging system after their amplification, are fed at the same time for a formation of their difference signal onto the input of quadratic detector (for example, diode), being a part of the amplification channel, associated with the corresponding receiving element 47, receiving such a doublet signal. Besides said amplification channel may comprise anyone combination of amplification and frequency-transforming units, positioned before the quadratic detector, if their action on the both the components of the corresponding doublet signal is equally one. In any this case a sequential quadratic detector will be capable to separate from said doublet signal its difference signal with a corresponding spectral and phase composition.

In the second case there are used mixers (or parametric detectors, for example, synchronous detectors), when the difference signal is separated by means of feed on the mixer signal input a component, passing a pathway from the antenna too the diffuser, then to the object and, finally, is received by the receiving element 47, but the second component (which is phase-coherent with respect to the first component) is fed onto the reference signal of the mixer (or of the synchronous detector). Besides, the second component is propagated through, for example, a coaxial cable or by means of similar way with a conservation of own amplitude and with a determined delay of phase, associated with a propagation in the cable).

For a signal of one of electric signal components, formed in the receiving element 47 of the receiving array 46 by means of partial radiation, characterized by physical features $\alpha_l^d$ (in accordance with designations, which are above - introduced for the correlations (5)-(15) excluding a replacement of designation of physical feature form index, which in the correlations (5)-(15) had the designation t, in novel notation it has the designation 1 ), and feeding onto the input of the unit, forming the difference signal between it and the signal, which is phase-coherent with it, it may me written that

$$\alpha_1^d S_{i,j}^{,b}(t) = {}^{\alpha_1^d}\hat{V}_{i,j}^b \cdot K \cdot \exp\left(i \cdot \left({}^b \Phi_{\alpha_i^d}^{i,j}(t)\right)\right) \tag{17}$$

wherein

$$^{i,j}\Phi_{\alpha_i^d}^b(t) = \left(\omega_{\alpha_i^d}^b \cdot t + {}^n\phi_{\alpha_i^d}^b(t)\right) + {}^{\inf}\phi_{\alpha_i^d}^b(t) + {}^{pr}\phi_{\alpha_i^d}^b(t) + {}^{i,j}\phi_{\alpha_i^d}^b(t) \tag{18}$$

in this case it is omitted a pair of indexes (m, n), showing a position of receiving element in the receiving array 46, instead of them there is introduced the index b=1,2 showing a number of component in the doublet (1 or 2) or it demonstrates the fact that the component is fed into the receiving device a s a reference signal b=0 (see below). K is a general coefficient of amplification of amplification-transformation units, which are previous ones with respect to a unit of separation of said difference signal, (including the receiving antenna), is amplitude of phasor, received by the antenna of partial signal, wherein (i,j) is index of diffuser element, dispersing the given component(it is used only if the diffuser is used, otherwise it should be omitted); is a central frequency of partial radiation oscillator, but - is its phase noise, characterizing deviations of real frequency of this oscillator from its ideally central significance. If the mentioned amplification-transformation units comprise additionally heterodyne mixer(s) (in case of amplification of doublet radiation signals) with a frequency D(t) of the heterodyne, in the correlation (18) instead of the frequency it should be written - D(t), however, such a replacement is not principal one, since it does not influence on the frequency D(t) of the heterodyne difference signal. It is associated in the fact, consisting in that the heterodyne frequency is equally subtracted in the heterodyne mixer from the frequencies of both the signal components, therefore they auto-subtracted further upon a formation of the difference signal frequency. The last fact is important, since it allows using:

- unstable inexpensive heterodyne oscillators for a transformation of doublet signal by frequency into the band of ultra-increased frequencies without of influence on their difference signal quality;
- determined component of phase modulation of partial radiation (if it takes a place), which is added in a signal in any of the above-listed methods, mentioned upon the description of Figures 52 and 53;
- phase additive, arising in consequence of radiation propagation in any free space between a radiating antenna of radiator and a receiving antenna of the receiving element 47; and
- phase additive, introduced in a signal by means of diffuser element (if in an illumination circuit diagram there is used a diffuser), besides, if the diffuser only destructs a spatial coherence of radiation, dispersed by it, this function is an accidental function of time, if the diffuser is encoding one, it is a regular determined function, wherein - a frequency of modulation of (i,j) element of the diffuser.

The essence upon a formation of the difference signal of two phase-coherent signals is in the fact, consisting in that owing to a principle of OMCS functioning phase-lock loop noise phase, varying in time nevertheless follow after one another, therefore in any instant

(19)

Since the difference signal with accuracy up to constant D is described by the following correlation:

(20)

the above-mentioned noise additive are auto -subtracted in the resultant difference signal, but residual phase components are either determined by means of informational time functions, or they are constants, on the base of this fact it may be constructed remaining various high-sensible receiving circuit diagrams.

So, upon the usage of the OMCS and upon an illumination of encoding diffuser, when the follower oscillator 59 illuminates the diffuser b=1 (or its part), but the driving oscillator 280 is used as a source of heterodyne signal b=0, the difference signal on the mixer output will be written by the following correlation:

(21)

wherein is a stable frequency of obtained difference signal, which equals to the frequency standard 98 frequency $\omega_{i,j}$ is a frequency of modulating signal of the diffuser element (i, j) - owing to this determined member the corresponding spectral component 211 in a spectrum of the difference signal 210 (see Figure 41) will occupy its spectral position with an accuracy up to a band with of the crystal frequency standard 98 (with an accuracy up to 1 to 10 GHz and less), and it provides a small general band 210 even upon an essential quantity of independent encoding elements in the diffuser, but it means that there is also a low level of equipment noises upon a working out of corresponding wide-band nodes considering a stability of difference signals of their spectral components. In discussed case

$$\alpha_1^{\theta} \, \hat{V}_{i,j}^0 = \text{const}$$

for all the elements of receiving array, for which it is used said driving oscillator 280 as a heterodyne.

The form of spectrum (21) visually shows on the presence of possible optimal sequence of demodulating units, allowing separating on the output of this sequence information about corresponding spectral amplitudes of signal of the 211 form.

The simplest sequence of such radio technical nodes may be discussed on the example of device, represented in Figure 55, wherein from a receiving antenna 321 through an amplifier 322 of ultra-high frequency (consisting of a pre-selector 323 and own amplifier 324) there are fed the signals of the oscillators 58,59, received by the antenna 321 and reflected by object (these signals are mutually-coherent with signal of the driving oscillator 280, above-discussed in accordance with Figures 51 to 54) onto a signal input of the first mixing element 325 (these signals may be fed onto the mixer input and direct from the antenna without ultra-high frequency application), on a heterodyne (in other words, reference or back-up) input 326 of the first mixer 325 there is fed a signal of the driving oscillator 280 (see Figures 52 to 54). (If there are used )MCS circuit diagrams, represented in Figures 53 and 54, the corresponding microwave frequency signal of the oscillator 60 of the unit 305 may be fed onto the input 326 of the mixer 325, operating in this case upon N-harmonic of this microwave frequency signal or through an amplifier of frequency with a factor N, positioned immediately near the mixer 325). The signals of difference frequency, obtained on the output of the mixer 325, are fed onto the inputs of the independent frequency channels 327, 328, realizing a frequency filtration of the forced signals for a separation of signals with frequencies, positioned near the frequency of the difference signal, selected for a processing, but in the given channel 327 by means of frequency-selective like unit 329 each of which has own frequency filter and amplifier 332). Besides, said units have corresponding central frequencies and pass band for passing only signals ( a set of such difference signals), belonging to a signal range of frequencies, associated with a corresponding partial source of radiation (taking into account of diffuser influence or without this influence). Further in each of said independent frequency channels 327, 328 it is carried out a parametric detection of each of corresponding isolated in the channel 327, ... difference signals by means of their feeding from the unit 329 output onto a signal input of the second mixer 331 of the corresponding frequency channel 327. In this case the difference signals correspond to a distinctive partial radiation of the illumination oscillator 59, but onto an input 332 of the second mixer 331 through an adjusted phase shifter 333 there is fed a signal of corresponding frequency standard from OMCS circuit diagram (from the oscillator 98 in accordance with Figures 51, 53, 54 or from the oscillator 296, 297 in accordance with Figure 53 by means of coaxial cable. Besides, in principle, this signal may be anyone (depending on the signal of the corresponding frequency standard 98, including phase modulation signal, an the letter allows to reduce requirements to a dynamic range of receiving circuit diagrams with a conservation of narrow-bandness of instantaneous in the given case band width).Upon a preferential realization frequency of the frequency standard is stabilized with an accuracy of 10 GHz and less by means of crystal stabilization and thermo-stabilization.

On an input of the second mixer 331 there are formed, including partial demodulated signals with spectral amplitudes, which are proportional ones to amplitudes of corresponding spectral components 211, 210,... (see Figures 41 and 43) of radiation, dispersed by means of different elements 10, 11 of the diffuser 7 (see Figure 39) and reflected by means of corresponding portion of the object 9 surface (see Figure 1) and with frequencies, which equals to frequencies of modulations $\omega_{i,j}$ of the corresponding elements 10, 11 of the diffuser 7 (see Figure 1). It allows after their filtration by means of the frequency-selective amplifier 334 (the filter 335 and amplifier 336) exactly to measure their spectral components (values of spectral density 210, 211 or that is equivalent a square of length 9, but in a number of cases also the length) of the corresponding diffuser 197, 198 (see Figure 36). Such a measurement may be realized by means of the following ways:

- in the first case by means of a synchronous detector 337, onto a signal input 338 of which it will be fed a complete summary signal, formed on an output of a filtering unit 334 (as an additive mixture of said formed spectrally distinctive signals), the input of which is electrically connected to an output of the second mixer 332, but onto a reference input 339 of the synchronous detector 337 there is fed a reference signal, scanned by frequency in the range of modulation frequencies $\omega_{i,j}$ of the elements 10, 11 of the diffuser 7. Quadrature signals, obtained on corresponding two quadrature outputs 340, 341 of the synchronous detector 337, are fed onto inputs of a computing unit 342, calculating from the obtained quadrature signals a spectral amplitude of that component of their mixture on an input 338, a frequency of which coincides with a frequency of the scanning reference signal, fed onto an input 339 in the instant of measurement of the corresponding quadrature signals. A signal from an output of a unit 343 may be fed onto the input of the multiplexer 50 (see Figure 10);
- in the second case time sequences of complete summary signal from an input of the second mixer through said filtering unit may be transferred into a digital sequence of digital accesses of this signal by means of this signal feeding onto an input 344 of analog-to-digital converter 345 (carrying out time accesses of such a signal during some interval of time) and by means of loading of this sequence in a digital memory 345, and then it should be carried out a Furrier transformation of the obtained digital set of data by digital methods in a digital processor 347, and in consequence of this actions it will be obtained all the spectrum 210 with an accuracy of spectral resolution of reverse time of duration of procedure of an obtainment of signal of said accesses. A signal from an output 348 of this digital unit 349 may be fed immediately into the central processor 56 (see Figure 10).

In the last case it may be obtained also amplitude and phase information for this A/D converter 345 (or the second A/D converter, operating synchronously with the A/D converter 345 ) should digitize in parallel also the signal from the output of the mixer of 334 type, fed onto the input of the A/D converter through a filtering unit of 334 type, and at the same time it should digitize a reference signal, fed onto the reference input 332 of said mixer (of 331 type) (in this case a frequency shifter of 333 type is not necessary in the circuit diagram), which also should be fed on the input of the A/D converter (through a multiplexer or it should be fed on the input of said second A/D converter). In this case a processor 347 from data, loaded from the input(s) of the A/D converter 345 into the memory 345, may separate both the amplitude and phase information amount the signal on the input of the mixer 331 by digital methods (the phase information may be represented by means of accidental function, if the diffuser is accidental one, or by means of regular function). In case of multi-parametric image formation it may be used only the information about the signal amplitude.

It should separately discussed a case, when for aims of illumination of the diffuser (or object) and of heterodyne receiving there are used the OMCS, follower oscillators of which (see Figures 53 and 54) or even both the driving oscillators and the follower oscillators (see Figure 52) operate with frequencies, which are smaller by several (by N) fold than the smaller operation frequencies of system for imaging, besides, the operation frequencies are formed from frequencies of said oscillators by means of multipliers of frequencies with a factor N of multiplication (of 302 to 304 type in accordance with Figure 52 or of 308, 309 type in accordance with Figures 53 and 54). In this case a receiving circuit diagram (see Figure 55) should be modified, but namely: it the operation frequency of the driving oscillator 280 (see Figures 54 and 55) coincides with the operation frequency of the system for imaging, on the reference input 326 of the mixer 325 it should be fed a signal immediately from the oscillator 280, however, on the reference input 332 of the mixer 331 it should be fed a signal of the frequency standard 98, the frequency of which is preliminarily multiplied by means of frequency multiplier (not shown in the circuit diagram) N times as large (in this case the unit 333 may image said multiplier upon a suggestion that the corresponding phase shifter is not shown or it is absent).

If in the circuit diagram of the OMCS (see Figure 52) all the oscillators function upon lower operation frequencies on the reference input 326 of the mixer 325 there is fed a signal of the oscillator 280, multiplied by the corresponding multiplier 304 of frequency (see Figure 52) or immediately a signal of the oscillator 280, however, the mixer 325 in this case is a sub-harmonic one, functioning upon N-harmonic of the reference signal oscillator 280. On the reference input of the mixer 333 as well as in the above-discussed circuit diagram, it should be fed a signal of the oscillator 98, multiplied by N times with respect to a frequency.

The diffuser or object is illuminated by means of signals of the follower oscillators 59, 60, multiplied preliminarily by means of frequency multipliers 308, 309 (see Figures 53 and 54) or multipliers 302, 303 (see Figure 52).

The above-discussed circuit diagram may be used for an obtainment of complete amplitude and phase information about the OMCS source 59 signal, reflected from the object and focused on the receiver (see Figures 52 and 53), used in this case immediately for the object illumination (it is necessary for a formation of the above-described three-dimensional images of the first type). In this case the signal of the oscillator 59 immediately illuminates the object, and the signal, reflected by the object, is focused on the antenna 321 (see Figure 55) of the element 47 of the array 46 (see Figure 35). Further as well as in the described circuit diagram the signal either at once is fed onto the signal input of the mixer 325, or after an amplification by the unit 322, besides, the phasing signal of the oscillator 280 as well as in the above-described circuit diagram is fed onto the heterodyne input of the unit 326 of the mixing unit 325. The obtained difference signal from the mixer 325 output passes through the intermediate frequency amplifier 329 (if one channel of processing of difference signals is used or through the corresponding intermediate frequency amplifiers like 329, if there are used several channels of processing); further a signal from an output of a band frequency transformer is immediately fed onto the signal input 338 of the synchronous quadrature detector 337, but onto the reference input 339 of the synchronous quadrature detector 337 there is fed a signal of the stabilized source 98 from the used circuit diagram of OMCS (see Figures 52 to 54) (possibly through an additional controlled phase shifter (not shown in Figure 54) for a compensation of the signal 98 increment in a coaxial cable) is fed onto the reference input 339 of synchronous detector 337. The quadrature signals, formed in the detector 337, through its quadrature outputs 340, 341 are fed onto the computing device, calculating both the amplitude and phase of the signal (but therefore also a spectral density even in case, when the signal phase is accidental one (upon the frequency, that equals to the frequency standard 98 frequency), fed onto the input of synchronous detector 37 (but well then also on the input of the antenna element 321) for each novel frequency of the oscillator 59 signal, swept by radiation frequency (besides, the frequency of the follower oscillator 280 in corresponding OMCS changes in concord by phase in accordance with the OMCS realization). The obtained set of complex signals (for each frequency of the oscillator 59 scanning in the set there is a corresponding complex signal) is fed into the central processor 56, wherein it is subjected to the Furrier transformation by a set of complex values from the scanning frequency of the oscillator 59, transferring so this set into the information about a coefficient of object portion reflection, on which through a focusing lens the antenna 321 "looks", and about a depth of this portion deposition along an optical axis of this focusing lens (in accordance with a theory of multi-frequency radars with a systemization of main band).

In Figures 55 to 59 there are represented circuit diagrams of input nodes of the receiving device 16 (see Figure 1), allowing to amplify signals, obtained by means of receiving element antenna, to transform them by frequency by means of heterodyning, as well as to decode them partially (including doublet signals), separating encoded (modulated) components, for example, in quadratic or mixing (parametric detector) elements. Besides, there may be decoded difference signals, stabilized by frequency, envelopes of which comprise all the information about a corresponding pixel of corresponding partial image or about a communication message. Such partially decoded signals from outputs of such units may be fed onto the inputs of the above-discussed units for their complete decoding by means of the units 327, 339 and 342 or of units 329 and 349 and so on.

In Figure 55 there is represented an input tract of super-heterodyne receiver, consisting of receiving antenna 321, electrically connected to a Dikke switch 350 (additionally by amplitude modulating input signal). The element 350 is actual one for using of the discussed units in radiometric system. for an active system it is not necessary element, in turn, connected to an amplifier 322 of ultra-high frequency, functioning in a band of MM frequencies, which, in turn, in series is connected to the mixer 325 on the heterodyne input 326 of which there is fed a heterodyne oscillator signal. A frequency of the heterodyne oscillator should differ from a possible difference frequency of a doublet signal (if in the circuit diagram the doublet signal is forced), besides, in the most general case this heterodyne oscillator can be local one (and of bad quality) and it may have no association with the oscillators 59, 60 of received signals. The output of the mixer 325 is electrically connected to the input of the intermediate frequency amplifier 329, realizing a separation and amplification of the signal, shifted by frequency downwardly by value of heterodyne frequency. In principle, there may be used several in series connected cascades of heterodyning of input signal (by means of the second mixer and by means of the second intermediate frequency amplifier, which is in series connected to it, which are not shown in Figure 56). In this case the first mixer 325 and first intermediate frequency amplifier 329 may be used for an effective suppression of mirror component of transformation and different inter-modulation components, the mixer and correspondingly the second amplifier (they are not shown in Figure 56) may possess of steeper skirts of amplitude-frequency curve and may realize a better rejection of input cascades. The units 322, 325 and 329 form a typical radio technical unit 351 of amplification and heterodyning of signals, besides, such a unit may not include the high frequency amplifier 322, but a signal of antenna may be fed immediately onto the input of the mixer 325. The output of the intermediate frequency amplifier is connected to an input of quadratic transformer 352 of signals (amplitude detector-diode), which provides with a separation of difference signals from the doublet signals (or realizes the first modulation of carrier in case of the usage of singlet signals) by means of operation of multiplication of mutually coherent signals, which were independently received by the antenna 321 and were transformed by the above-mentioned cascades for amplification and frequency shift.

As it was above-mentioned, noises of the heterodyne oscillators do not add phase noises in the difference signal, since both the components of doublet signal are equally added and are mutually excluded after a quadratic transformation on an output of element 352. The letter is extremely important also for telecommunication systems, since they do not require any stabilization of heterodynes and differ from a standard receiving and transmitting equipment. Further the formed difference signals may be processed (by means of anyone of the above-described decoding units 327, 337, 342 or even by their nodes 339, 342, 345 depending on the usage of forms and levels of modulation of the initial doublet signals.

It should be specially noted that the circuit diagram (see Figure 56) in essence completely corresponds to a receiving cascade of standard radiometric receiver, on a non-linear diode 352 of which there may be separated envelopes of heat radiation. Thus, such a receiver can be used for a formation of radiometric images along with an obtainment of active encoded images in one system. A difference may consists only in a value of pass bands, which in radiometric case should be as much as possible wide, but for OMCS signals they should be as much as possible narrower ones. However, upon a combined usage of such a receiver a condition of narrow-band rejection may be required for sequential cascades, which follow after the quadratic device 352, and it allows receiving and processing signals of passive and active images in one receiver.

In Figure 57 it is shown a particular case of a receiving circuit diagram in accordance with Figure 56, in which it is absent a unit of ultra-high frequency (usually of waveguide realization), but signals, received by the antenna 321, are fed immediately onto the input of the mixer 325 (as it was above mentioned),

As it was mentioned, besides, said amplification channel may be comprise any combination of amplification and frequency-transformation units, positioned before a quadratic detector, if their influence on both the components of the corresponding doublet signal is equally one. Then a sequential quadratic detector will be capable to separate from said doublet signal its difference signal with a conserved spectral and phase composition. Furthermore, the separated difference signal may be additionally amplified in one or several cascades of the heterodyne amplification ( consisting of mixer an corresponding intermediate frequency amplifier) with a corresponding selection of heterodyne sources for corresponding mixers of the heterodyne cascades, positioned after the quadratic detector, if the corresponding heterodyne signals are formed from a signal of the difference frequency oscillator OMCS 98, by means of its frequency dividing a signal on an output of such mixers also conserves an amplitude and phase information in the difference signal.

The same heterodyne amplification of the difference signal is also possible in the circuit diagram of Figure 35, wherein the difference signal is separated in the mixer 325, a reference signal for which is a signal of the driving oscillator 280 of the corresponding OMCS (see Figures 52 to 54), in this case additional cascades of the heterodyne amplification of the difference signal, conserving a phase content of initial difference signal, should use for reference inputs of the mixers a signal of the oscillator 98, divided by frequency in a required number of times (depending on a number of such cascades).

Said approach of generating/receiving of mutually-coherent signals allows realizing the receiving circuit diagrams in accordance with Figure 58, functioning in general without a signal heterodyning in the MM range frequency.

The latterly developed technology of production of little-noisy amplifiers of MM range (up to 140 GHz an over) allows to amplify a signal up to a value, essentially exceeding a level of the non-linear transformer 352 noises, and it allows to realize a detection of the amplified signals of MM frequency without any using of any cascades of preliminarily signal heterodyning. In this case mutually-coherent doublet signals, received by the antenna 321 (see Figure 58), are amplified in the ultra-high amplifier 322 on the carrier frequency of 40 to 50 dB and over and are fed immediately onto the non-linear transformer (diode) 352, separating owing to its upward amplitude curve squareness the corresponding signals of difference frequencies.

The circuit diagram of receiving device, shown in Figure 58, represents a significant practical interest from a standpoint of fast and effective realization of the above-described approaches in a formation of multi-parametric high-informational images by means of intensively working out at the present time millimeter radiometric multi-element cameras, operating in real time. Such MM multi-element cameras (having up to 1024 and over of receiving independent elements), amplification channels of which are constructed on the base of integral technology and on the base of the above-described principle of direct amplification and detection of signals, are capable to form multi-element images with a velocity of up to 17 sequences per second and over and with a sensibility of 1L and over (such a camera is worked out, in particular, by TRW in the USA). Advantages of such a camera consist in capabilities of decreased density of three-dimensional packaging of channels for receiving and amplification of signals of MM images. It is attained owing to the absence of powerful heterodyne signals, an energy dissipation of which always requires a decrease of density of the amplification channels and correspondingly a decrease of spatial resolution of camera.

However, such cameras are intended for an obtainment of only passive images and realize a radiometric principle of radiation receiving.

It is known that the formation of the radiometric images inside of closed premises (wherein all the procedures of concealed inspection are carried out) is absolutely ineffective owing to a low contrast of brightness temperature of observed articles (5 to 7 K), therefore the mentioned camera may operate only in open spaces under conditions of contrast backlighting of objects by "cold" sky (77 K) and by "hot" surface of the earth (300 K).

Taking into consideration peculiarities of functioning of the above-described nodes 327, 337, 342, 349 of decoding signals in accordance with Figure 55 as well as taking into account peculiarities of the circuit diagram for the direct amplification and detection in accordance with Figure 58, it would be stated that such MM television cameras may be technologically simply adapted for the above-discussed active multi-parameter images and such images can be created in scale of real time. Besides, the nodes 327, 337, 342, 349 may be used as non-complex low frequency units of terminal cascades of the amplification channels of the receiving device of such an array, which follow after the diode 329, separating the difference signals.

Thus, such a camera may be effectively used not only for a formation of low-contrast radiometric mages without any real information about the objects, being in closed premises, but also for a formation of active images with an increased informational content, which are capable to be obtained under any conditions.

The offered principle of the mutual coherence of two signals allows effectively to use the circuit diagram of the direct amplification and detection in a receiving part of anyone transceiver without any additional oscillators-heterodynes of MMW/SMMW range upon a conservation of high reliability and fast-action in a receiving /transmitting of data.

The receiving and decoding of doublet signals (i.e., the signals, consisting of the pair of mutually-coherent signals) may be effectively realized by means of receiving arrays of antenna-non-linear elements (Schottky's diodes) (see Figure 59). In such receivers in the antennae input there is mounted a non-linear element (the Schottky's diode) 353, connecting, thus, paired conducting antennae elements 354, 355, and constructions of such receivers may be schematically illustrated also in Figure 15 in case of using the antenna-associated non-linear element (see Figure 15) for said receiving an non-linear transforming (detecting) of the input signals. Such an antenna-associated non-linear element may be used also for a quasi-optical heterodyning of the input signals (the heterodyning signal in the last case quasi-optically impinges onto the receiving antenna 354-355 together with the signals and on the input of this element (in a point of the antenna input/output) there is separated the corresponding intermediate frequency signal). In case of the usage of this element as a mixer to the antenna input/output it should be additionally connected a planar band filter for a separation of the formed intermediate frequency signal, and a shift of the non-linear element 353 in this case is also fed by means of this filter.

Another variant of heterodyning of the doublet signals on the antenna-associated non-linear element (see Figure 59) is based on the realization of three-frequency heterodyning. In this case on the antenna-associated non-linear element together with input mutually-coherent doublet components there is fed the third heterodyne signal of additional oscillator 356, a frequency of which by order corresponds to a frequency of difference signal of said doublet components (see Figure 59), but the sequential band intermediate frequency amplifier 329, electrically connected to said antenna-associated element, has a final pass ban (corresponding to the difference signal band) with a central frequency, that equals to a difference of the doublet difference signal and to the third heterodyne signal of oscillator 356. Such a mixing element in consequence of three-frequency mixing creates the second difference signal, being situated in a band of said intermediate frequency amplifier. Since the first difference signal (between the doublet components) may have a frequency up to 1 GHz and over, the frequency of the heterodyne signal may be situated in an area of hundreds of MHz, and it provides with a high value of the second difference signal frequency and correspondingly provides with all the advantages of super-heterodyne circuit diagram of receiving. Losses of transformation of such a heterodyne circuit diagram will be insufficiently high ones than in case of using a harmonic heterodyne transformer. Advantages of such a circuit diagram consist in that there is a significant simplification of the receiving-amplification tract, since the heterodyne signals in a frequency area of up to several GHz may be generated by means of standard transistor oscillator, but its signal is fed onto the heterodyning antenna element by means of coaxial cable or corresponding band line with the integrated elements of amplifier unit and input receiving node decoupling. Besides, carrier frequencies of the doublet signal may be changed in anyone range (corresponding to a range of antenna operation frequencies, but there may be bands up to 200 GHz and over, besides, such elements can be easy realized in S-MM range, and all it is determined by means of antenna an corresponding non-linear element production technology, but the receiving circuit diagram, including the heterodyne 356, can remain the same one.

The above-discussed circuit diagrams and approaches of encoding of radiation, illuminating the object (by means of oscillators OMCS and discussed diffusers) undoubtedly do not limit a number of possible n approaches for an encoding of such a radiation, which may be realized by any other alternative way (including the well-known ones, for example, only by means of distinctive amplitude modulation of radiation in channels of corresponding partial sources of radiation and so on).

In Figure 60 there is represented one of possible realizations of transceiver 357, based on the usage of one of realizations of the OMCS 102 of the doublet signals (see figure 51). In the description of the transceiver functioning Figures 60, 51, 55 and 56 will be used. The transceiver is schematically represented, and the circuit diagram has been changed in accordance with its waveguide or planar monolithic realization (taking into consideration the above-adduced understandings about possible realizations of the monolithic OMCS of MM range). The base of receiver 358 of the transceiver 357 is the doublet oscillator 102 of mutually-coherent signals, a functioning principle of which is above described in detail (see Figure 51), and input/output points of the node 102 correspond to the reference numbers of Figure 51. An antenna system of the receiver is conditionally designated by means of unit 359 and can have any realization of the antenna system (above-discussed in detail) for a radiation of the doublet signal, generated by the OMCS 102 (see Figure 60) into a free space (including also a monolithic realization of this unit). In Figure 60 there are conditionally shown the outputs 258, 259 of the unit 102 independent channels, through which the corresponding doublet components are fed onto an independent or united antenna (see above). The difference frequency of the doublet spectral lines is determined by the outer oscillator 98 in accordance with Figure 60 (which both may be stabilized one and changed one by frequency), besides it is essentially in order to frequencies of said oscillator 98 and frequencies of message signal would be separated by frequency by means of corresponding receiving device 360 of the transceiver 357 (see below). The message signal source (for example, an output of sequential computer port in the form of the port, operating for a transmission, or one of outputs of parallel port) is shown in the form of unit 278, a signal from which is fed onto one of summing up device 277, and on its second input there is fed an error signal (of phase mismatch) from an output of the band filter 257 (see Figure 51) through a contact terminal 274 (besides, the cross connection 276 in the unit 102 should be removed (see Figure 51)) the sum signal (its voltage equals to a sum of error signal voltage and voltage of message signal ) through a contact terminal 275 of the unit 102 is fed onto the control electrode 101 of the VCO 60 in accordance with Figure 51. Besides, the frequency filter 254 of phase-lock loop of the unit 102 is selected in such a manner that the signal of messages is completely suppressed by said filter and is absent on the output of the amplifier 254 (see Figure 51). Another possibility of modulation is the usage of the phase or amplitude modulator 63 (see figure 51) - in this case the source 278 of messages is connected to the modulator 63 for its control (the cross connection 276 is switched on, the modulator 62 is absent one (see Figure 51), and conditions on the bands of the filters 95, 253 are the same ones as those, that are above-mentioned).

A receiving part 360 of the transceiver 357 also uses units, functioning of which was early analyzed. The doublet signals, received by means of receiving antenna 321, are amplified by means of typical radio technical unit 351 of amplification and heterodyning (see Figure 60) (possible constructions of which were above-discussed in connection with Figures 56 and 57). Besides, a signal of heterodyne 361 (see Figure 59) is fed onto the heterodyne input 326 of the mixer 325 (see Figure 56), being a part of the unit 351. The doublet signals, which are shifted with respect to a frequency of the heterodyne 361 and are amplified ones, are fed onto an input of the quadratic detector 362, wherein the corresponding difference signal is separated from it. By means of filters 362 and 363 from the difference signals there are separated spectral components, corresponding to an informational signal 362 and correspondingly to preferably discrete component 363 (which is determined by means of selective mode of modulation of the doublet line in the receiver 358 and which has a frequency or frequency band of the difference frequency oscillator 98). The signal spectral components are fed from an output of a filter 361 onto an input of the amplifier-parametric transformer 327, describe in connection with figure 56. On a heterodyne input 364 of the unit 327 (see Figure 60) (being an input of a frequency shifter 333, being a part of the unit 327(see Figure 55)) there is fed a signal of second heterodyne 365 of the VCO, operating in the range of the difference signal from an output of a power divider 366, an output of which is connected to an input of the second heterodyne 365. Another portion of the signal power of this second heterodyne 365 through another arm of the power divider 366 is fed to one of inputs of a mixer 367. On another input of the mixer 367 there is fed a synchronizing component of input signal, which is separated by means of filter 363 and which has a frequency, that is equivalent with respect to the frequency of signal of the oscillator 98 in circuit diagram of the receiver 358. For an improvement of synchronization (if necessary) the message signal 278 (see Figure 60) may be periodically switched off, providing with a passage on the output of the receiver only a synchronization signal (a signal of non-modulated difference frequency). The signal of the phase mismatch between the synchronizing signal and the signal of the second heterodyne 365, from the mixer 367 output through a filter 368 is fed onto the electrode of the VCO 365 for reducing said phase mismatch to zero and for provision with a phase synchronism of the VCO signals and the synchronization signal. The controlled phase shifter 333 in a composition of the unit 327 may provide with an automatic selection of optimal phase shift of the VCO 365 signal before a feeding of the letter onto the heterodyne input of the mixer 326. A resultant signal from an output 369 of the unit 327 (coinciding with an output of the band filter 334 (see Figure 55) is fed onto an input of demodulator 370, which is either an amplitude demodulator (amplitude detector), if it was realized the amplitude modulation of the difference signal by means of the demodulator 63 (see Figure 51), or a frequency/phase demodulator, if it was realized a frequency/phase modulation of the difference signal in the transmitter 358 (or by means of modulator 63 in accordance with Figure 51 or by means of switching on of the elements 277, 278 in accordance with figure 51). From an output of the corresponding demodulator a signal through a filter 371 is fed onto a message receiver (for example, receiving port of computer) 372.

It is naturally that the transmitting antenna 359 and the receiving antenna 321 should be electro-dynamically uncoupled for providing with a minimal infiltration of input signal of the transmitter 359 into the receiving antenna 327 (it is easy technically realizable in MM range including the usage of absorbing materials). It is also understood that a frequency of the frequency standard signal of the transmitter 98 and pass bands of the band filters 361 an 362 of the receiver, being a part of the same transceiver 357, should not coincide.

Advantages of such a transmitter consist in simplicity of constructive and technological realization of both the receiver 360 and transmitter (in case of monolithic embodiment such a transmitter is simple, inexpensive and may operate in anyone band at least of MM range). Owing to a frequency stability of the difference signal of the filters 362, 363 (see Figure 60) and filters 332, 334 (see Figure 55) may be exactly tuned onto the band of corresponding signals, providing with a strong rejection of noises and interferences as well as providing with a spectral concentration of informational channels. A broadening of band of the modulation signals is provided by means of arbitrary selection of practically anyone frequency of the difference signal, but a broadening of band of carrier frequencies is provided by means of selection of only resonance antennae of transmitter oscillators (for example, in the integral embodiment). The transceiver may be intended for a concealed communication, if frequencies of MM oscillator are arbitrary changed upon a transmission of the corresponding signals for a tuning of parameters of the transceiver nodes, if it is necessary.

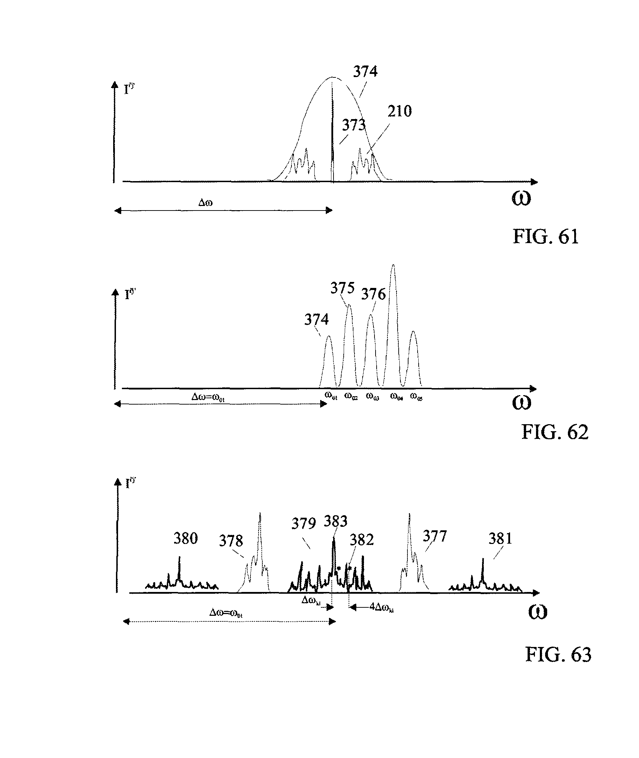

The usage of the OMCS oscillators of MMW/SMMW range in systems for imaging of MM images, upon which the riving oscillator 280 (see Figures 52 to 54) is heterodyne of the mixer 326 (see figure 55) of the receiving device, but the follower oscillators 59 and 60 are used for an illumination of diffuser of anyone type, allows to attain an extremely high concentration of encoded signals, providing to them an exact spectral localization and extremely small band of frequencies (limited only by means of requirement of provision with a fast-action of imaging system in whole. In Figure 61 there is shown a spectrum of the difference signal, arising on the output of said mixer 326 (see Figure 55). Besides, its central component 373 and all the discrete components of side carriers 210 (see Figure 61), which, for example, upon the illumination by means of the follower oscillator 59 of the encoding diffuser 111 (see Figure 19), will be actually spectral components 211, 212 (see figure 41) in combination composing the band 210 (see Figure 41) (see also the diffuser 7 in accordance with Figure 39) as well as they will be located on a spectral axis ω (wherein ω is a difference signal frequency) with an accuracy, which equals to a band width of the difference signal oscillator 98, used in the OMCS system, i.e., with a potential accuracy of 1 GHz and less (in case of crystal and thermal stabilization of the oscillator 98). If it is considered that a practically attainable and really necessary (but not extremely possible) quantity of independent elements of encoding diffuser may make up about of 100 elements, but a fast-action of system formation is expressed by 10 Hz, the occupied band 210 (see Figures 50 and 41) does not exceed a value of 10 KHz, and besides, it will comprise an information about of 1000 angles of radiation impinging onto the object surface. It is considered that an average value of difference frequency may attain the value of $\Delta\omega=1$ GHz and more, it is obvious that the above-adduced method of encoded backlighting can be realized upon a super-low level of backlighting power (in virtue of high frequency of difference signals and their super-low band, and it provides with a capability of rejection of noises of the receiving device electronic components) and upon a super-high spectral concentration of informational channels, which would function at the same time.

Let us supplement that a wide of envelope of a signal 374 (see Figure 61), (obtained for an independent beam, backlighting a diffuser, which is capable only to destruct a spatial coherence of radiation, impinging on it), will make up only several tens of hertz, and it for an obtainment of 10(ten) images, each of which is associated with the radiation beam, illuminating a diffuser, will lead to a broadening of band only by a value of 100 Hz, besides, the signal will be stable by frequency (and correspondingly it will be stable a position of the band of frequencies for these images in each received channel of the receiving device 16) with an accuracy up to 1 Hz (besides, all the images, shown in Figures 46 to 48, will be obtained at the same time). It is understood that at the same time other frequencies, states of polarization s and so on of the independent beams may be used and it will broaden a general spectral band only by a number of the independent sources (i.e., a maximum by ten to several tens of times).

In Figure 62 there is represented a characteristic distribution of envelopes of spectrum of difference frequencies, formed on an output of the mixer 326, when frequencies of the follower oscillators, forming corresponding beams of radiation (besides, such beams are characterized by means of distinctive physical properties) are different with respect to a frequency of the driving oscillator 280 in OMCS by a value, which does not exceed the required broadening of the signal spectrum of one beam, caused by conditions of an obtainment of a complete information about an object. For example, if the beam with an envelope 374 is used for a backlighting of encoding diffuser with a number of independent elements up to 1000 ones, a width of the envelope 374 amounts to several tens of KHz; if another beam illuminates the diffuser, destructing its spatial coherence, a width of envelope of its spectrum (for example, 375) may not exceed tens of hertz and so on. Owing to a high stability of the spectrum of difference frequencies a distribution of the complete spectrum (see Figure 62) will be tightly packaged and each independent component of this spectral distribution ( carrying own individual information about an object) may be with a high accuracy identified and measure in a corresponding unit of spectral analysis (see the units 337 and 349 in Figure 55). Besides, in each other channel of the receiving device, electrically connected to other receiving element 47 of the array 46 (see Figure 35), on an output of the corresponding detector 326 of difference frequencies (see Figure 55) or of the detector 352 (see Figures 56 to 59) it will be obtained own distribution of analogous type (see Figure 62), but carrying an information about another surface portion (or another internal structure) 187 of the object 9, on which this element 47 of the receiving array 46 (see figure 35) "looks" by means of the focusing lens 14. Each pixel of the obtained multi-parametric image will have an information, represented in the form of corresponding diagrams of arrays 216, 217, being a part of whole set 214 of such diagrams (see Figure 45), besides, it is understood that such arrays-diagrams may be simultaneously obtained and in this case signals, obtained by the elements of the arrays, will have, in particular, spectra of the form, shown in Figure 62, or consequently in time, when parameters of radiation of backlighting beams are consequently scanned in time or it may take a place at the same time both the cases, when several of the scanned radiations are used at the same time.

In anyone case the method of difference frequencies allows to attain a colossal density of information in the radiation, which is received by means of receiving device of imaging system and which is reflected from an object, and it essentially decreases a level of backlighting power (really to a level of surrounding background), improves a quality of formed images on the base of the obtained information and opens novel abilities in their processing.

If it is necessary to obtain an additional information, the usage of OMCS and a specialized unit in a composition of receiving device, separating various difference signals in accordance with the correlation (2), there is a possibility to obtain various multiplicative images ir their mixture in accordance with the correlation (20), which may carry an additional distinctive information about an object. Such various multiplicative images are formally described by the correlation (20), if various indexes, characterizing different physical properties of partial radiations, correspond to different factors of the product in the correlation (20). For example, there may be various values of ((i,j) for a formation of product of partial images, formed by means of different elements of diffuser (it is equivalent to the usage of decoding unit, separating products of said type), by means of changing $a^d_1$ the above-described two-frequency multiplicative images there may be obtained (it may be obtained the same ones if necessary or for various polarizations) multipliers of the product (20) and so on.

Before there were discussed the possibilities of the obtainment of the two-frequency multiplicative images in accordance with Figure 9, when on the output of the non-linear detector (diode) it may be obtained and separated by means of filtration the signals, which are proportional to a product of signals and which belong to beams of various frequencies, simultaneously illuminating an object. For an obtainment of the two-frequency images with essentially distinctive frequencies it is required sufficiently complex realization of the receiving device.

However, for an obtainment of the mixture of the multiplicative images, components of which are formed by means of partial components of radiation, reflected by various elements of encoding diffuser, there are not required additional hardware means in comparison with early described ones.

Corresponding signals may be obtained upon an illumination of the encoding diffuser by means of the doublet signal and by means of sequential information of the difference signals in the corresponding amplification channel by means of quadratic detector, for example, such signals will be obtained on the output of the non-linear element 352 of the channel for direct amplification and detection in accordance with Figure 58, used in the above-described MM fast-acting cameras (worked out by TRW). A spectrum of the difference signal on the output of the element 352 (see Figure 58) is represented in Figure 63.

It consists of several characteristic spectrally distinctive groups, formed upon a non-linear transformation of spectra of the doublet components, decomposed into additional side composite bands after the doublet signal reflection from the encoding diffuser. Besides, the bands 377 and 378 are structurally identical with respect to the above-discussed informational frequency bands of 210 type in Figure 61 or in figure 41, in which each component responds to a radiation, dispersed by means of diffuser separate element. They should be processed by means of the above-described methods.

Additional spectral distributions 379, 381, 380 are additive mixtures (sums) of spectral components, responding to the multiplicative images, formed by a product of components, dispersed by different elements of the diffuser. Each such a component is described by means of correlation of type:

(22)

wherein $\omega_{i1,j1}, \omega_{i2,j2}$ are frequencies of modulation of the diffuser elements with indexes (i1,j1) and (i2,j2) in a matrix representation of the diffuser elements;

$$\alpha_l^d \, \hat{V}^1_{i1,j1} \cdot u, \cdot {}^{\alpha_l^d} \, \hat{V}^2_{i2,j2}$$

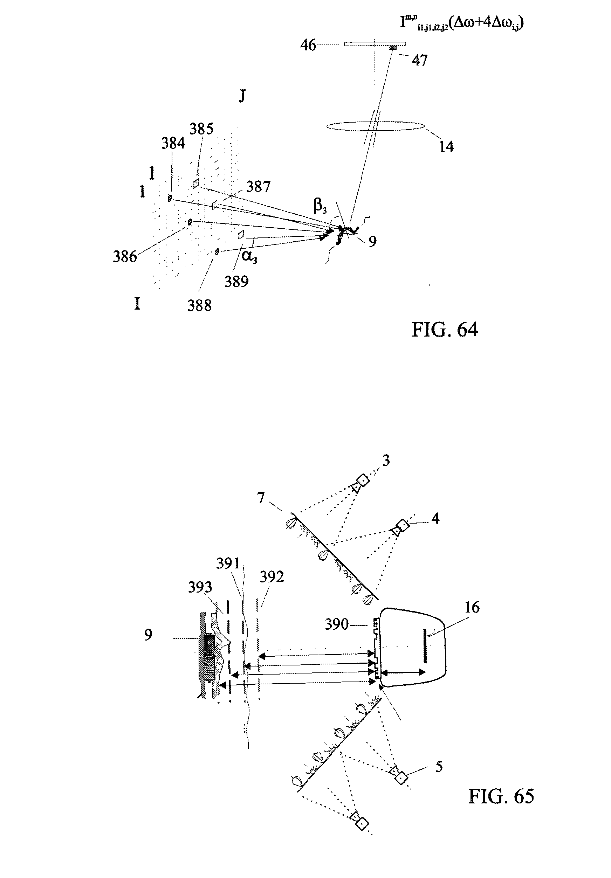

are amplitudes of phasors, responding to these elements of the diffuser (it is seen that in a signal they enter multiplicatively). From the correlation (22) it is clear that a spectral line 382 (see Figure 63), which is distant from a point on a spectral axis 383 (corresponding to a difference frequency of primordial doublet components) by a certain frequency step $4\Delta w_{i,j}$ will be a sum of components of the correlation (22) for different elements of the diffuser (i1,j1) and (i2,j2), for which there is right a condition $4\Delta_{\omega i,j} = \omega_{i1,j1} - \omega_{i2,j2}$ . In Figure 64 there are shown three pairs of such elements of the diffuser 384, 385; 386, 387; 388, 389, positioned in various points of the diffuser. For a spectrum component, shifted by a value, that is more than $4 w_{i,j}$, there will be other pairs of the diffuser elements, which are spatially shifted with respect to one another by a proportional distance (it is supposed that frequencies of modulation signals of the adjacent elements differ by the same spatial step and build up on a line). It relates anyone component of the band 383. The bands 381 and 380 also correspond to mixtures of multiplicative images for other shifts with respect to the modulation frequencies.

It is clear, that if at least one of elements creates a mirror component and correspondingly a great value of corresponding phasor, in the mixtures there will dominate components of product of the phasor of this element and of the phasors of those elements, which are shifted with respect to this element by a certain spectral step (or it is the same one in whole they are at any characteristic distance on the diffuser of this element).

Thus, the distribution 383 in Figure 63 has a considerably smaller range of variations of the spectral components and lays less rigid requirements to a dynamical range of receiving equipment and at the same time allows to obtain partial images of different spatial statistics, but well then their accumulation in accordance with the above-described procedures will give the resultant image of improved quality.

It is known that the focusing elements, based on a diffraction principle (for example, zone Fresnel's lenses) change their focal distance upon the backlighting frequency variation. It allows changing a plane of harsh image by electronic rapid way without a spatial movement of any elements of imaging system. However, such an approach was not used in practice, since the corresponding oscillators radiate a spatially coherent radiation, and the obtained images has been turned out of the extremely low quality with a high level of coherent noises. The offered approach upon to a preliminary destruction (or encoding of spatial components) of the spatial coherence by means of diffuser allows in practice to use such focusing elements. Owing to this it may be built the three-dimensional image of high visual quality by means of scanning of article plane of zoned lens by depth of the observation zone in real scale of time and only by means of electronic control of frequency of the corresponding source of radiation. (There may be simultaneously or sequentially different three-dimensional cuts off at different distances by depth of scene, if it is used a set of sources with fixed but distinctive frequencies). A corresponding block-diagram is represented in Figure 65. From the above-discussed circuit diagrams it differ only by type of lens 390 in an imaging system, which in this circuit diagram is a zoned Fresnel's lens, for which the position of the article plane (the plane, in which there are those article portions, which will be harshly focused on the receiving array) is changed. The position of the article plane 391, 392, 393 will be changed along an optical axis of the lens 390 depending on a radiation frequency of the sources 3, 4, 5, illuminating the diffuser 7, besides, it may be the encoding diffuser 111 (see Figure 19) or the diffuser 159 (see Figure 30 or Figure 34), which only destructs a spatial coherence, but different portions of which are illuminated by means of differently encoded sources preferably of swept radiation by frequency.

It should be added that millimeter receivers of various types, including the receivers of the direct amplification and detection, may receive and transform into the difference frequencies the doublet spectral lines, central frequencies of which for the different doublet spectral lines may essentially differ by from several MGz up to 1 GHz and even by 30 to 40 GHz and may be located in anyone point of the spectrum, however, if their difference frequencies are put in good order an output of the corresponding non-linear detector, bands of the corresponding difference frequencies, put in good order and clearly spectrally localized, will be formed in the form of bands, which are convenient for their processing by means of corresponding hardware means of the receiving device 16.

An attractiveness of the offered approach consists in possibility of using of radiation of any type for an illumination of objects, if a diffuser is worked out for such a radiation dispersing (it concerns not only a polarization, but also a radiation carrier frequency, besides, this frequency may not be limited by MMW/SMMW ranges, but it may lay even in the infrared and optical ranges - it is determined by means of technological capabilities of working out of dispersing elements for the diffuser in the mentioned ranges). For the MMW/SMMW range, for example, the linearly polarized radiation may be decomposed into a spatial components by means of diffuser by the above-discussed way (or the diffuser has destructed the spatial coherence of the illuminating radiation), besides, the imaging system may be provided with a polarization lattice, which is preferably polarized in a plane, which is perpendicular with respect to the illuminating radiation. In this case only the radiation components, the polarization state of which is changed after an interaction with an object, will be obtained by the imaging system receiving device. Drugs as well as a plastic weapon and explosive are capable to change a polarization of the reflected radiation, and they may be imaged by the offered system with a high contrast and great number of details. Besides, such objects may be invisible on the images, obtained in a co-polarized radiation. On the contrary, an ordinary (metallic) weapon may have a bad contrast in cross-polarized images. Since all the information, contained in the images (including the co- and cross-polarized images) may be obtained at the same time, the resultant images may be obtained in scale of real time with the included co- and cross-polarized images into one such an image. In this case both the traditional weapon and the plastic weapon and drugs may be imaged with an improved quality and may be easy identified. So, some more essential additional advantage is contained in the offered active imaging system in comparison with any alternative systems, including the passive imaging systems.

Upon the receiving by means of receiving equipment of the imaging systema radiation spectrum, multiply splitted (decomposed) with respect to radiation features of splitted components of radiation, dispersed further by observed object, the radiation components, dispersed by various ways by different portions of the object, are separately identified and isolated in each pixel of the received image. It allows controlling all the set of information about the object.

It is necessary to underline two essential moments of the offered imaging technique.

Firstly, owing to the usage of artificial narrow-band MMW/SMMW modulated radiation and specially worked out receiving equipment a level of radiation, illuminating an object, will be below a level of radiation, radiated by natural way by human body in the MMW/SMMW range. So, anyone person, standing near a person being under the imaging system observation, will in whole radiate a MMW/SMMW energy in the side of this observed person more than a corresponding system of the illumination of the used IMAGING SYSTEM.

Secondly, the receiving equipment of the offered system may be worked out in such a manner that such a system will be capable to form along with the active radiometric images as well as passive radiometric images like any passive systems, early worked out. It will take a place owing to that fact that the first base cascades of the offered system of circuits for transformation and amplification of the signals correspond to the corresponding cascades of the passive imaging system. An elicitation of the signals belonging to the different partial images will be carried out by means of additional frequency-selective circuits. Thus, the offered system will be capable to obtain passive images in those rare cases, when such information may be useful for aims of discerning of concealed objects. The illumination system should be preferably switched off during a time of formation of the passive images, since active signals may influence on signals of the passive images.

The offered imaging system will obtain scopes of information, which are not attainable for any other imaging system, detecting contraband of systems, including, certainly, also passive radiometric IMAGING SYSTEM. On the other hand, for a realization of such systems it is not necessary an additional development of the technology level of the MMW/SMMW components and components, and such systems can be effectively worked out on the base of already worked out technology. Additional diffuser and equipment for controlling of procedures of imaging and processing of images are not expensive ones in comparison with nodes of the passive system. Advantages, which are open upon the usage of such systems, are obvious ones.

INDUSTRIAL APPLICABILITY

The present invention is industrially applicable one, since it is based on the usage of the known technologies of electronic equipment production and does not require an additional and special equipments except those, which are used in production of electronic and computer apparatuses.

**Claims**

1. A system for millimeter and sub-millimeter wave imaging, comprising at least one source of millimeter or sub-millimeter wave radiation being designed in the form of a set of separate independent radiation elements, wherein constituent radiation emitted by each said radiation element of said set of the radiation elements is **characterized by** all or a part of its radiation physical features, which are different in value from correspondent radiation physical features of constituent radiation emitted by any other radiation element of said set of the radiation elements, means for focusing radiation of said source, which is previously scattered with an observable object, onto receiving means, designed with capabilities of independent receiving of different portions of the radiation focused thereon, each of which is scattered with a particular spatial portion of the observable object and/or inspection area, being located in a field of view of said means of focusing, and with capabilities to transform said portions of the focused radiation into a correspondent matrix set of electrical signals, receiving means, outputs of which are connected to processing means being intended for generating an correspondent matrix image of the observable object and/or the inspection area from said matrix set of the electrical signals and for further displaying said generated matrix image, therewith each pixel of said matrix image corresponds to a particular electrical signal being generated by the receiving means from a particular portion of the radiation scattered with a correspondent particular spatially-determined portion of the observable object and/or the inspection area and further correspondingly focused on the receiving means by said means of focusing, **characterized in that** it is provided with a diffuser, disposed at a distance from said radiation source and intended to be illuminated with the radiation of said source and further to scatter the incident radiation towards the inspection area, wherein the diffuser is designed with capabilities to diffusely scatter incident radiation with spatially-different portions of the diffuser each of which provides additional distinct encoding of originated scattered radiation component, due to distinct modulation of scattering characteristics of each of said diffuser portions and with a capability to reduce spatial coherence of diffuser-scattered radiation, **in that** the said independent radiation elements each of which is designed with capabilities to emit constituent radiation exhibiting either a fixed or time-varied in value said radiation physical features, **in that** the receiving means is designed with a capability of independent receiving of each encoded radiation component in all the ranges of the variation of values of the physical features of the radiation, incident from the inspection area, i.e. with a capability of time demultiplexing of said correspondent electrical signals, and with a capability of converting each said electrical signal from said matrix set of the electrical signals, by usage of decoding, to an additional set of secondary electrical signals, each of secondary electrical signals of the same said additional set to a particular distinctively encoded radiation component focused either belonging to a single diffuser-originated set of distinctively encoded correspondent radiation components which is originated from the radiation of said source exhibiting a single set of the same correspondent values of the correspondent said radiation features of said source radiation or belonging to one of such diffuser-originated sets each of which is originated from the radiation of said source exhibiting a particular set of the same correspondent values of the correspondent said radiation features of said source radiation if said source includes at least one said independent radiation element emitted constituent radiation exhibiting time-varied in value said radiation physical features, therewith each of said distinctively encoded radiation components is focused onto the receiving means from the same particular spatial portion of the observable object and/or the inspection area, each of which is distinctly received and decoded at one or various instants during a total time of receiving by the receiving means of the radiation components, reflected from, i.e. scattered with, all said correspondent spatial portions of the observable object and/or the inspection area for a single set of the same correspondent values of said radiation features of the radiation of said source or for all possible correspondent such sets if said source includes at least one said independent radiation element emitting constituent radiation exhibiting time-varied in value said radiation physical features provided that each of the correspondent time-varied physical features takes on sufficiently different values, **in that** the processing means are designed with function of independent receiving of said separate secondary electrical signals, with a function of their arranging into partial matrix sets of said secondary electrical signals each of which, being from the same said partial matrix set, corresponds to a particular distinctively encoded radiation component which originated from the radiation of said source exhibiting the same set of the same correspondent values of the correspondent said radiation physical features of said source radiation with a function of generating of partial matrix images from correspondent constituent matrix sets of the electrical signals, and with a function of forming of a resultant image of observable object and the inspection area by means of combining said matrix partial images or their fragments.

2. A system as set forth in Claim 1, **characterized in that** the processor is designed with functions of controlling elements of the encoding diffuser and with a variation of distribution of the encoding parameters significances with respect to said portions of the diffuser according to a prescribed algorithm.

3. A system as set forth in Claim 1, **characterized in that** a minimal resolution of the receiving device with respect to said encoding parameter is more tan a minimal difference between significances of encoding parameters of the nearest encoded components of the radiation.

4. A system for millimeter and sub-millimeter wave imaging, comprising at least one source of millimeter or sub-millimeter wave radiation being designed in the form of a set of separate independent radiation elements, wherein constituent radiation emitted by each said radiation element of said set of the radiation elements is **characterized by** all or a part of its radiation physical features, which are different in value from correspondent radiation physical features of constituent radiation emitted by any other radiation element of said set of the radiation elements, means for focusing radiation of said source, which is previously scattered with an observable object, onto receiving means, designed with capabilities of independent receiving of different portions of the radiation focused thereon, each of which is scattered with a particular spatial portion of the observable object and/or inspection area, being located in a field of view of said means of focusing, and with capabilities to transform said portions of the focused radiation into a correspondent matrix set of electrical signals, receiving means, outputs of which are connected to processing means being intended for generating an correspondent matrix image of the observable object and/or the inspection area from said matrix set of the electrical signals and for further displaying said generated matrix image, therewith each pixel of said matrix image corresponds to a particular electrical signal being generated by the receiving means from a particular portion of the radiation scattered with a correspondent particular spatially-determined portion of the observable object and/or the inspection area and further correspondingly focused on the receiving means by said means of focusing, **characterized in that** it is provided with a diffuser, disposed at a distance from said radiation source and intended to be illuminated with the radiation of said source and further to scatter the incident radiation towards the inspection area, wherein the diffuser is designed with capabilities to diffusely scatter incident radiation or the diffuser is designed with capabilities to diffusely scatter incident radiation with spatially-different portions of the diffuser each of which provides additional distinct encoding of originated scattered radiation component, due to distinct modulation of scattering characteristics of each of said diffuser portions and/or with a capability to reduce spatial coherence of diffuser-scattered radiation, **in that** the said independent radiation elements each of which is designed with capabilities to emit constituent radiation exhibiting either a fixed or time-varied in value said radiation physical features, wherein each separate independent radiation element of the radiation source is designed with a capability of encoding of said emitted constituent radiation, including also a capability of its modulation, which is different with respect to encoding of the radiation of other separate independent radiation elements, **in that** the receiving means is designed with a capability of independent receiving of each encoded radiation component in all the ranges of the variation of values of the physical features of the radiation, incident from the inspection area, i.e. with a capability of time demultiplexing of said correspondent electrical signals, and with a capability of converting each said electrical signal from said matrix set of the electrical signals, by usage of decoding, to an additional set of secondary electrical signals, each of secondary electrical signals of the same said additional set to a particular distinctively encoded radiation component focused either belonging to a single diffuser-originated set of distinctively encoded correspondent radiation components which is originated from the radiation of said source exhibiting a single set of the same correspondent values or closely the same correspondent values of the correspondent said radiation features of said source radiation or belonging to one of such diffuser-originated sets each of which is originated from the radiation of said source exhibiting a particular set of the same correspondent values or closely the same correspondent values of the correspondent said radiation features of said source radiation if said source includes at least one said independent radiation element emitted constituent radiation exhibiting time-varied in value said radiation physical features, therewith each of said distinctively encoded radiation components is focused onto the receiving means from the same particular spatial portion of the observable object and/or the inspection area, each of which is distinctly received and decoded at one or various instants during a total time of receiving by the receiving means of the radiation components, reflected from, i.e. scattered with, all said correspondent spatial portions of the observable object and/or the inspection area for a single set of of the same correspondent values or closely the same correspondent values of the radiation of said source or for all possible correspondent such sets if said source includes at least one said independent radiation element emitting constituent radiation exhibiting time-varied in value said radiation physical features provided that each of the correspondent time-varied physical features takes on sufficiently different values, **in that** the processing means are designed with function of independent receiving of said separate secondary electrical signals, with a function of their arranging into partial matrix sets of said secondary electrical signals each of which, being from the same said partial matrix set, corresponds to a particular distinctively encoded radiation component which originated from the radiation of said source exhibiting the same set of the same correspondent values or closely the same correspondent values of the correspondent said radiation physical features of said source radiation with a function of generating of partial matrix images from correspondent constituent matrix sets of the electrical signals, and with a function of forming of a resultant image of observable object and the inspection area by means of combining said matrix partial images or their fragments.

5. A system as set forth in Claim 4, **characterized in that** distinctive and/or scanned physical parameters of the radiations of said independent elements of radiations are spatial directions of propagation of beams of these radiations such that said diffuser portions, which are spatially distinctive ones and are illuminated by these radiations, correspond to the various distinctive directions of propagation of the correspondent radiations.

6. A system as set forth in Claim 4, **characterized in that** the diffuser is additionally provided with polarization means, separated from the radiation, reflected by the diffuser, a radiation, which is preferably linear-polarized in the first spatial direction, but the receiving device is provided with polarization means for a separation from the radiation, received by it, a radiation, which is linear-polarized in the second spatial direction.

7. A system as set forth in Claim 6, **characterized in that** said first direction coincides with said second direction.

8. A system as set forth in Claim 6, **characterized in that** said first direction is orthogonal one with respect to said second direction.

9. A system as set forth in Claim 4, **characterized in that** each independent element is provide with an adjustable attenuator, controlled by said processor, for permissible decreasing of an average level of power of the electrical signals of the correspondent partial image.

10. A system as set forth in Claim 4, **characterized in that** a radiation frequency is represented by distinctive and/or scanned physical parameters of the radiations of said independent elements of radiations.

11. A system for millimeter and sub-millimeter wave imaging, comprising at least one source of millimeter or sub-millimeter wave radiation, means for focusing radiation of said source, which is previously scattered with an observable object, onto receiving means, designed with capabilities of independent receiving of different portions of the radiation focused thereon, each of which is scattered with a particular spatial portion of the observable object and/or inspection area, being located in a field of view of said means of focusing, and with capabilities to transform said portions of the focused radiation into a correspondent matrix set of electrical signals, receiving means, outputs of which are connected to processing means being intended for generating an correspondent matrix image of the observable object and/or the inspection area from said matrix set of the electrical signals and for further displaying said generated matrix image, therewith each pixel of said matrix image corresponds to a particular electrical signal being generated by the receiving means from a particular portion of the radiation scattered with a correspondent particular spatially-determined portion of the observable object and/or the inspection area and further correspondingly focused on the receiving means by said means of focusing, **characterized in that** it is provided with a diffuser, disposed at a distance from said radiation source and intended to be illuminated with the radiation of said source and further to scatter the incident radiation towards the inspection area, wherein the diffuser is designed with capabilities to diffusely scatter incident radiation with spatially-different portions of the diffuser each of which provides additional distinct encoding of originated scattered radiation component, due to distinct modulation of scattering characteristics of each of said diffuser portions and with a capability to reduce spatial coherence of diffuser-scattered radiation, **in that** the radiation source is designed with all or part of radiation physical features of emitted radiation, which are fixed or time varied in value, **in that** the receiving means is designed with a capability of independent receiving of each encoded radiation component in all the ranges of the variation of values of the physical features of the radiation, incident from the inspection area, i.e. with a capability of time demultiplexing of said correspondent electrical signals, and with a capability of converting each said electrical signal from said matrix set of the electrical signals, by usage of decoding, to an additional set of secondary electrical signals, each of secondary electrical signals of the same said additional set corresponds to a particular distinctively encoded radiation component focused either belonging to a single diffuser-originated set of distinctively encoded correspondent radiation components which is originated from the radiation of said source exhibiting a single set of the same correspondent values of the correspondent said radiation features of said source radiation or belonging to one of such diffuser-originated sets each of which is originated from the radiation of said source exhibiting a particular set of the same correspondent values of the correspondent said radiation features of said source radiation if said source includes at least one said independent radiation element emitted constituent radiation exhibiting time-varied in value said radiation physical features, therewith each of said distinctively encoded radiation components is focused onto the receiving means from the same particular spatial portion of the observable object and/or the inspection area, each of which is distinctly received and decoded at one or various instants during a total time of receiving by the receiving means of the radiation components, reflected from, i.e. scattered with, all said correspondent spatial portions of the observable object and/or the inspection area for a single set of the same correspondent values of said radiation features of the radiation of said source or for all possible correspondent such sets if said source includes at least one said independent radiation element emitting constituent radiation exhibiting time-varied in value said radiation physical features provided that each of the correspondent time-varied physical features takes on sufficiently different values, **in that** the processing means are designed with function of independent receiving of said separate secondary electrical signals, with a function of their arranging into partial matrix sets of said secondary electrical signals each of which, being from the same said partial matrix set, corresponds to a particular distinctively encoded radiation component which originated from the radiation of said source exhibiting the same set of the same correspondent values of the correspondent said radiation physical features of said source radiation with a function of generating of partial matrix images from correspondent constituent matrix sets of the electrical signals, and with a function of forming of a resultant image of observable object and the inspection area by means of combining said matrix partial images or their fragments.

**12.** A system as set forth in Claim 11, **characterized in that** the processor is designed with functions of controlling elements of the encoding diffuser and with a variation of distribution of the encoding parameter significances with respect to said portions of the diffuser according to an algorithm, prescribed by the processor.

**13.** A system as set forth in Claim 11, **characterized in that** a minimal resolution of the receiving device with respect to said encoding parameter is more tan a minimal difference between significances of encoding parameters of the nearest encoded components of the radiation.

**14.** A system as set forth in Claim 11, **characterized in that** a radiation frequency is a changed physical parameter of the radiation source.

**15.** A system for millimeter and sub-millimeter wave imaging, comprising at least one source of millimeter or sub-millimeter wave radiation, means for focusing radiation of said source, which is previously scattered with an observable object, onto receiving means, designed with capabilities of independent receiving of different portions of the radiation focused thereon, each of which is scattered with a particular spatial portion of the observable object and/or inspection area, being located in a field of view of said means of focusing, and with capabilities to transform said portions of the focused radiation into a correspondent matrix set of electrical signals, receiving means, outputs of which are connected to processing means being intended for generating an correspondent matrix image of the observable object and/or the inspection area from said matrix set of the electrical signals and for further displaying said generated matrix image, therewith each pixel of said matrix image corresponds to a particular electrical signal being generated by the receiving means from a particular portion of the radiation scattered with a correspondent particular spatially-determined portion of the observable object and/or the inspection area and further correspondingly focused on the receiving means by said means of focusing, **characterized in that** it is provided with a diffuser, disposed at a distance from said radiation source and intended to be illuminated with the radiation of said source and further to scatter the incident radiation towards the inspection area, wherein the diffuser is designed a capability to reduce spatial coherence of diffuser-scattered radiation, **in that** the radiation source is designed with at least one from its radiation physical features of emitted radiation, which is time varied in value, **in that** the receiving means is designed with a capability of independent receiving of each encoded radiation component in all the ranges of the variation of values of the physical features of the radiation, incident from the inspection area, i.e. with a capability of time demultiplexing of said correspondent electrical signals, and with a capability of converting each said electrical signal from said matrix set of the electrical signals to an additional set of secondary electrical signals, each of secondary electrical signals of the same said additional set corresponds to a particular radiation component focused exhibiting with at least one particular value of at least one of said radiation features of said radiation source, therewith each of said radiation components is focused onto the receiving means from the same particular spatial portion of the observable object and/or the inspection area, each of which is distinctly received at one or various instants during a total time of receiving by the receiving means of the radiation components, reflected from, i.e. scattered with, all said correspondent spatial portions of the observable object and/or the inspection area for all possible sufficiently different correspondent values of at least one of said radiation features of the radiation of said source, **in that** the processing means are designed with function of independent receiving of said separate secondary electrical signals, with a function of their arranging into partial matrix sets of said secondary electrical signals which correspondent to radiation components exhibiting the same value or closely the same values of at least one of physical radiation features of said source with a function of generating of partial matrix images from correspondent constituent matrix sets of the electrical signals, and with a function of forming of a resultant image of observable object and the inspection area by means of combining said matrix partial images or their fragments.

**16.** A system as set forth in Claim 15, **characterized in that** a distinctive radiation physical parameter of the radiation source is a direction of its propagation, a variation of which in time leads to a sequential with respect to time illumination of various spatial portions of said diffuser.

**17.** A system as set forth in Claim 15, **characterized in that** a radiation frequency is a changed physical parameter of the radiation source.

**18.** A system for millimeter and sub-millimeter wave imaging, comprising at least one source of millimeter or sub-millimeter wave radiation being designed in the form of a set of separate independent radiation elements, wherein constituent radiation emitted by each said radiation element of said set of the radiation elements is **characterized by** all or a part of its radiation physical features, which are different in value from correspondent radiation features of constituent radiation emitted by any other radiation element of said set of the radiation elements, means for focusing radiation of said source, which is previously scattered with an observable object, onto receiving means, designed with capabilities of independent receiving of different portions of the radiation focused thereon, each of which is scattered with a particular spatial portion of the observable object and/or inspection area, being located in a field of view of said means of focusing, and with capabilities to transform said portions of the focused radiation into a correspondent matrix set of electrical signals, receiving means, outputs of which are connected to processing means being intended for generating an correspondent matrix image of the observable object and/or the inspection area from said matrix set of the electrical signals and for further displaying said generated matrix image, therewith each pixel of said matrix image corresponds to a particular electrical signal being generated by the receiving means from a particular portion of the radiation scattered with a correspondent particular spatially-determined portion of the observable object and/or the inspection area and further correspondingly focused on the receiving means by said means of focusing, **characterized in that** it is provided with a diffuser, disposed at a distance from said radiation source and intended to be illuminated with the radiation of said source and further to scatter the incident radiation towards the inspection area, wherein the diffuser is designed with capabilities to diffusely scatter incident radiation or the diffuser is designed with capabilities to diffusely scatter incident radiation with spatially-different portions of the diffuser each of which provides additional distinct encoding of originated scattered radiation component, due to distinct modulation of scattering characteristics of each of said diffuser portions and/or with a capability to reduce spatial coherence of diffuser-scattered radiation, **in that** said means for focusing is designed to be dependent on radiation carrier frequency for which the focal distance of said means for focusing depends on the focused radiation carrier frequency, **in that** the said independent radiation elements each of which is designed with capabilities to emit constituent radiation either at fixed values of carrier frequencies which are sufficiently different from each other or time-varied in value of frequencies which are swept within quite wide ranges, wherein each separate independent radiation element of the radiation source is designed with a capability of encoding of said emitted constituent radiation, including also a capability of its modulation, which is different with respect to encoding of the radiation of other separate independent radiation elements, **in that** the receiving means is designed with a capability of independent receiving of each encoded radiation component in all the ranges of the variation of values of the of the radiation, incident from the inspection area, i.e. with a capability of time demultiplexing of said correspondent electrical signals, and with a capability of converting each said electrical signal from said matrix set of the electrical signals, by usage of decoding, to an additional set of secondary electrical signals, each of secondary electrical signals of the same said additional set to a particular distinctively encoded radiation component focused either belonging to a single diffuser-originated set of distinctively encoded correspondent radiation components which is originated from the radiation of said source exhibiting a single set of the same correspondent values or closely the same correspondent values of the correspondent said radiation carrier frequencies of said source radiation or belonging to one of such diffuser-originated sets each of which is originated from the radiation of said source exhibiting a particular set of the same correspondent values or closely the same correspondent values of the correspondent said radiation carrier frequencies of said source radiation if said source includes at least one said independent radiation element emitted constituent radiation exhibiting time-varied in value said radiation carrier frequencies, therewith each of said distinctively encoded radiation components is focused onto the receiving means from the correspondent spatial portion of the observable object and/or the inspection area, each of which is distinctly received and decoded at one or various instants during a total time of receiving by the receiving means of the radiation components, reflected from, i.e. scattered with, all said correspondent spatial portions of the observable object and/or the inspection area for a single set of the same correspondent values or closely the same correspondent values of the radiation of said source or for all possible correspondent such sets if said source includes at least one said independent radiation element emitting constituent radiation exhibiting time-varied in value said radiation carrier frequencies provided that each of the correspondent time-varied carrier frequencies takes on sufficiently different values, **in that** the processing means are designed with function of independent receiving of said separate secondary electrical signals, with a function of their arranging into partial matrix sets of said secondary electrical signals, each of which, being from the same said partial matrix set, corresponds to a particular distinctively encoded radiation component which originated from the radiation of said source exhibiting the same set of the same correspondent values or closely the same correspondent values of the correspondent said radiation carrier frequencies of said source radiation with a function of generating of partial matrix images from correspondent constituent matrix sets of the electrical signals, and with a function of forming of set of partial resultant images of observable object and the inspection area by means of combining said matrix partial images associated with radiation components with the same and closely the same encoding, and with function of forming 3D image of observable object and the inspection area by correspondent spatial arranging frequency-dependent said partially resultant images.

19. A system as set forth in Claim 18, **characterized in that** a zone Fresnel's lens is a frequency-dependent element of focusing.

20. A system as set forth in Claim 18, **characterized in that** set of independent elements of radiation includes at least two radiation sources with a frequency, varied in sufficiently wide limits, and each of which is intended for an illumination of spatially different portions of said diffusers.

21. A transceiver of imaging system for an obtainment of complete information from a radiation, scattered by an observable object under conditions of low level of power of radiation illuminating said object, comprising a MMW/SMMW range heterodyne receiver, intended for a receiving of the MMW/SMMW imaged radiation of said imaging system, a source of MMW/SMMW radiation, intended for an illumination of the object or a diffuser, which scatters the source radiation toward object, besides, the heterodyne receiver includes a receiving antenna, connected to a first sub-harmonic mixer fed by a first radiation oscillator, fulfilling a function of the local oscillator for said first sub-harmonic mixer, a first band filter, connected to the first mixer for a separation of intermediate difference frequency signal, a second mixer, a signal input of which is connected to an output of the first band filter, and heterodyne input of which is fed by output signal of a first frequency multiplier input of which is connected to output of said first radiation oscillator, a second band filter, an input of which is connected to an output of said second mixer, a high-frequency or low-frequency analyzer of signals, inputs of which are cottespondingly connected through the second band filter to an output of said second mixer, and to an output of said first frequency multiplier, means for signal processing and displaying, connected to an output of said analyzer, a source of radiation consists of a second radiation oscillator, an output of which is connected to an input of a second frequency multiplier, an output of which is connected to a radiation transmitting antenna and includes a servocontrolling unit for servocontrolling of frequency of radiation of said second radiation oscillator by frequency of radiation of the first radiation oscillator by means of forming a beat difference frequency signal of a signal of said first oscillator and a signal of said second oscillator and providing phase locking said beat difference frequency signal by reference signal of a first reference signal oscillator by means of varying said frequency of said second oscillator radiation, the oscillator of the reference signal is intended for an activating of the servocontrolling unit and for a generating of the phase reference signal for said signal analyzer, but said first and said second frequency multipliers and the first sub-harmonic mixer are designed with a capability of functioning at the same harmonic order.

22. A transceiver as set forth in Claim 21, **characterized in that** the signal analyzer represents by itself two analog-digital converters, realizing a synchronous quantization of the signal from the output of the second band filter and the multiplied signal of the reference signal oscillator from the output of said first frequency multiplier, and a processor which has a memory for loading digital files of said quantized signals and is designed with a capability of a computation of amplitude and phase information of the signals, received by said heterodyning receiver.

23. A transceiver as set forth in Claim 21, **characterized in that** the servocontrolling unit represents by itself a first directional coupler, connected to an output of the first oscillator and realizing a partition of the first oscillator signal with respect to a power into a smaller and greater portions, a second directional coupler is connected to an output of the second oscillator and realizing a partition of the first oscillator signal with respect to a power into a smaller and greater portions, a mixer which has inputs which are intended for a receiving of the smaller portions of said first and second oscillators, the mixer realizes a separation of a difference frequency signal out of said signals for a feeding of this difference signal via the band filter into one input of phase detector, another input of which is intended for a receiving a signal of said reference signal oscillator, but an error signal of the phase detector, which is a signal of phase mismatch between the difference frequency signal of the signals of said first and second oscillators and the signal of the reference frequency oscillator, is fed onto a controlling electrode of the second oscillator for varying the frequency of signal of the second oscillator such that it leads to decreasing of said phase mismatch.

24. A transceiver as set forth in Claim 21, **characterized in that** the heterodyne receiver is mounted on a mechanically scanning device with a capability to receive of radiation of complete image, formed by a system of imaging by means of the heterodyne receiver scanning in a plane of focussed image of this system.

25. A transceiver as set forth in Claim 24, **characterized in that** the heterodyne receiver is designed in the form of an array of heterodyne receivers, disposed in such a manner that phase centers of said antenna receivers of each heterodyne receivers coincide with a plane of focused image of imaging system, but each heterodyne receiver is provided with a directional coupler for a transmission a portion of the power of the second oscillator onto a heterodyne input of the correspondent first mixer, but said second oscillator is a general one for all the heterodyne receivers, each of which is designed with a capability to receive a portion of its power via the correspondent direction coupler.

26. A transceiver of system for imaging of MMW/SMMW images for an obtainment of detail information about a radiation, scattered by the object, under conditions of low level of the object illumination power, comprising a receiver based on direct amplification and detection of received MMW/SMMW radiation, intended for a receiving of MMW/SMMW radiation images in said system for imaging, a source of composite MMW/SMMW radiation, intended for an illumination of the object or diffuser, which disperses the source radiation toward the object, besides, the receiver for direct amplification and detection includes a receiving antenna, connected to an amplifier of high frequency, a signal of which is fed into a quadratic detector, an analyzer of signal, an input of which is connected via a filter to an output of said quadratic detector, means for signal processing and displaying, connected to an output of the analyzer, a source of composite radiation, consisting of a first radiation oscillator, connected to a first directional coupler and dividing the signal of the first oscillator with respect to a power onto a greater and smaller portions, and of a second radiation oscillator, connected to a second directional coupler, dividing the signal of the second oscillator with respect to a power onto a greater and smaller portions, of output antenna system, intended for a transmission of said greater portions of power of signals of the first and second oscillators in a free space preferably by the same way, a servocontrolling unit, onto inputs of which from the correspondent outputs of said directional couplers there are fed said signals of smaller power of correspondently first and second oscillators and which is intended for servocontrolling radiation frequency of the second radiation oscillator by frequency of the first radiation oscillator, and an oscillator of reference signal, intended for an activating of the servocontrolling unit and for a generating of the reference signal for said signal analyzer.

**27.** A transceiver as set forth in Claim 26, **characterized in that** said analyzer represents by itself a band filter with a central pass frequency, corresponding to a frequency of said oscillator of reference signal, connected to an analog-digital convertyer, realizing digital samplings of signal and fillings by these samplings a memory of processor, realizing a processing of these samplings in order to obtain a spectral composition of this signal.

**28.** A transceiver as set forth in Claim 27, **characterized in that** said analyzer additionally consists of mixer, a signal input of which is connected to an output of said band filter, but onto a heterodyne input of said mixer there is fed by a signal of the reference signal oscillator, and an output signal of said mixer via the filter is fed onto an input of the analog-digital converter, realizing digital samplings of signal and fillings by these samplings the memory of the processor, besides the processor realizes a digital processing of these samplings in order to obtain a spectral composition of this signal.

**29.** A transceiver as set forth in Claim 26, **characterized in that** the servocontrolling unit represents by itself a mixer, inputs of which are intended for a receiving of the smaller signal portions of said first and second oscillators and are connected to the correspondent outputs of said first and second directional couplers, and which realizes a separation of the difference frequency signal out of said signals for feeding of this difference frequency signal via the band filter onto one input of the phase detector, another input of which is intended for a receiving of signal of said reference signal oscillator, but an error signal of the phase detector, which is a signal of phase mismatch between the difference frequency signal of the signals of said first and second oscillators and the signal of the reference frequency oscillator, is fed onto a controlling electrode of the second oscillator for varying the frequency of the second oscillator signal such that it provides a decrease of said phase mismatch.

**30.** A transceiver as set forth in Claim 26, **characterized in that** the receiver for the direct amplification and detection is mounted on a scanning device with a capability to receive of complete image radiation, formed by a system of imaging by means of the heterodyne receiver scanning in a plane of focused image of this system.

**31.** A transceiver as set forth in Claim 26, **characterized in that** in a area of focusing of focusing element of the imaging system there is positioned an array of said receivers for the direct amplification and detection in such a manner that receiving antennae of said receivers are positioned near to a surface of focused image of the focusing element.

**32.** A transceiver as set forth in Claim 27, **characterized in that** in it there is used a set of said composite radiation sources, besides, frequencies of signals of the reference signal oscillators of the correspondent sources differ from each other, to an output of the quadratic detector of the receiver for the direct amplification and detection there are parallel connected several said analyzers of signals, a number of which equals to a number of said sources of composite radiation in said set, and a central frequency of the band filter of the correspondent analyzer equals to a frequency of signal of the reference oscillator of the correspondent source of the composite radiation.

**33.** A transceiver as set forth in Claim 27, **characterized in that** in it there is used the set of said sources of composite radiation, besides, the frequencies of signals of the oscillator of the reference signals of the correspondent sources differ from each other, to an output of the quadratic detector of the receiver for the direct amplification and detection there are parallel connected several said analyzers of signals, a number of which equals to a number of said sources of composite radiation in said set, and a central frequency of the band filter of the correspondent analyzer equals to a frequency of signal of the back-up oscillator of the correspondent source of the composite radiation, besides onto an heterodyne input of mixer of said signal analyzer there is fed a signal of reference oscillator of said source of the composite radiation.

**34.** A transceiver as set forth in Claim 28, **characterized in that** various sources of the composite radiation from the set of the sources are intended for an illumination of preferably spatially-different portions of the object or diffuser.

**35.** A transceiver as set forth in Claim 28, **characterized in that** various sources of the composite radiation from the set of sources have essentially different their average frequencies, calculate as an arithmetic mean of frequencies of correspondent paired oscillators.

**36.** A transceiver as set forth in Claim 26, **characterized in that** a radiation of said greater portion of signal of the first oscillator, propagating in a free space, is preferably linearly polarized in a first spatial direction, but a radiation of said greater portion of signal of the second oscillator, propagating in a free space, is preferably linearly polarized in a second spatial direction.

**37.** A transceiver as set forth in Claim 36, **characterized in that** the first spatial direction coincides with the second spatial direction.

**38.** A transceiver as set forth in Claim 36, **characterized in that** the first spatial direction is orthogonal to the second spatial direction.

**39.** A transceiver as set forth in Claim 36, **characterized in that** the receiver is provided with a polarization means, separating a radiation, linearly polarized in the first spatial direction, from a radiation, impinging on it.

**40.** A transceiver as set forth in Claim 36, **characterized in that** the receiver is provided with polarization means, separating a radiation, linearly polarized in the second spatial direction, from a radiation, impinging on it.

**41.** A transceiver as set forth in Claim 26, **characterized in that** the frequencies of the first and second oscillators of the composite radiation are simultaneously increased or decrease in a sufficiently wide range of frequencies, but said servocontrolling unit saves said servocontrolling of frequency of the second oscillator frequency of the first oscillator radiation in all the mentioned range of the frequencies.

**42.** A transceiver of system for imaging of MMW/SMMW images for an obtainment of detail information about a radiation, dispersed by the object, under conditions of low level of the object illumination power, comprising a receiver for direct amplification and detection of MMW/SMMW radiation, intended for a receiving of MMW/SMMW radiation images in said system for imaging in a plane of its focusing element focused image, a source of MMW/SMMW radiation, intended for an illumination of the object, which disperses the source radiation into the direction of the object, the receiver for direct amplification and detection includes a receiving antenna, connected to an amplifier of high frequency, a signal of which is fed onto a quadratic detector, a high-frequency or low-frequency analyzer of signal, an input of which is connected via a filter to an output of said quadratic detector, means for processing and displaying, connected to an output of the signal analyzer, the radiation source consists of a composite radiation source and diffuser, which is illuminated by a radiation of said composite radiation source and which disperses to a side of the object a radiation, impinging on the diffuser, said diffuser consists of spatially distributed point scatterers, which are designed with functions to realizing a distinctive modulation of radiation, dispersed by them, a source of composite radiation, consisting of a first radiation oscillator, connected to a first directional coupler and dividing the signal of the first oscillator with respect to a power onto a greater and smaller portions, and of a second radiation oscillator, connected to a second directional coupler, dividing the signal of the second oscillator with respect to a power onto a greater and smaller portions, output antenna system, intended for a transmission of said greater portions of power of signals of the first and second oscillators in a free space preferably by the same way, a servocontrolling unit, onto inputs of which from the correspondent outputs of said directional couplers there are fed said signals of smaller power of correspondently first and second oscillators and a servocontrolling unit which is intended for servocontrolling of radiation frequency of the second radiation oscillator by frequency of the first radiation oscillator, and an oscillator of reference signal, intended for an activating of the servocontrolling unit and for a generating of the reference signal for said signal analyzer.

**43.** A transceiver as set forth in Claim 42, **characterized in that** said signal analyzer represents by itself a band filter with a central pass frequency, corresponding to a correspondent frequency of said reference signal oscillator, connected to an analog-digital converter, realizing digital samplings of signal and fillings by these samplings a memory of the processing means, realizing a processing of these samplings in order to obtain a spectral composition of this signal.

**44.** A transceiver as set forth in Claim 43, **characterized in that** said analyzer is additionally consists of mixer, a signal input of which is connected to an output of said band filter, but onto a reference input of said mixer there is fed a signal of the reference signal oscillator, and an output signal of said mixer via the filter is fed onto an input of the analog-digital converter, realizing digital samplings of signal and fillings by these samplings the memory of the processor, besides the processing means realizes a digital processing of these samplings in order to obtain a spectral composition of this signal.

**45.** A transceiver as set forth in Claim 42, **characterized in that** the servocontrolling unit represents by itself a mixer, inputs of which are intended for a receiving of the smaller signal portions of said first and second oscillators and are connected to the correspondent outputs of said first and second directional couplers, and which realizes a separation of the difference frequency signal out of said signals for feeding of this difference frequency signal via the band filter onto one input of the phase detector, another input of which is intended for a receiving of signal of said reference signal oscillator, but an error signal of the phase detector, which is a signal of phase mismatch between the difference frequency signal of the signals of said first and second oscillators and the signal of the reference frequency oscillator, is fed onto a controlling electrode of the second oscillator for varying the frequency of the second oscillator signal for decreasing said phase mismatch.

46. A transceiver as set forth in Claim 42, **characterized in that** the receiver for the direct amplification and detection is mounted on a scanning device with a capability to receive of complete image radiation, formed by a system of imaging by means of the heterodyne receiver scanning in a plane of focused image of this system.

47. A transceiver as set forth in Claim 42, **characterized in that** in the area of the of focused image of the focusing element there is positioned an array of said receivers for the direct amplification and detection in such a manner that antennae of said receivers are disposed in a zone of the plane of focused image of the focusing element.

48. A transceiver as set forth in Claim 43, **characterized in that** there is used a set of said sources of composite radiation, besides the frequencies of signals of the reference oscillators of the correspondent sources differ from each other, but to an output of the quadratic detector of the receiver for the direct amplification and detection there are parallel connected several said analyzers of signals, a number of which equals to a number of said sources of composite radiation in said set, and a central frequency of the band filter of the correspondent analyzer equals to a frequency of signal of the reference oscillator of the correspondent source of the composite radiation.

49. A transceiver as set forth in Claim 43, **characterized in that** there is used a set of said sources of composite radiation, besides the frequencies of signals of the reference oscillators of the correspondent sources differ from each other, but to an output of the quadratic detector of the receiver for the direct amplification and detection there are parallel connected several said analyzers of signals, a number of which equals to a number of said sources of composite radiation in said set, and a central frequency of the band filter of the correspondent analyzer equals to a frequency of signal of the reference oscillator of the correspondent source of the composite radiation, and, besides, onto a reference input of mixer of said signal analyzer there is fed a signal of reference oscillator of said source of the composite radiation.

50. A transceiver as set forth in Claim 49, **characterized in that** the various sources of composite radiation of the set of the sources illuminate preferably spatially-distinctive portions of the diffuser or object.

51. A transceiver as set forth in Claim 50, **characterized in that** the various sources of composite radiation of the set of the sources have essentially different their average frequencies, calculated as an arithmetic mean of the frequencies of correspondent paired oscillators.

52. A transceiver as set forth in Claim 42, **characterized in that** a radiation of said greater portion of signal of the first oscillator, propagating in a free space, is preferably linearly polarized in a first spatial direction, but a radiation of said greater portion of signal of the second oscillator, propagating in a free space, is preferably linearly polarized in a second spatial direction.

53. A transceiver as set forth in Claim 52, **characterized in that** the first spatial direction coincides with the second spatial direction.

54. A transceiver as set forth in Claim 52, **characterized in that** the first spatial direction is orthogonal one with respect to the second spatial direction.

55. A transceiver as set forth in Claim 52, **characterized in that** the receiver is provided with a polarization means, separating a radiation, linearly polarized in the first spatial direction, from a radiation, impinging on it.

56. A transceiver as set forth in Claim 52, **characterized in that** the receiver is provided with polarization means, separating a radiation, linearly polarized in the second spatial direction, from a radiation, impinging on it.

57. A transceiver as set forth in Claim 42, **characterized in that** the frequencies of the first and second oscillators of the composite radiation are simultaneously increased or decreased in a sufficiently wide range of frequencies, but said servocontrolling unit saves said servocontrolling of frequency and phase of the second oscillator by frequency and phase of the first oscillator in all the mentioned range of the frequencies.

73

**58.** A transceiver as set forth in Claim 42, **characterized in that** said distinctive modulation of radiation, dispersing by means of point dispersers of the diffuser, is a phase modulation.

**59.** A transceiver as set forth in Claim 42, **characterized in that** said distinctive modulation of radiation, dispersing by means of point dispersers of the diffuser, is an amplitude modulation.

**60.** A diffuser illuminator for imaging system in MMW/SMMW range, intended for an illumination of inspection area by means of encoded spatially-non-coherent radiation, illuminated by means of at least one radiation source in MMW/ SMMW range, designed in the form of limited amount of the same sets of separate independent elements of radiation, all the physical parameters of radiation or their portion of each from said radiation elements inside of each set are(is) ) different with respect to physical parameters of radiation of other elements of radiation, wherein said diffuser is positioned at a distance from said radiation source and intended to be illuminated by said source radiation and further to scatter the incident radiation toward said inspection area, the diffuser is designed with a capability of a realization of function of decreasing of spatial coherence of the radiation, scattered by it, each separate independent element of radiation of the radiation source of any said set is designed with a capability of encoding the emitted radiation, including also its modulation of any kind, different from encoding of the radiation of other separate independent element from the same set or from anyone other set, besides, the independent sources from one said set illuminate preferably the same spatial portion of said diffuser, but the independent sources of various sets illuminate preferably spatially different portions of said diffuser.

**61.** A diffuser illuminator as set forth in Claim 60, **characterized in that** the diffuser is designed in the form of spatially-distributed set of point dispersing elements, dispersing an impinging radiation by distinctive way with respect to one another owing to a distinctive modulation of their dispersing properties along an arbitrary shape of underlying surface.

**62.** A diffuser illuminator as set forth in Claim 61, **characterized in that** said underlying surface has the given shape, but the sets of the independent elements of radiation, illuminating the diffuser, are positioned with respect to the diffuser with a capability of provision of the most range of impinging angles of the radiation, dispersed by the diffuser into the inspection area.

**63.** A diffuser illuminator as set forth in Claim 61, **characterized in that** the dispersing element is designed in the form of mirror reflecting element, mounted on a piece-flat base, besides, distinctly reflecting elements are designed with a capability of movement with respect to the correspondent base by distinctive from each other way and at a distance, that does not exceed a half of length of backlighting radiation.

**64.** A diffuser illuminator as set forth in Claim 63, **characterized in that** the for a realization of movement of the elements they are fastened to magnetic cores of current inductance coils or to piezo-elements, fed by means of electrical currents, which are accidental or regularly changeable in time by distinctive way.

**65.** A diffuser illuminator as set forth in Claim 61, **characterized in that** the dispersing element is designed in the form of mesomorphic cell, besides, optical properties of various independent mesomorphic cells of such a diffuser are variable by accidental or regularly distinctive way for different cells.

**66.** A diffuser illuminator as set forth in Claim 60, **characterized in that** the diffuser is designed in the form of rotating reflector with an accidental surface of reflection.

**67.** A diffuser illuminator as set forth in Claim 60, **characterized in that** the diffuser is designed in the form of a set of correspondently small reflectors with an accidental surface of reflection, each of which rotates around own rotation axis and each of which is illuminated by own said set of the independent radiation elements, which are positioned together with said sets in a space in such a manner, that the most range of impinging angles of the radiation, dispersed by the diffuser into the inspection area, is provided.

**68.** A diffuser illuminator as set forth in Claim 60, **characterized in that** the diffuser is designed in the form of phase antenna array, each element phase shifter of which is designed with a function of a variation of phase of passing or reflected radiation, which is distinctive in time.

**69.** A diffuser illuminator as set forth in Claim 61, **characterized in that** said independent elements are designed with a capability of generation of radiation, which is linearly polarized in a first spatial direction, but said dispersing element is designed in the form of independent quasi-optical radiation switch, representing by itself a set of spatially-distributed independent conducting elements, positioned on a flat base, besides, adjacent conducting elements are connected by means of non-linear elements, preferably, in the first spatial direction, besides, a modulation of impedance of the non-linear element results in a modulation of amplitude or phase of wave front, impinging normally onto such a switch depending on resistive or capacitive character of the impedance of said non-linear element.

**70.** A diffuser illuminator as set forth in Claim 61, wherein the dispersing element is designed in the form of antenna, loaded by the impedance.

**71.** A diffuser illuminator as set forth in Claim 70, **characterized in that** each antenna, loaded by the impedance, represents by itself at least two conducting antenna portions, connected between each other by means of non-linear element for a provision with impedance load and equipped each by correspondent contacts for feeding to said impedance load a voltage of shifting and/or modulation signal for controlling of impedance value of this load.

**72.** A diffuser illuminator as set forth in Claim 71, **characterized in that** as a non-linear element of the impedance load there is selected a photo-conducting element, but an optical signal is used as a modulation signal.

**73.** A diffuser illuminator as set forth in Claim 71, **characterized in that** as a non-linear element of the impedance load there is selected a non-linear semiconductor device from a group, including at least a diode with a Schottky's barrier, or pin-diode, or a transistor, or a bolometer.

**74.** A diffuser illuminator as set forth in Claim 71, **characterized in that** as a non-linear element of the impedance load there is selected a micro-mechanical switch.

**75.** A diffuser illuminator as set forth in Claim 60, **characterized in that** each said set consists of one independent radiation element.

**76.** A diffuser illuminator for imaging systems in MMW/SMMW range, intended for an illumination of inspection area by means of encoded spatially-non-coherent radiation, comprising at least one radiation source in MMW/SMMW range, and a diffuser, positioned at a distance from said radiation source and intended for its illumination by means of said source radiation and to further scatter the incident radiation towards the inspection area, the diffuser is designed in the form of a set of spatially-distributed radiation point scatterers, which are designed in such a manner, that they realize an amplitude modulation of radiation, scattered by them distinctly with respect to one another.

**77.** A diffuser illuminator as set forth in Claim 76, **characterized in that** the dispersing element of the diffuser is designed in the form of independent quasi-optical radiation switch, designed in the form of a set of spatially-distributed set of conducting elements, the adjacent conducting elements inside of said set are connected to each other preferably in a first spatial direction by means of connecting elements, each of which has a first state, being a high-conducting one, and a second state, being a low-conducting one, the conducting elements of each of spatially-distributed set, as a response on a radiation, impinging on the given set, being preferably polarized in the first spatial direction, have a characteristic impedance, which becomes insufficient in a combination with an impedance of the connecting elements, positioned preferably in the first state so, that a radiation, impinging onto the given spatially-distributed set, being preferably polarized in the first spatial direction, occurs preferably reflected by said spatially-distributed set, the conducting elements each of said set, connected by means of connecting elements, being preferably in the second state, have a characteristic impedance, as a response on said impinging radiation in combination with the second conducting state of said connecting elements on the given set, high one, and such a quasi-optical switch occurs transparent one for a radiation, impinging on it.

**78.** A diffuser illuminator as set forth in Claim 77, **characterized in that** as a non-linear element of the impedance load there is selected a photo-conducting element, but an optical signal is used as a modulation signal.

**79.** A diffuser illuminator as set forth in Claim 77, **characterized in that** as a non-linear element of the impedance load there is selected a non-linear semiconductor device from a group, including at least a diode with a Schottky's barrier, or pin-diode, or a transistor, or a bolometer.

**80.** A diffuser illuminator as set forth in Claim 77, **characterized in that** as a non-linear element of the impedance load there is selected a micro-mechanical switch.

**81.** A diffuser illuminator as set forth in Claim 77, **characterized in that** an independent spatial structure is designed in the form of two conducting portions of antenna of MM and/or sub-millimeter range.

**82.** A diffuser illuminator as set forth in Claim 77, **characterized in that** a radiation source is designed so that it comprises additionally polarization means, passing the radiation in side of the diffuser, which is polarized only in the first spatial direction.

**83.** A diffuser illuminator as set forth in Claim 76, **characterized in that** it is designed in the form of a set of separate independent radiation elements, all the physical parameters of radiation or their portion of each from said radiation elements inside of each set are(is) different with respect to physical parameters of radiation of other elements of radiation, each separate independent element of radiation of the radiation source of any said set is designed with a capability of own radiation encoding, including also its modulation, different from encoding of radiation of other separate independent elements of radiation.

**84.** A diffuser illuminator as set forth in Claim 76, **characterized in that** characteristic angular dimensions of said point dispersers of the diffuser, observed from said inspection area, are less than angular dimensions of own diffuser, observed from the same spatial point of the inspection area.

**85.** A diffuser illuminator as set forth in Claim 76, **characterized in that** said point dispersers are preferably spatially-continuously and preferably spatially-regularly distributed.

**86.** A method for millimeter and sub-millimeter wave imaging, consisting in the steps of forming a composite radiation in the millimeter and sub-millimeter range of waves, consisting of partial radiations, differing from one another by values of physical features, directing of the formed composite radiation towards to observed object, receiving the radiation, primarily scattered with the observed object, through a focusing means, transforming of the received composite radiation to electrical signals and generating a visually accepted image of the observed object in accordance with the given electrical signals, **characterized in that** each partial radiation is additionally encoded by means of its modulation, which differs from a modulation of other partial radiations, the partial radiations are directed to a diffuser for decreasing their spatial coherence and/or their scattering by spatially-different radiation-modulating portions of the diffuser in order to originate radiation components each of which is secondary distinctly modulated and exhibits a particular direction of incidence on observed object, after reflecting said components from, i.e. scattering with, the observed object focusing of the components on the receiving means which is designed with capability to independently receive portions of a radiation each of which is incident from a particular spatial portion of inspection area with the observed object, receiving by means of said receiving means the reflected multi-component radiation independently from each spatial portion of inspection area with the observed object and transforming by means of said receiving means the received said portions multi-components radiation in correspondent matrix set of electrical signals, decoding and generating secondary electrical signals from said matrix set electrical signals, arranging said secondary signals into secondary matrix sets of the secondary electrical signals such that the secondary electrical signals from the same said set correspond to distinctly received said portions of a particular distinctly encoded radiation component which are correspondingly associated with said complementary spatial portions of inspection area with the observed object, generating matrix partial images of inspection area with the observed object from correspondent secondary matrix sets of secondary electrical signals, forming a resultant image of inspection area with the observed object by combining said partial matrix partial images or their fragments.

**87.** A method for millimeter and sub-millimeter wave imaging, consisting in the steps of forming a composite radiation in the millimeter and sub-millimeter range of waves, consisting of partial radiation components, differing from one another by values of physical features, directing of the formed composite radiation towards to observed object, receiving the radiation, primarily scattered with the observed object, through a focusing means, transforming of the received composite radiation to electrical signals and generating a visually accepted image of the observed object from said electrical signals, **characterized in that** each partial radiation component is additionally encoded by means of its modulation, which differs from a modulation of other partial radiation components, after reflecting said radiation components from, i.e. scattering with, the observed object focusing of the components on the receiving means which is designed with capability independently to receive portions of a radiation each of which is incident from a particular spatial portion of the inspection area with the observed object, distinctly receiving by means of said receiving means portions of the reflected, i.e. scattered, multi-component radiation independently from each spatial portion of the inspection area with the observed object and transforming by means of said receiving means the received said portions multi-components radiation in correspondent matrix set of electrical signals, decoding and generating secondary electrical signals from said matrix set electrical signals such that arranging said secondary signals into secondary matrix sets of secondary electrical signals such that secondary electrical signals from the same said set correspond to distinctly received said portions of a particular distinctly encoded radiation component which are correspondingly associated with said complementary spatial portions of the inspection area with the observed object, generating matrix partial images of the inspection area with the observed object from correspondent secondary matrix sets of secondary electrical signals, forming a resultant image of the inspection area with the observed object by combining said partial matrix partial images or their fragments.

FIG. 1

FIG. 2

FIG. 3

FIG. 4

FIG. 5

(см)

FIG. 11

FIG. 12

FIG. 13

FIG. 6

FIG. 7

FIG. 8

FIG. 9

FIG. 10

FIG. 14

FIG. 15

FIG. 16

FIG. 17

FIG. 18

FIG. 19

FIG. 20

FIG. 21

FIG. 22

FIG. 24

FIG. 23

FIG. 25

FIG. 26

FIG. 27

FIG. 28

FIG. 29

FIG. 30

FIG. 31

FIG. 32

FIG. 33

FIG. 34

FIG. 35

FIG. 36

FIG. 38

FIG. 37

FIG. 39

FIG. 40

FIG. 41

FIG. 42

FIG. 43

FIG. 44

FIG. 45

ФИГ. 47

FIG. 46

FIG. 48

FIG. 49

FIG. 50

EP 1 496 372 A1

FIG. 51

93

FIG. 52

FIG. 53

FIG. 54

FIG. 55

FIG. 56

FIG. 57

FIG. 58

FIG. 59

FIG. 60

FIG. 61

FIG. 62

FIG. 63

$$\Gamma^{m,n}_{i1,j1,i2,j2}(\Delta\omega+4\Delta\omega_{i,j})$$

J

385
384
387
1
1
β₃
386
389
α₃
I
388
9

46
47
14

**FIG. 64**

3
7
4
391
393
392
9
390
16
5

**FIG. 65**

**INTERNATIONAL SEARCH REPORT**

| International application No. |
| --- |
| PCT/RU 02/00559 |

| A. | CLASSIFICATION OF SUBJECT MATTER   G01S 13/88, G01V 3/12 |
| --- | --- |

According to International Patent Classification (IPC) or to both national classification and IPC **7**

| B. | FIELDS SEARCHED |
| --- | --- |

Minimum documentation searched (classification system followed by classification symbols) **IPC 7**
   G01S 13/00, 13/88, 13/89, G01N 3/00, 3/08, 3/10, 3/11, 3/12, G01N 22/00

Documentation searched other than minimum documentation to the extent that such documents are included in the fields searched

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 5227800 A (MILLITECH CORPORATION) Jul. 13, 1993 | 1-87 |
| A | US 5760397 A (G. RICHARD HUGUENIN et al.) Jul. 2, 1998 | 1-87 |
| A | US 6243036 B1 (MACALEESE COMPANIES, INC.) Jun. 5, 2001 | 1-87 |
| A | RU 2067759 C1 (TSENTR NEPRERYVNOI TSELEVOI RADIOTEKHNICHES- KOI PODGOTOVKI SPETSIALISTOV et al.) 10.10.1996 | 1-87 |
| A | RU 2133971 C1 (SHTEINSHLEIGER VOLF BENTSIONOVICH et al.) 27.07.1999 | 1-87 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier document but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 MARCH 2003 (27.03.03)** | **03 APRIL 2003 (03.04.2003)** |
| Name and mailing address of the ISA/  **RU** | Authorized officer |
| Facsimile No. | Telephone No. |

Form PCT/ISA/210 (second sheet) (July 1992)